(19) Europäisches Patentamt / European Patent Office / Office européen des brevets

(11) **EP 4 411 533 B1**

(12) **EUROPEAN PATENT SPECIFICATION**

(45) Date of publication and mention
of the grant of the patent:
**29.07.2026 Bulletin 2026/31**

(21) Application number: **22897859.9**

(22) Date of filing: **23.11.2022**

(51) International Patent Classification (IPC):
**G06F 8/38** *(2018.01)*     **G06F 9/451** *(2018.01)*
**G06F 9/44** *(2018.01)*

(52) Cooperative Patent Classification (CPC):
**G06F 8/38; G06F 9/44; G06F 9/451**

(86) International application number:
**PCT/CN2022/133816**

(87) International publication number:
**WO 2023/093776 (01.06.2023 Gazette 2023/22)**

(54) **INTERFACE GENERATION METHOD AND ELECTRONIC DEVICE**

SCHNITTSTELLENERZEUGUNGSVERFAHREN UND ELEKTRONISCHE VORRICHTUNG

PROCÉDÉ DE GÉNÉRATION D'INTERFACE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **25.11.2021 CN 202111418430**

(43) Date of publication of application:
**07.08.2024 Bulletin 2024/32**

(73) Proprietor: **Huawei Technologies Co., Ltd.
Shenzhen, Guangdong 518129 (CN)**

(72) Inventors:
• **WANG, Yonglang
Shenzhen, Guangdong 518129 (CN)**

• **ZHOU, Yuehai
Shenzhen, Guangdong 518129 (CN)**
• **LIU, Jian
Shenzhen, Guangdong 518129 (CN)**
• **YU, Xianyu
Shenzhen, Guangdong 518129 (CN)**

(74) Representative: **Pfenning, Meinig & Partner mbB
Patent- und Rechtsanwälte
Theresienhöhe 11a
80339 München (DE)**

(56) References cited:
**CN-A- 107 025 100     CN-A- 112 416 613
US-A1- 2021 286 632     US-B1- 10 038 877**

**Description**

**TECHNICAL FIELD**

This application relates to the field of electronic technologies, and in particular, to an interface generation method, a chip system, an electronic device, a computer-readable storage medium and a computer program product.

**BACKGROUND**

With the development of electronic technologies, users use an increasing quantity of electronic devices in daily life. In addition, as parameters such as resolution and a size of a screen of an electronic device become increasingly large, an increasing quantity of content can be displayed on the electronic device.

However, before displaying an interface of an application, the electronic device consumes computing resources and storage resources to generate the interface of the application. Consequently, power consumption of the electronic device is increased. In addition, when there are a plurality of applications or a plurality of windows on the screen of the electronic device, the electronic device consumes more computing resources and more storage resources for rendering, to generate interfaces of the plurality of applications or the plurality of windows.

US 2021/286632 describes a system for generating a user interface that includes a processor to detect a type of the system based on hardware components residing within the system or coupled to the system and determine a user interface manager to execute based on the type of the system.

**SUMMARY**

Embodiments of this application provide an interface generation method, a chip system, an electronic device, a computer-readable storage system and a computer program product. According to the interface generation method provided in embodiments of this application, a plurality of processes concurrently draw and generate interfaces for different display regions. This improves a rate of generating the interfaces in a plurality of display regions of an electronic device, avoids interface frame freezing, and improves user experience. The scope of protection of the present invention is set out by the appended claims.

According to a first aspect, an embodiment of this application provides an interface generation method, applied to an electronic device. The electronic device has at least two display regions. The at least two display regions include a first display region and a second display region. The method includes: A third process receives a first render tree generated by a first process. The first render tree is configured to draw an interface that is of the first process and that is to be displayed on the first display region. The third process generates a first interface based on the first render tree. The first interface includes the interface of the first process, and the first interface is configured to be displayed on the first display region. A fourth process receives a second render tree generated by a second process. The second render tree is configured to draw an interface that is of the second process and that is to be displayed on the second display region. The fourth process generates a second interface based on the second render tree. The second interface includes the interface of the second process, and the second interface is configured to be displayed on the second display region.

According to the foregoing embodiments, a plurality of processes concurrently draw and generate the interfaces for different display regions. This improves a rate of generating the interfaces in the plurality of display regions of the electronic device, avoids interface frame freezing, and improves user experience.

With reference to some embodiments of the first aspect, in some embodiments, before that a third process receives a first render tree generated by a first process, and before that a fourth process receives a second render tree generated by a second process, the method further includes: A fifth process determines that the at least two display regions include the first display region and the second display region. The fifth process generates the third process and the fourth process. The third process and the fourth process are child processes of the fifth process.

In the foregoing embodiments, the fifth process creates the third process corresponding to the first display region and the fourth process corresponding to the second display region. The third process and the fourth process are child processes of the fifth process. The fifth process is responsible for managing life cycles of the third process and the fourth process, to implement unified scheduling management, avoid the interface frame freezing, and improve user experience.

With reference to some embodiments of the first aspect, in some embodiments, that a third process receives a first render tree generated by a first process specifically includes: The third process receives the first render tree based on inter-process communication. The inter-process communication includes at least one of Binder, an interface definition language AIDL, shared memory, and a socket Socket.

In the foregoing embodiments, information of the render trees is transferred between different processes based on the inter-process communication, so that the third process may obtain the render tree of the first process, and the fourth process may obtain the render tree of the second process. In addition, the inter-process communication does not block a UI thread. In this way, the UI thread is not blocked in a native Android procedure in which a render tree synchronization procedure is slow. This improves user experience.

With reference to some embodiments of the first aspect, in some embodiments, the method further includes: The fifth process sends a first vertical synchronization signal to the first process at a first frequency. The first vertical synchronization signal indicates the first process to generate the first render tree. The first frequency is a refresh frequency of the first display region. The third process receives the first render tree at the first frequency.

In the foregoing embodiments, the fifth process may correspondingly adjust, based on the refresh frequency of the first display region, a rate at which the first process generates the render tree, and a rate at which the third process receives the render tree. In this way, a frequency at which an application generates a render tree is equal to a frequency at which an interface of the application is generated.

With reference to some embodiments of the first aspect, in some embodiments, the method further includes: The fifth process sends a second vertical synchronization signal to the second process at a second frequency. The second vertical synchronization signal indicates the second process to generate the second render tree. The second frequency is a refresh frequency of the second display region. The fourth process receives the second render tree at the second frequency. The second frequency is different from the first frequency.

In the foregoing embodiments, the fifth process may correspondingly adjust, based on the refresh frequency of the second display region, a rate at which the second process generates the render tree, and a rate at which the fourth process receives the render tree. In this way, a frequency at which an application generates a render tree is equal to a frequency at which an interface of the application is generated. In addition, the fifth process may adjust, based on refresh frequencies of different display regions, rates of generating render trees in different applications, to adapt a frame rate, reduce power consumption of the electronic device, and improve user experience.

With reference to some embodiments of the first aspect, in some embodiments, that the third process generates a first interface based on the first render tree and a sixth render tree specifically includes: The third process creates a root render node as a root node of a first target render tree, and uses the first render tree and the sixth render tree as child nodes of the root render node. The third process generates the first interface based on the first target render tree.

In the foregoing embodiments, interfaces displayed on the first display region include interfaces of a plurality of applications. In this case, the third process merges render trees of the plurality of applications into one target render tree, and generates the interfaces based on the target render tree through one time of rendering without involving layer composition. This reduces the number of times of rendering, and reduces power consumption of the electronic device.

With reference to some embodiments of the first aspect, in some embodiments, the method further includes: The third process deletes a render node of the first target render tree based on Z-order of the first render tree and Z-order of the sixth render tree. The deleted render node corresponds to a completely covered view.

In the foregoing embodiments, the third process may optimize a parameter of the target render tree, for example, delete the render node corresponding to the completely covered view on the interface, to reduce overdrawing.

With reference to some embodiments of the first aspect, in some embodiments, the method further includes: The third process deletes a draw operation of the first target render tree based on the Z-order of the first render tree and the Z-order of the sixth render tree. The deleted draw operation corresponds to a completely covered graphic.

In the foregoing embodiments, the third process may optimize a parameter of the target render tree, for example, delete the draw operation corresponding to the completely covered graphic on the interface, to reduce overdrawing.

With reference to some embodiments of the first aspect, in some embodiments, the method further includes: In a procedure in which the third process generates the first interface based on the first render tree and the sixth render tree, the third process merges or batches a first draw operation and a second draw operation. The first draw operation belongs to the first render tree, and the second draw operation belongs to the sixth render tree.

In the foregoing embodiments, the third process may merge or batch draw operations in the target render tree, to improve an interface generation rate, reduce frame freezing, and reduce power consumption of the electronic device. This improves user experience.

According to a second aspect, embodiments of this application provide an electronic device. The electronic device includes one or more processors and a memory. The memory is coupled to the one or more processors. The memory is configured to store computer program code. The computer program code includes computer instructions. The one or more processors call the computer instructions, so that the electronic device performs the following. A third process receives a first render tree generated by a first process. The first render tree is configured to draw an interface that is of the first process and that is to be displayed on the first display region. The third process generates a first interface based on the first render tree. The first interface includes the interface of the first process, and the first interface is configured to be displayed on the first display region. A fourth process receives a second render tree generated by a second process. The second render tree is configured to draw an interface that is of the second process and that is to be displayed on the first display region. The fourth process generates a second interface based on the second render tree. The second interface includes the interface of the second process, and the second interface is configured to be displayed on the second display region.

According to the foregoing embodiments, a plurality of processes concurrently draw and generate the interfaces for different display regions. This improves a rate of generating the interfaces in the plurality of display regions of the electronic device, avoids interface frame freezing, and improves user experience.

With reference to some embodiments of the second aspect, in some embodiments, the one or more processors are further configured to call the computer instructions, so that the electronic device performs the following. A fifth process determines that the at least two display regions include the first display region and the second display region. The fifth process generates the third process and the fourth process. The third process and the fourth process are child processes of the fifth process.

With reference to some embodiments of the second aspect, in some embodiments, the one or more processors are specifically configured to call the computer instructions, so that the electronic device performs the following. The third process receives the first render tree based on inter-process communication. The inter-process communication includes at least one of Binder, an interface definition language AIDL, shared memory, and a socket Socket.

With reference to some embodiments of the second aspect, in some embodiments, the one or more processors are further configured to call the computer instructions, so that the electronic device performs the following. The fifth process sends a first vertical synchronization signal to the first process at a first frequency. The first vertical synchronization signal indicates the first process to generate the first render tree. The first frequency is a refresh frequency of the first display region. The third process receives the first render tree at the first frequency.

With reference to some embodiments of the second aspect, in some embodiments, the one or more processors are further configured to call the computer instructions, so that the electronic device performs the following. The fifth process sends a second vertical synchronization signal to the second process at a second frequency. The second vertical synchronization signal indicates the second process to generate the second render tree. The second frequency is a refresh frequency of the second display region. The fourth process receives the second render tree at the second frequency. The second frequency is different from the first frequency.

With reference to some embodiments of the second aspect, in some embodiments, the one or more processors are specifically configured to call the computer instructions, so that the electronic device performs the following. The third process creates a root render node as a root node of a first target render tree, and uses the first render tree and the sixth render tree as child nodes of the root render node. The third process generates the first interface based on the first target render tree.

With reference to some embodiments of the second aspect, in some embodiments, the one or more processors are further configured to call the computer instructions, so that the electronic device performs the following. The third process deletes a render node of the first target render tree based on Z-order of the first render tree and Z-order of the sixth render tree. The deleted render node corresponds to a completely covered view.

With reference to some embodiments of the second aspect, in some embodiments, the one or more processors are further configured to call the computer instructions, so that the electronic device performs the following. The third process deletes a draw operation of the first target render tree based on the Z-order of the first render tree and the Z-order of the sixth render tree. The deleted draw operation corresponds to a completely covered graphic.

With reference to some embodiments of the second aspect, in some embodiments, the one or more processors are further configured to call the computer instructions, so that the electronic device performs the following. In a procedure in which the third process generates the first interface based on the first render tree and the sixth render tree, the third process merges or batches a first draw operation and a second draw operation. The first draw operation belongs to the first render tree, and the second draw operation belongs to the sixth render tree.

According to a third aspect, embodiments of this application provide a chip system. The chip system is applied to an electronic device. The chip system includes one or more processors. The processor is configured to call computer instructions, so that the electronic device performs the method according to any one of the first aspect or the possible implementations of the first aspect.

According to a fourth aspect, embodiments of this application provide a computer program product including instructions. When the computer program product is run on an electronic device, the electronic device is enabled to perform the method according to any one of the first aspect or the possible implementations of the first aspect.

According to a fifth aspect, embodiments of this application provide a computer-readable storage medium including instructions. When the instructions are run on an electronic device, the electronic device is enabled to perform the method according to any one of the first aspect or the possible implementations of the first aspect.

It may be understood that the electronic device provided in the second aspect, the chip system provided in the third aspect, the computer program product provided in the fourth aspect, and the computer storage medium provided in the fifth aspect are all configured to perform the method provided in embodiments of this application. Therefore, for beneficial effects that can be achieved by the electronic device, the chip system, the computer program product, and the computer storage medium, refer to the beneficial effects in the corresponding method. Details are not described herein again.

## BRIEF DESCRIPTION OF DRAWINGS

FIG. 1A and FIG. 1B each are a schematic diagram of an example of an interface of an electronic device according to an embodiment of this application;

FIG. 2 is a schematic diagram of an example in which an application generates a bitmap according to an embodiment of this application;

FIG. 3 is a schematic diagram of an example of a render tree according to an embodiment of this application;

FIG. 4 is a schematic diagram of an example in which bitmaps are used as layers to participate in layer composition according to an embodiment of this application;

FIG. 5 is a schematic diagram of an example of layer composition according to an embodiment of this application;

FIG. 6 is a schematic diagram of another example in which SurfaceFlinger composites layers according to an embodiment of this application;

FIG. 7A and FIG. 7B-1 to FIG. 7B-3 each are a schematic diagram of another example of layer composition according to an embodiment of this application;

FIG. 8 is a schematic diagram of an example of a system architecture of an interface generation method according to an embodiment of this application;

FIG. 9 is a schematic diagram of an example of an interface generation method according to an embodiment of this application;

FIG. 10 is a schematic diagram of an example of an architecture of UniRender according to an embodiment of this application;

FIG. 11 is a schematic diagram of an example in which a render tree is transferred in shared memory according to an embodiment of this application;

FIG. 12A and FIG. 12B each are a schematic diagram of an example of a storage structure of a render tree in shared memory according to an embodiment of this application;

FIG. 13 is a schematic diagram of an example of an architecture of UniRender according to an embodiment of this application;

FIG. 14 is a schematic diagram of an example in which an application writes a render tree into shared memory according to an embodiment of this application;

FIG. 15 is a schematic diagram of another example in which an application writes a render tree into shared memory according to an embodiment of this application;

FIG. 16A-1 and FIG. 16A-2 to FIG. 16C each are a schematic diagram of an example of a scenario of drawing logic for triggering off-screen rendering according to an embodiment of this application;

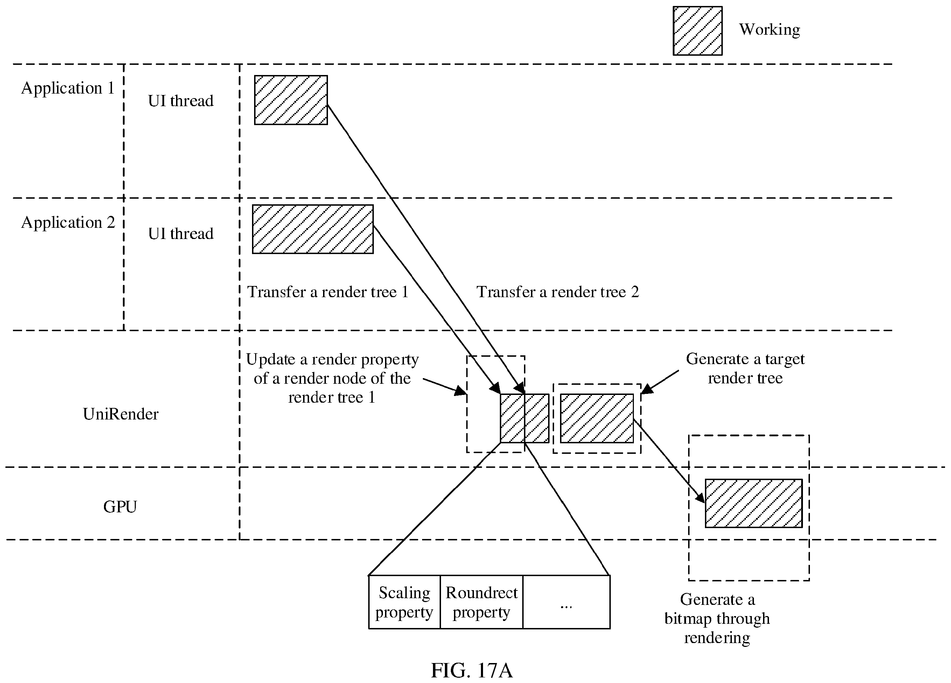

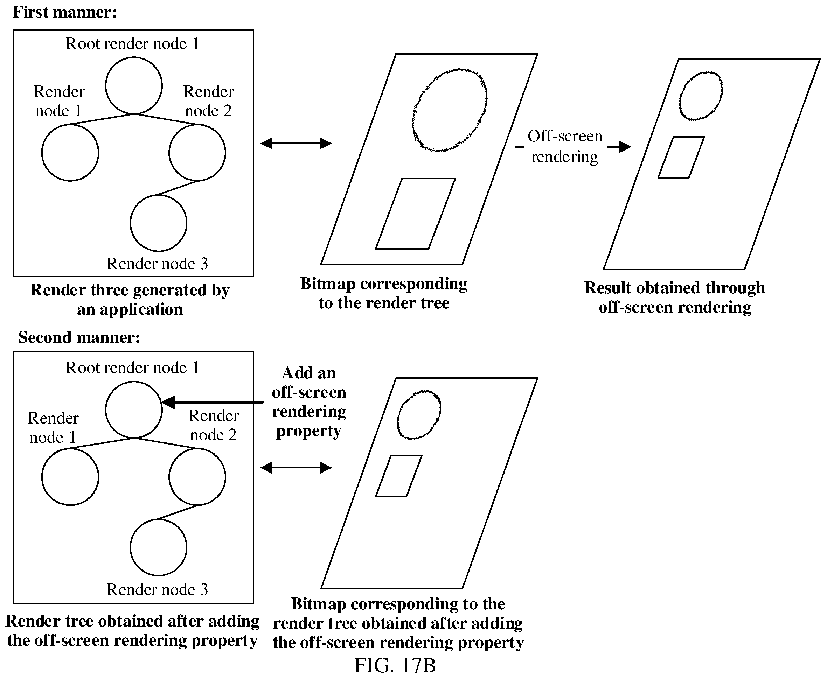

FIG. 17A and FIG. 17B each are a schematic diagram of an example in which UniRender moves forward an instruction for triggering off-screen rendering according to an embodiment of this application;

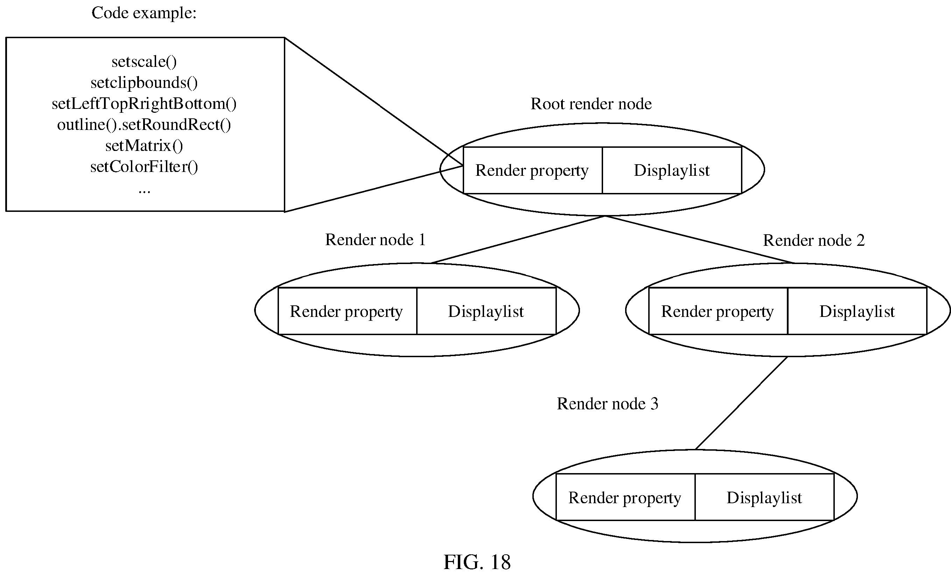

FIG. 18 is a schematic diagram of an example in which UniRender modifies a property of a render node of a render tree according to an embodiment of this application;

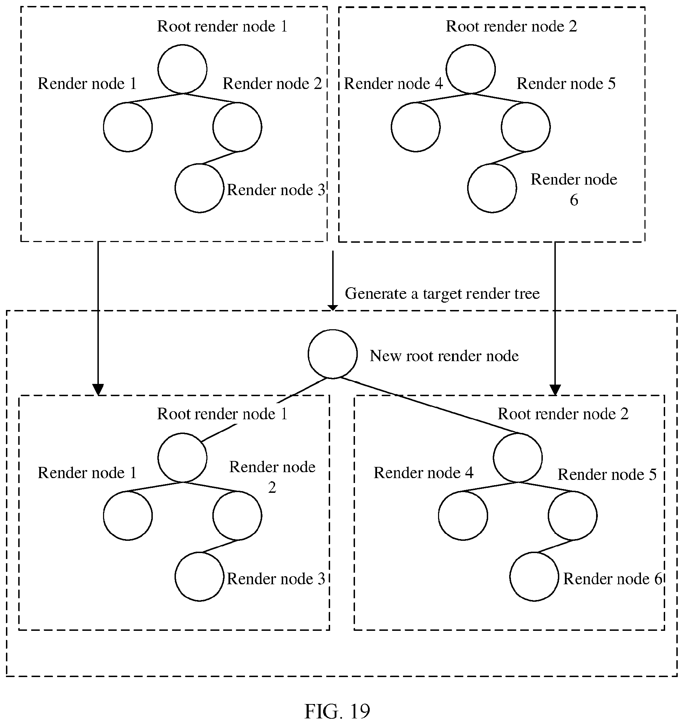

FIG. 19 is a schematic diagram of an example in which a plurality of render trees obtained after a plurality of off-screen rendering instructions are moved forward are merged into one target render tree according to an embodiment of this application;

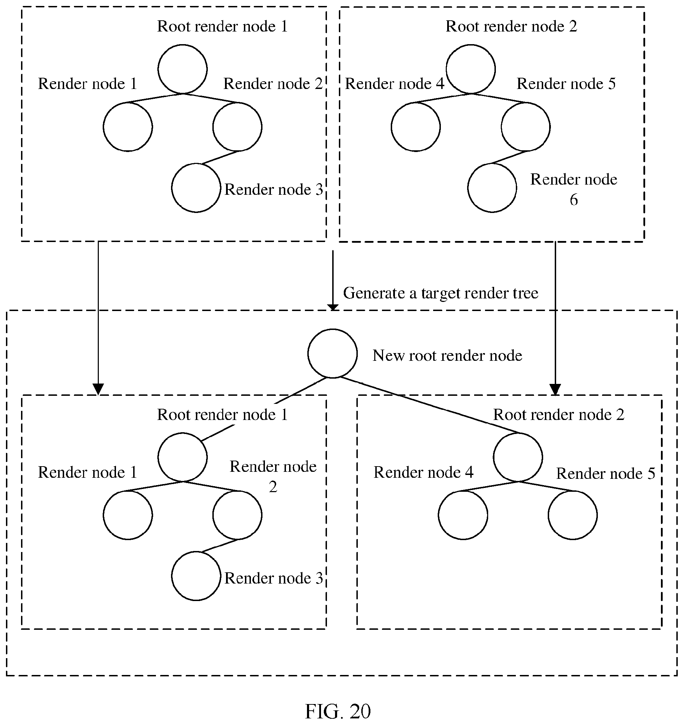

FIG. 20 is a schematic diagram of an example in which a plurality of render trees obtained after a plurality of off-screen rendering instructions are moved forward are merged into one target render tree according to an embodiment of this application;

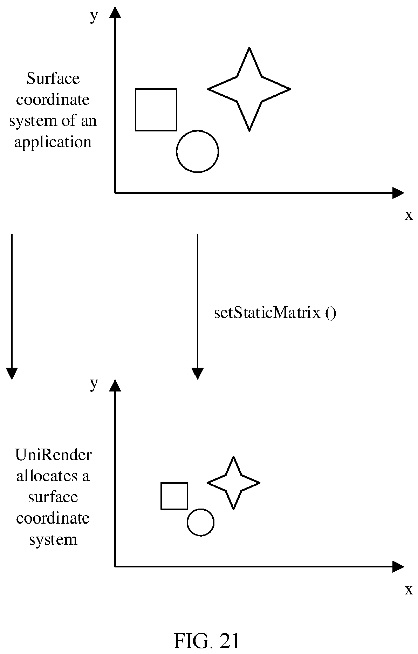

FIG. 21 is a schematic diagram of an example of setStaticMatrix() according to an embodiment of this application;

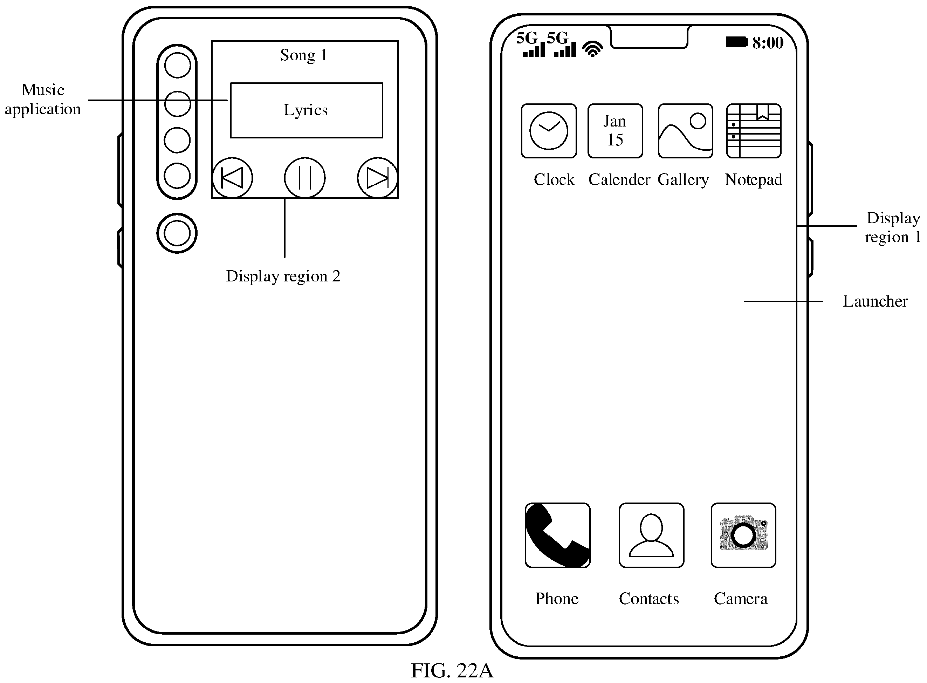

FIG. 22A to FIG. 22C each are a schematic diagram of an example of a scenario of multiple display regions according to an embodiment of this application;

FIG. 23A-1 and FIG. 23A-2 to FIG. 23C each are a schematic diagram of another example of a scenario of multiple display regions according to an embodiment of this application;

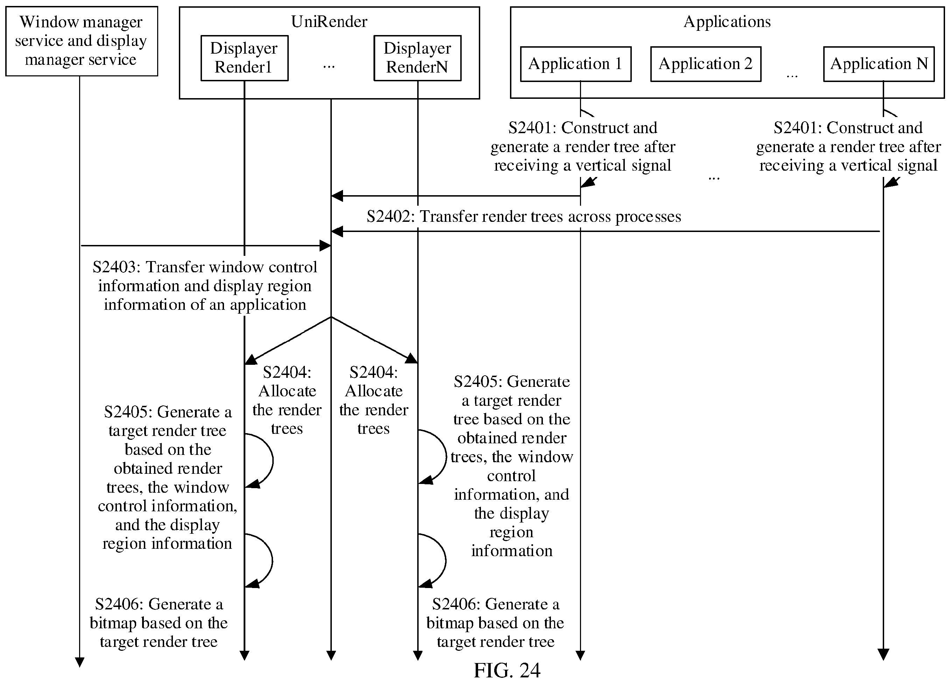

FIG. 24 is a schematic diagram of another example of an interface generation method according to an embodiment of this application;

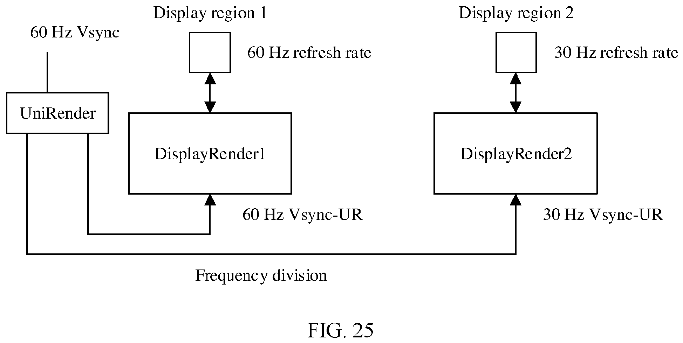

FIG. 25 is a schematic diagram of an example in which a UniRender process performs frequency division or frequency multiplication on a vertical synchronization signal according to an embodiment of this application;

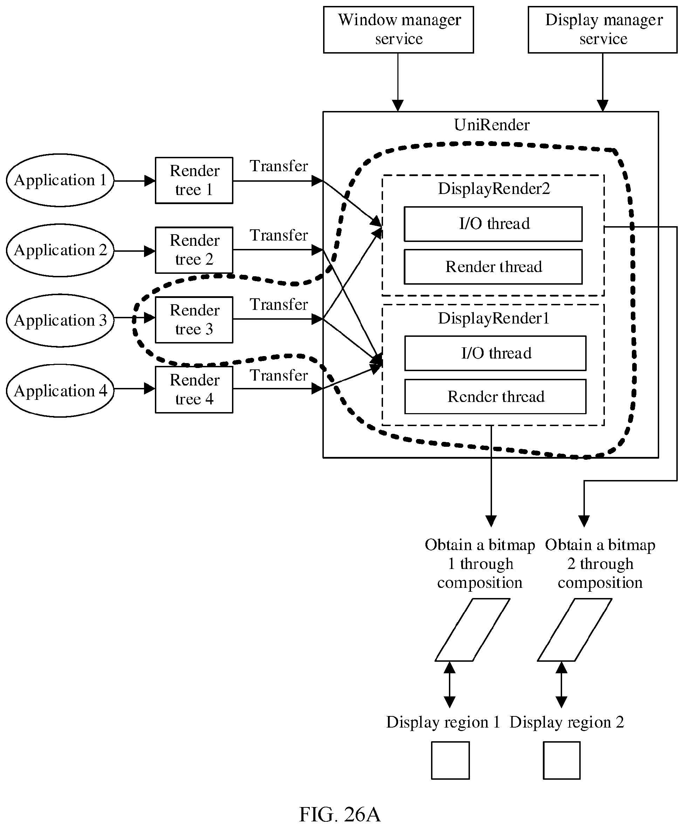

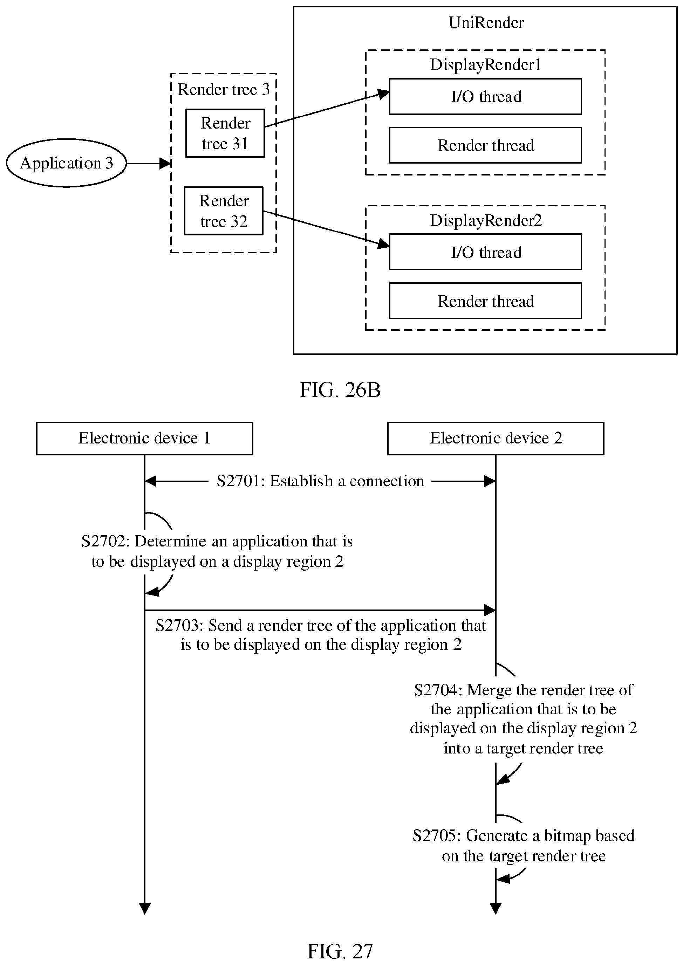

FIG. 26A and FIG. 26B each are a schematic diagram of an example of data flowing when an electronic device implements an interface generation method according to an embodiment of this application;

FIG. 27 is a schematic diagram of another example of an interface generation method according to an embodiment of this application;

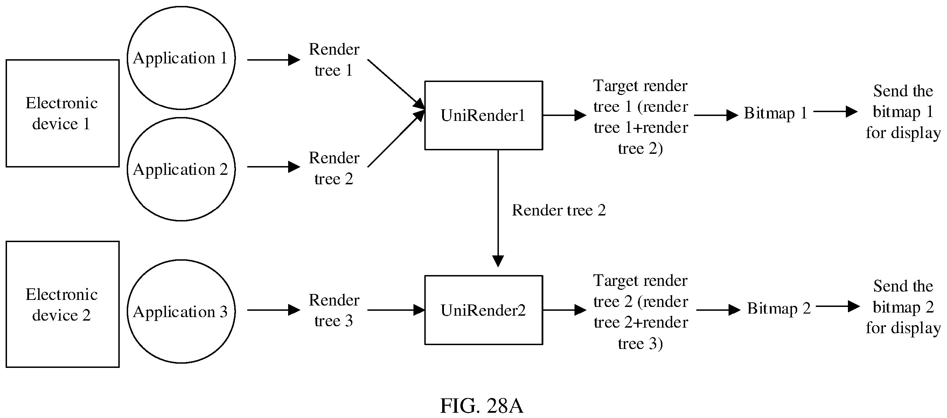

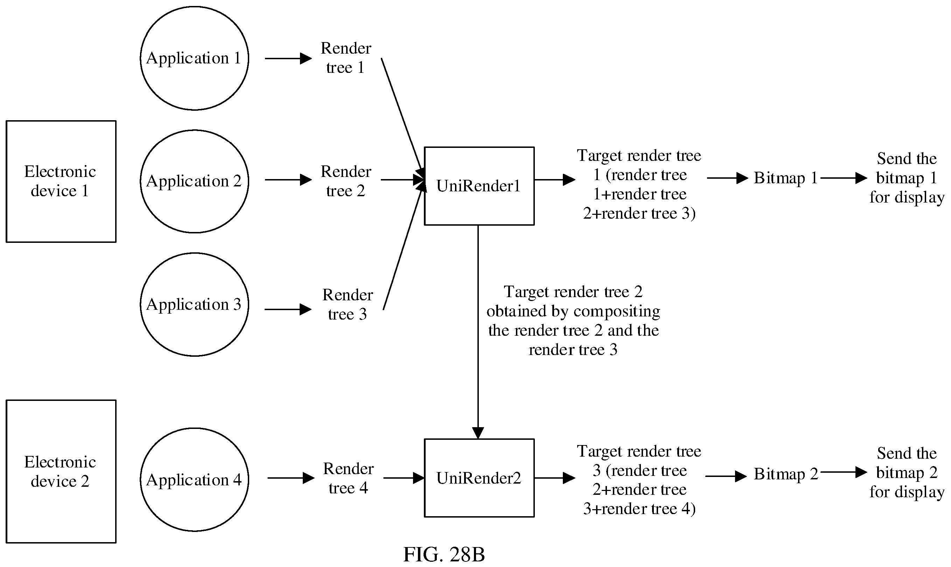

FIG. 28A and FIG. 28B each are a schematic diagram of an example of merging render trees into a target render tree according to an embodiment of this application;

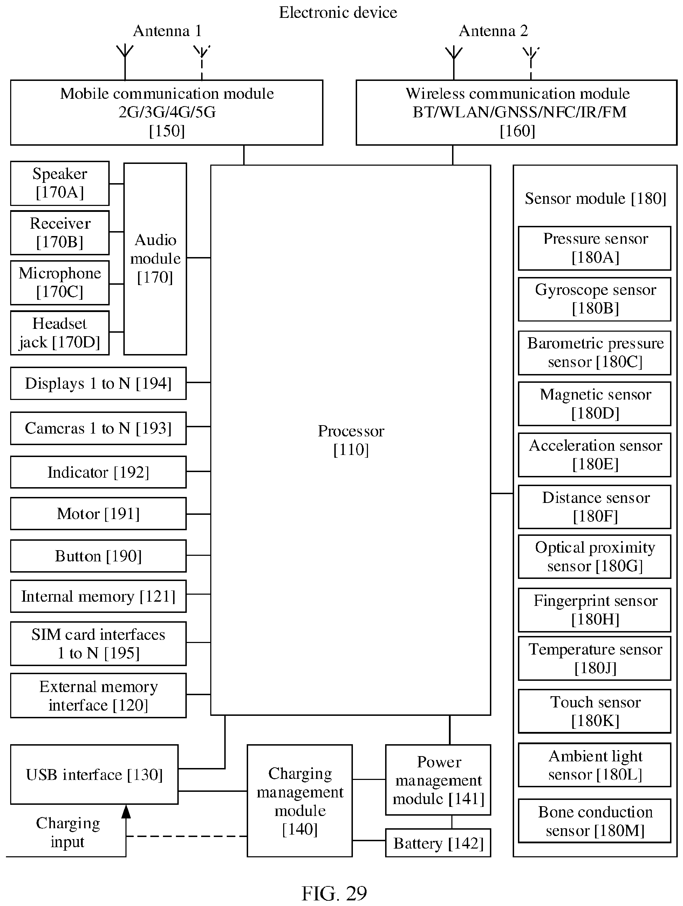

FIG. 29 is a schematic diagram of an example of a hardware structure of an electronic device according to an embodiment of this application; and

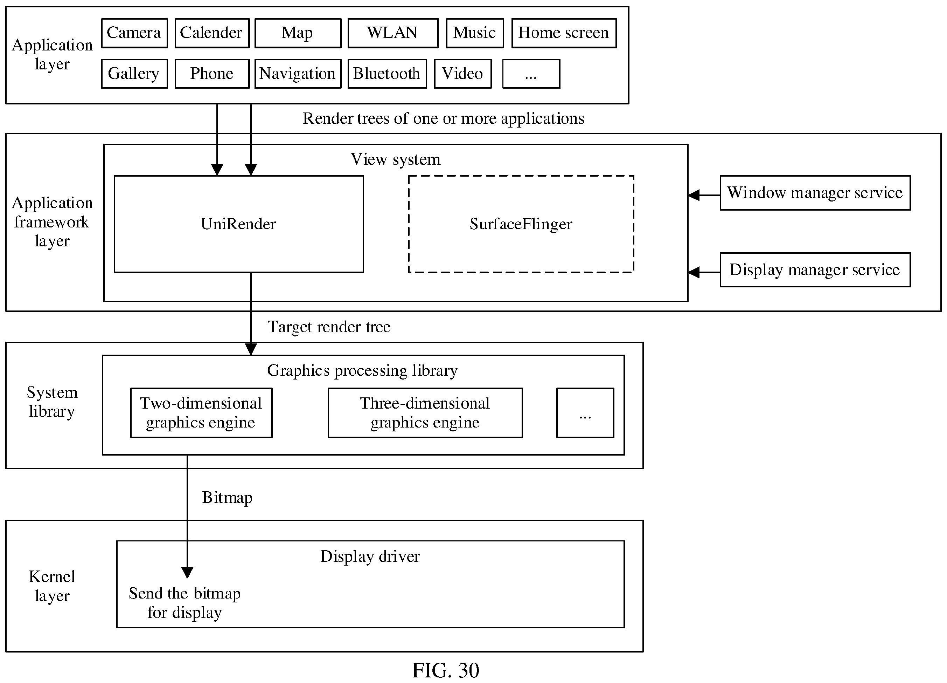

FIG. 30 is a schematic diagram of an example of a software structure of an electronic device according to an embodiment of this application.

DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification of this application are also intended to include plural forms, unless otherwise specified in the context clearly. It should also be understood that the term "and/or" as used in this application indicates and includes any or all possible combinations of one or more listed items.

In the following, terms "first" and "second" are merely intended for a purpose of description, and shall not be understood as an indication or implication of relative importance or implicit indication of a quantity of indicated technical features. Therefore, a feature limited to "first" or "second" may explicitly or implicitly include one or more features. In the descriptions of embodiments of this application, unless otherwise specified, "a plurality of" means two or more.

The term "user interface (user interface, UI)" in embodiments of this application is a medium interface for interaction and information exchange between an application or an operating system and a user, and implements conversion between an internal form of information and a form acceptable to the user. The user interface is source code written in a specific computer language, for example, Java or an extensible markup language (extensible markup language, XML). Interface source code is parsed and rendered on an electronic device, and is finally presented as content that can be recognized by the user. A common representation form of the user interface is a graphical user interface (graphical user interface, GUI), which refers to a user interface that is displayed on a graphical manner and that is related to a computer operation. The user interface may be a visual interface element such as text, an icon, a key, a menu, a tab, a text box, a dialog box, a status bar, a navigation bar, or a Widget that is displayed on a display of the electronic device.

For ease of understanding, terms and concepts related to embodiments of this application are first described below. Terms used in the embodiments of the present invention are merely used to explain specific embodiments of the present invention, but are not intended to limit the present invention.

An interface is used as a medium interface for interaction and information interaction between an application and a user. Each time a vertical synchronization signal arrives, an electronic device needs to generate, for a foreground application, an interface of the application. A frequency of the vertical synchronization signal is related to a refresh frequency of a screen of the electronic device. For example, the frequency of the vertical synchronization signal is equal to the refresh frequency of the screen of the electronic device.

In other words, each time before the electronic device refreshes content displayed on the screen, the electronic device needs to generate, for the foreground application, the interface of the application, to present the newly generated interface of the application to the user when the screen is refreshed.

The interface displayed by the electronic device on the electronic device may include interfaces of one or more applications. In other words, the electronic device needs to generate the interfaces for the one or more applications and composite the interfaces, to obtain an interface that is obtained through composition and that is displayed on the screen.

For generation of the interface of the application by the electronic device, the application needs to perform rendering to generate a bitmap (bitmap), and transfer the bitmap of the application to SurfaceFlinger (SurfaceFlinger). In other words, the application, as a producer, draws and generates the bitmap, and stores the bitmap in a BufferQueue (BufferQueue) provided by SurfaceFlinger. SurfaceFlinger, as a consumer, continuously obtains, from the BufferQueue, a bitmap generated by the application. The bitmaps are located on surfaces generated by the applications, and the surfaces enter the BufferQueue.

After SurfaceFlinger obtains a visible bitmap of an application, SurfaceFlinger and a hardware composition policy module (Hardware Composer, HWC) determine layer composition manners for layers (layer) used as the bitmaps. SurfaceFlinger may determine the visible application by using a window manager service (Window Manager Service, WMS).

After obtaining, from the window manager service, off-screen rendering logic for windows of the applications, for example, the off-screen rendering logic like rectangle rounding, transform, colortransform, and scaling, SurfaceFlinger may copy the bitmaps of the applications to an off-screenbuffer for rendering, and obtain, through off-screen rendering, bitmaps that are used for layer composition.

After compositing the bitmaps of the application, SurfaceFlinger/HWC writes a bitmap (a bitmap is also referred to as a layer on SurfaceFlinger) obtained through composition into a frame buffer (Frame Buffer), and is transferred to a display subsystem (Display Subsystem, DSS). After obtaining the bitmap obtained through composition, the DSS may display the bitmap obtained through composition on the screen. The frame buffer may be an on-screenbuffer (on-screenbuffer).

**(1) First, the following uses examples to describe (1.1) a procedure in which applications generate bitmaps, (1.2) a procedure in which SurfaceFlinger/HWC composites the bitmaps, and (1.3) off-screen rendering.**

(1.1) A procedure in which applications generate bitmaps

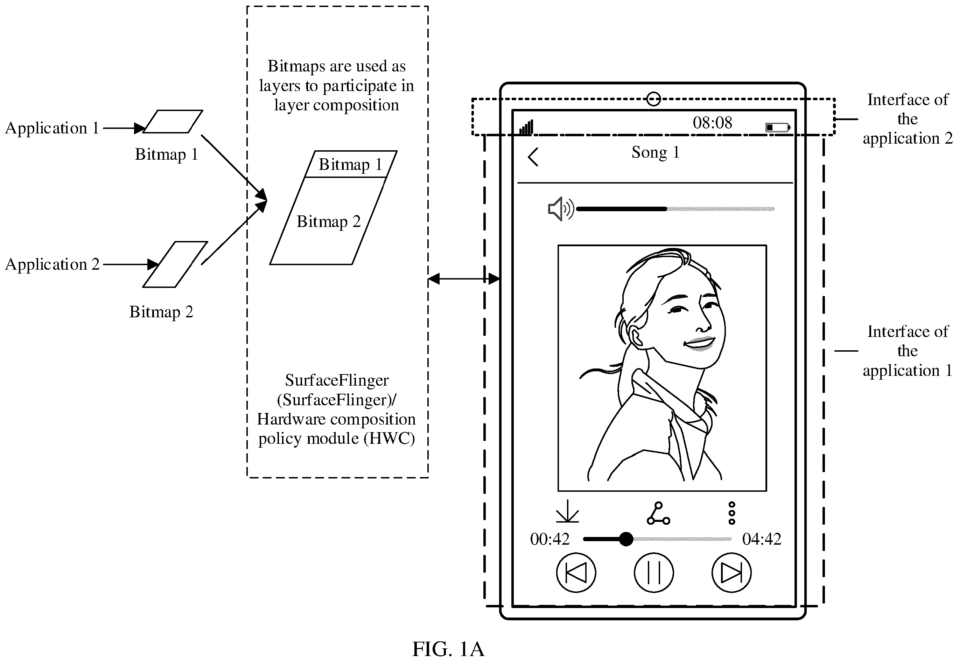

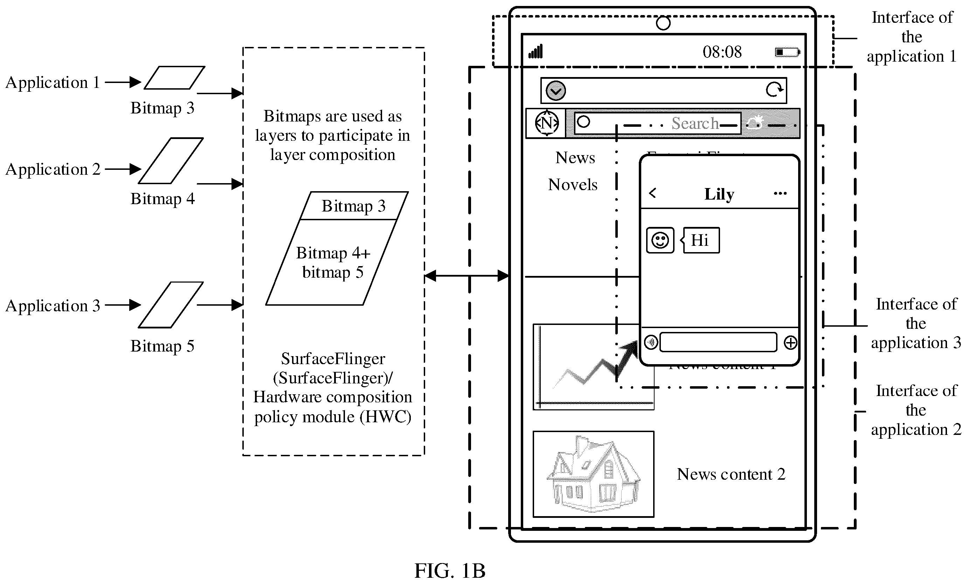

FIG. 1A and FIG. 1B each are a schematic diagram of an example of an interface of an electronic device according to an embodiment of this application.

As shown in FIG. 1A, interfaces of an application 1 and an application 2 are displayed on a screen of an electronic device. The interface of the application 1 may be referred to as a status bar. In FIG. 1A, the application 1 may be an operating system, and the application 2 may be a music application.

Before the electronic device displays the interfaces shown in FIG. 1A, bitmaps of the applications need to be respectively and independently generated. The interface of the status bar is maintained by the operating system, in other words, it may be considered that the application generating the bitmap of the status bar is the operating system. In other words, after generating a bitmap 1, the operating system transfers the bitmap 1 to SurfaceFlinger. After generating a bitmap 2, the music application transfers the bitmap 2 to SurfaceFlinger. The bitmap 1 carries image information of the status bar. The bitmap 2 carries image information of the music application.

After receiving the bitmap 1 and the bitmap 2, SurfaceFlinger/HWC uses the bitmap 1 and the bitmap 2 as layers for layer composition. For descriptions of layer composition, refer to the text descriptions in (1.2) a procedure in which SurfaceFlinger/HWC composites the bitmaps. Details are not described herein.

As shown in FIG. 1B, interfaces of an application 1, an application 2, and an application 3 are displayed on the screen of the electronic device. The interface of the application 1 may be referred to as a status bar. In FIG. 1B, the application 1 may be an operating system, the application 2 may be a browser application, and the application 3 may be a messages application.

Before the electronic device displays the interfaces shown in FIG. 1B, bitmaps of the applications also need to be respectively and independently generated.

In other words, after generating a bitmap 3, the operating system transfers the bitmap 3 to SurfaceFlinger. After generating a bitmap 4, the messages application transfers the bitmap 4 to SurfaceFlinger. After generating a bitmap 5, a news application transfers the bitmap 5 to SurfaceFlinger. The bitmap 3 carries image information of the status bar. The bitmap 4 carries image information of the messages application. The bitmap 5 carries image information of the news application.

After receiving the bitmap 3, the bitmap 4, and the bitmap 5, SurfaceFlinger/HWC uses the bitmap 3, the bitmap 4, and the bitmap 5 as layers for layer composition. For descriptions of layer composition, refer to the text descriptions in (1.2) a procedure in which SurfaceFlinger/HWC composites the bitmaps. Details are not described herein.

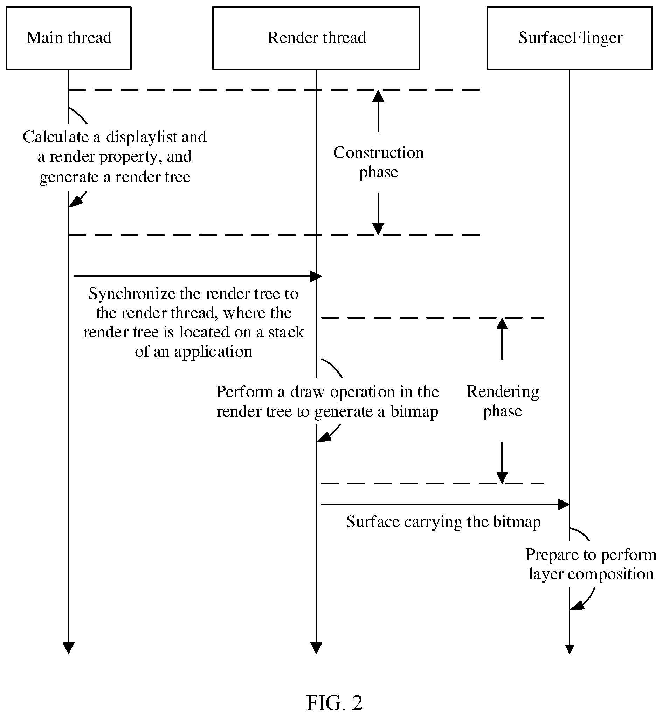

A procedure in which an application generates a bitmap is shown in FIG. 2.

FIG. 2 is a schematic diagram of an example in which an application generates a bitmap according to an embodiment of this application.

As shown in FIG. 2, after receiving a vertical synchronization signal (Vsync-APP), an application starts to generate a bitmap. There are specifically three steps as follows.

(1) A viewhierarchy (viewhierarchy) is invalidated. A main thread (UI thread, UI thread) traverses views (view) of the application, determines and stores a draw operation of each view, and records the view and the draw operation (Draw Operation Struct, DrawOP) related to the view to a displaylist (displaylist) of render nodes (Render Node) of a render tree.

A view is a basic element forming an application interface, and one control on the interface may correspond to one or more views.

The draw operation is a data structure, and is used to draw a graphic, for example, drawing a line, drawing a border, drawing a rectangle, or drawing text. At the render node, the draw operation is converted to an API call for an image processing library, for example, an interface call of OpenGL. For example, DrawLineOp is a data structure that includes information about drawn data, for example, a length and a width of a line.

The displaylist may be a buffer. The buffer records all draw operations included in one frame of the interface of the application or identifiers, for example, addresses and sequence numbers, of all drawing operations. When the application has a plurality of windows or is displayed on different display regions (display), a plurality of render trees need to be independently generated. Displaylists corresponding to different windows and display regions are independently generated.

In embodiments of this application, the display region may be a screen, or may be a virtual display (VirtualDisplay), or the like. The virtual display may be a region that is of the electronic device and that carries content displayed on the screen during screen recording.

The render tree is generated by the UI thread, and is used to generate a data structure of the application interface. The render tree may include a plurality of render nodes, and each render node includes a render property and a displaylist. The render tree records all information about generation of one interface frame of the application.

(2) The UI thread transfers/synchronizes the render tree to a render thread (Render Thread). The render tree is located on a stack (stack) of a process corresponding to the application, and may not be continuously distributed at physical addresses.

(3) The render thread first obtains a hardware canvas (HardwareCanvas), and performs, on the hardware canvas, a draw operation in the render tree to generate a bitmap. The hardware canvas is located on a surface held by the application, and the surface carries the bitmap or data that is in another format and that is used to store image information.

It may be considered that (1) is a construction phase, and is mainly responsible for determining properties such as a size, a location, and transparency of each view in the application. For example, drawLine in a view may be encapsulated into DrawLineOp during construction. DrawLineOp includes drawn data, for example, a length and a width of a line, and may also include an interface call corresponding to DrawLineOp in an underlying graphics processing library. The interface call is used to call the underlying graphics library to generate a bitmap in a rendering phase.

Similarly, it may be considered that (3) is the rendering phase, and is mainly responsible for traversing the render nodes of the render tree, performing a draw operation of each render node, and further generating the bitmap on the hardware canvas. In this procedure, the render thread calls the underlying graphics processing library, for example, OpenGL, and then calls a GPU to complete rendering to generate the bitmap.

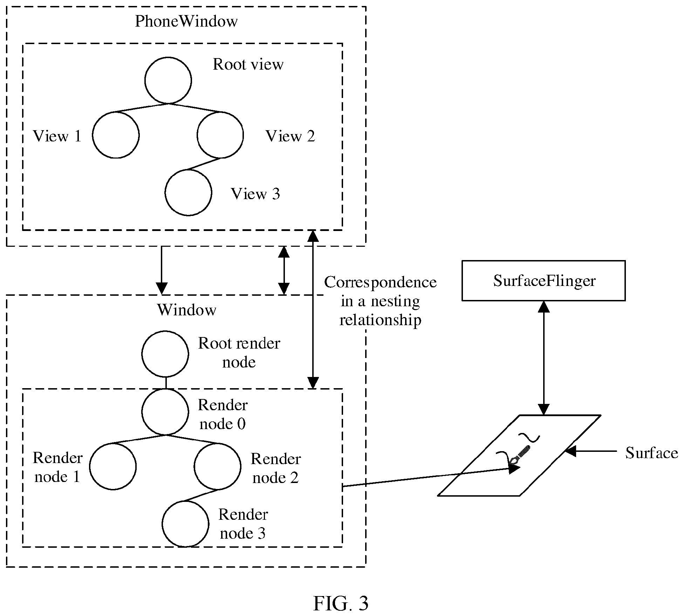

FIG. 3 is a schematic diagram of an example of a render tree according to an embodiment of this application.

An interface to be displayed by an application includes a plurality of nested views. Different views have a parent-child relationship. Therefore, a parent-child relationship between render nodes of a render tree generated by traversing the views is the same as the parent-child relationship between the views. In other words, a nesting relationship between different render nodes depends on the parent-child relationship between the views. Further, when generating a bitmap according to the render tree, a render thread may correctly render an interface of the application.

One view may correspond to one or more render nodes, and a DecorView (DecorView) corresponds to a root render node (Root Render Node). In other words, the nesting relationship between the render nodes corresponds to the parent-child relationship between the views. A render property (properties) is further included in a render node and is used to determine, when a bitmap is generated through rendering, a location about where a view that corresponds to the render node is located on the surface, and a size and transparency of the view.

For example, a structure of the interface of the application is as follows: a PhoneWindow of the application carries a DecorView. Child views of the DecorView are a view 1 and a view 2, and a child view of the view 2 is a view 3. A structure of the render tree generated by the UI thread of the application is as follows: a root render node corresponding to the PhoneWindow is a root node of the render tree, and a child node of the root render node is a render node 0 corresponding to the DecorView. Child nodes of the render node 0 are a render node 1 corresponding to the view 1 and a render node 2 corresponding to the view 2. A child node of the render node 2 is a render node 3 corresponding to the view 3.

The correspondence between the view and the render node means that the render node includes all draw operations for the corresponding view.

After receiving the render tree synchronized by the UI thread, the render thread calls OpenGL interface to perform rendering on a surface of the application so as to obtain a bitmap, and sends the surface to SurfaceFlinger for composition and display.

It should be noted that a construction phase uses a CPU computing resource, and a rendering phase uses a GPU resource.

It should be noted that if hardware acceleration is not enabled, the application completes all operations of the construction phase and the rendering phase by using the UI thread, without encapsulating the operations into render nodes. After traversing the views of the application and the draw operations for the views, the application requests for an anonymous shared memory from SurfaceFlinger, and directly calls an underlying graphics library in this memory to generate the bitmap.

It should be noted that content shown in FIG. 2 is the procedure in which the application generates the bitmap when hardware acceleration is enabled. When the electronic device does not enable hardware acceleration, the application uses software for drawing and generating the bitmap. The drawing by software includes:

(1) A viewhierarchy (viewhierarchy) is invalidated. A UI thread traverses views of the application and records a draw operation of each view. (2) The UI thread obtains, through an interface, for example, Surface.lockCanvas (), a software canvas (Canvas) for drawing, and draws on the software canvas based on a stored draw operation list to generate a bitmap. The software canvas is located on a surface generated by the application.

The surface held by the application is allocated by SurfaceFlinger to the application through binder communication. A quantity of surfaces held by the application may be consistent with a quantity of current windows (PhoneWindow) of the application.

After the procedure in which the application generates the bitmap is introduced, an example is used for describing a bitmap composition procedure.

(1.2) A procedure in which SurfaceFlinger/HWC composites the bitmaps

SurfaceFlinger is a system service on an electronic device, and is configured to allocate surfaces to applications and use bitmaps on one or more surfaces as layers for layer composition. The HWC is a functional module that is on a hardware abstraction layer (Hardware Abstraction Layer, HAL) responsible for composition and display in the electronic device. The HWC provides an interface for the upper-layer SurfaceFlinger, and calls bottom-layer hardware (such as a display driver, excluding a GPU) to composite the layers.

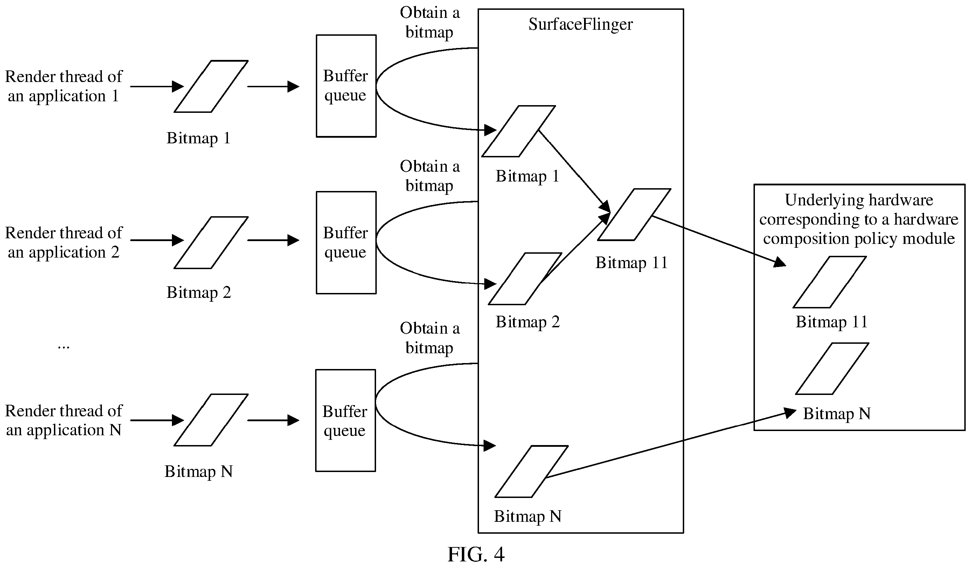

FIG. 4 is a schematic diagram of an example in which bitmaps are used as layers to participate in layer composition according to an embodiment of this application.

As shown in Figure 4, a render thread of the application generates a bitmap on the surface allocated to it by SurfaceFlinger. SurfaceFlinger maintains the surfaces of one or more applications by using a BufferQueue mechanism. In other words, SurfaceFlinger may obtain bitmaps of different applications.

After obtaining the bitmaps of one or more applications, SurfaceFlinger may call the GPU to composite the plurality of bitmaps into one bitmap (composition of the bitmaps is referred to as layer composition). The composition may also be referred to as Client composition or GLES composition.

After obtaining the bitmaps of the applications, SurfaceFlinger may call the underlying hardware (excluding the GPU) through the HWC to perform composition. This composition manner is also referred to as Device composition.

The Client composition needs to call the GPU. The Client composition may composite a plurality of layers, and composite the layers in a pixel-by-pixel processing manner, for example, linear deepening.

The Device may composite a limited number of layers, and does not support a plurality of pixel-by-pixel processing manners for composition. When compositing a plurality of layers whose positions do not overlap on the screen, the Device composition may not composite the layers. Instead, data in different surfaces is read for display at different positions of the screen.

As shown in FIG. 4, after obtaining a bitmap 1 of an application 1, a bitmap 2 of an application 2, ..., and a bitmap N of an application N, SurfaceFlinger may perform Client composition on the bitmap 1 and the bitmap 2 to generate a bitmap 11. Then, SurfaceFlinger performs Device composition on the bitmap 11 and the bitmap N by calling underlying hardware through the HWC.

The Device composition stores the bitmap 11 and the bitmap N temporarily. When the bitmap 11/the bitmap N needs to be displayed on the screen of the electronic device, corresponding pixels are obtained from the bitmap 11/the bitmap N and displayed on the screen. For example, in the interface shown in FIG. 1B, the bitmap 11 is a bitmap obtained by compositing the bitmap of the messages application and the bitmap of the news application, and the bitmap N is the bitmap of the status bar.

For SurfaceFlinger or the underlying hardware corresponding to the HWC, each bitmap is equivalent to a layer (Layer).

The layer composition manner may be determined by the underlying hardware corresponding to the HWC, or may be determined by SurfaceFlinger.

For one example, after obtaining the bitmaps, SurfaceFlinger transfers a layer set to the underlying hardware through the HWC, and the underlying hardware determines which layers are used for the Client composition and which layers are used for the Device composition. The underlying hardware marks layers in a layer list for composition manners, and returns the composition manners for different layers to SurfaceFlinger. SurfaceFlinger composites layers marked for GPU composition and stores a composition result in a buffer. SurfaceFlinger transfers the buffer and another layer marked for Overlay composition to the underlying hardware through the HWC. The underlying hardware completes layer composition.

For another example, a layer that triggers off-screen rendering logic, for example, window animation, in a layer composition procedure, is directly marked by SurfaceFlinger for GPU composition. The triggered off-screen rendering logic further includes logic that fails to be processed by the underlying hardware corresponding to the HWC, such as rectangle rounding, scaling, transform, and colortransform.

In addition to the bitmaps generated by the render threads of the applications, the surfaces that are held by the applications and that are allocated by SurfaceFlinger to the applications further include window control information such as Z-order that is of the layers and that is obtained from the window manager service. Therefore, SurfaceFlinger may obtain the window control information at the layers from the surfaces to determine that the layers need GPU composition. The Z-order of the layers determines front-to-back ordering of layers on a Z axis. The Z axis is in a direction perpendicular to the screen, and is used to calculate a front-to-back relationship between different layers.

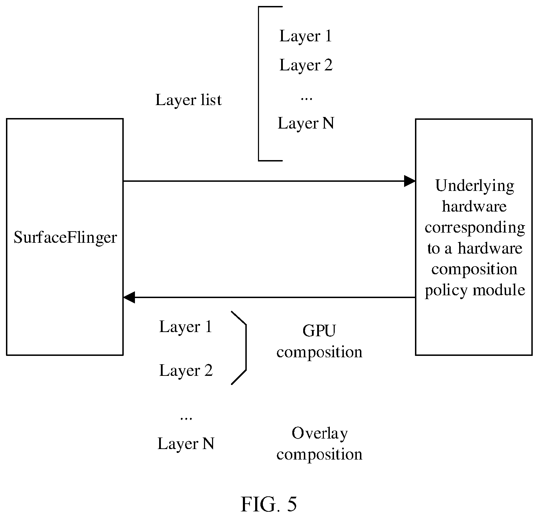

FIG. 5 is a schematic diagram of an example of layer composition according to an embodiment of this application.

As shown in Figure 5, after obtaining bitmaps of applications, SurfaceFlinger uses each bitmap as a layer and writes the layer into a layer list. SurfaceFlinger transfers the layer list to underlying hardware through an HWC. The underlying hardware determines composition manners for different layers based on a capability of the underlying hardware and returns a result to SurfaceFlinger through the HWC.

After obtaining the result returned through the HWC, SurfaceFlinger may know the composition manner for each layer in the layer list. For layers marked for GPU composition, SurfaceFlinger composites the layers, and transfers a layer obtained through composition and a layer marked for overlay composition to the underlying hardware through the HWC. Then, the underlying hardware corresponding to the HWC composites the layers.

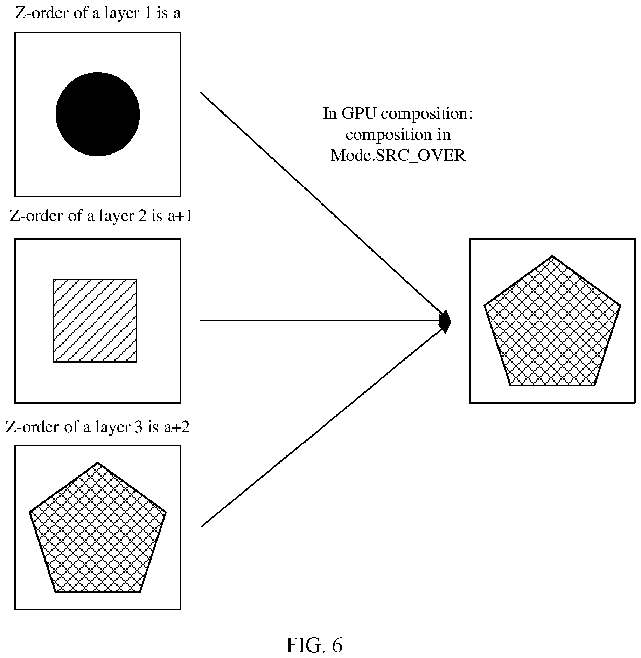

FIG. 6 is a schematic diagram of another example in which SurfaceFlinger composites layers according to an embodiment of this application.

After obtaining a plurality of surfaces, SurfaceFlinger may determine composition manners for layers which are bitmaps on the plurality of surfaces. After obtaining a plurality of layers and determining that a layer composition manner is GPU composition, SurfaceFlinger may perform Client composition. A layer composition mode may include Mode.CLEAR (displaying a top layer in Z-order), Mode.SRC_OVER (displaying the layers sequentially based on Z-order), and Mode.DST_IN (displaying a part that is of the top layer in Z-order and that does not overlap a lower layer underneath the top layer).

For example, as shown in FIG. 6, when a layer composition mode is Mode. SRC_OVER, SurfaceFlinger composites content of three layers, determines a front-to-back relationship between different layers based on Z-order of the layers, and superimposes the layers sequentially.

The Z-order of a layer 1 is a, the Z-order of a layer 2 is a+1, and the Z-order of a layer 3 is a+2. After SurfaceFlinger composites content of the three layers, content of the layer 1 and the layer 2 are completely covered. Only content on the layer 3 is displayed.

Being completely covered means that a view on a layer with lower Z-order is not displayed at all because the layer with the lower Z-order is completely covered by a layer with higher Z-order.

All layers for GPU composition will trigger off-screen rendering, and are composited through off-screen rendering. The following describes concepts related to off-screen rendering.

(1.3) Off-screen rendering

When SurfaceFlinger determines that a plurality of random layers need to be composited through the GPU, off-screen rendering (off-screen rendering) needs to be enabled to composite the layers.

The off-screen rendering is that SurfaceFlinger requests for an off-screenbuffer (off-screenbuffer), and calls the GPU in the off-screenbuffer to process an image. The off-screenbuffer is a block of memory outside the on-screenbuffer, and a plurality of layers are composited in the off-screenbuffer.

Off-screen rendering may include the following steps.

(1) Bitmaps in layers that are determined by SurfaceFlinger and that are used for GPU composition need to be converted into textures (texture) and uploaded to a GPU memory (namely, the off-screenbuffer), or mapped to OpenGL textures by using shared memory. Then in OpenGL, the textures are bound (binding the textures includes binding the textures to the context context).

(2) The textures are rendered based on instructions related to window animation corresponding to the layers. The textures of a plurality of applications are merged. Based on a layer composition mode, pixel-by-pixel rendering is performed for layer composition.

(3) SurfaceFlinger obtains rendered textures from the GPU memory or directly obtains the rendered textures from the shared memory.

It is obvious that off-screen rendering causes context switching, and the context switching increase additional performance overheads.

With reference to content in (1.1) a procedure in which applications generate bitmaps, (1.2) a procedure in which SurfaceFlinger/HWC composites the bitmaps, and (1.3) off-screen rendering, the following describes a composition procedure in which bitmaps are used as layers.

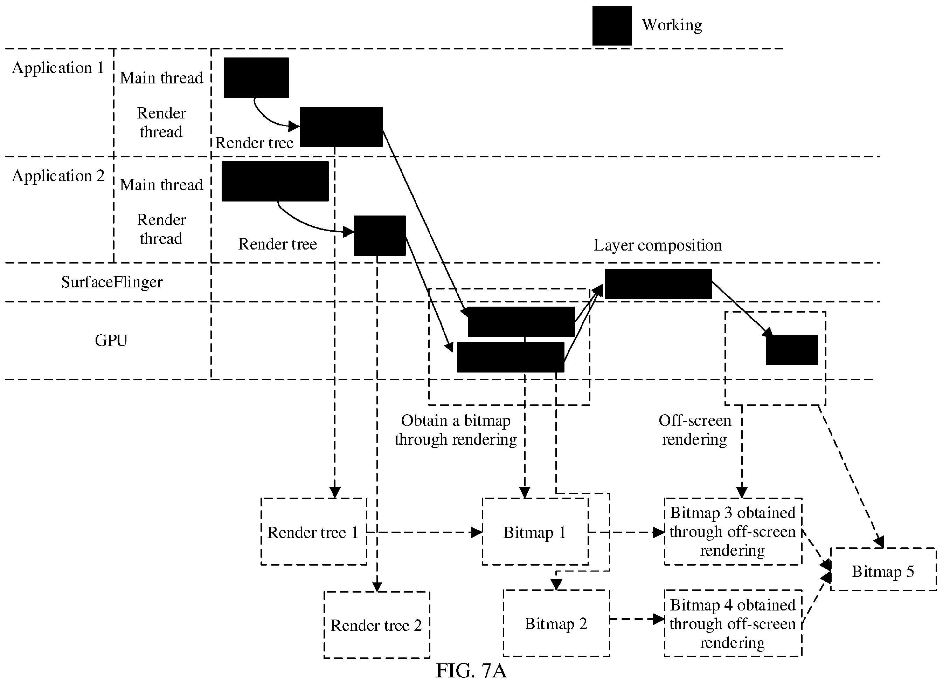

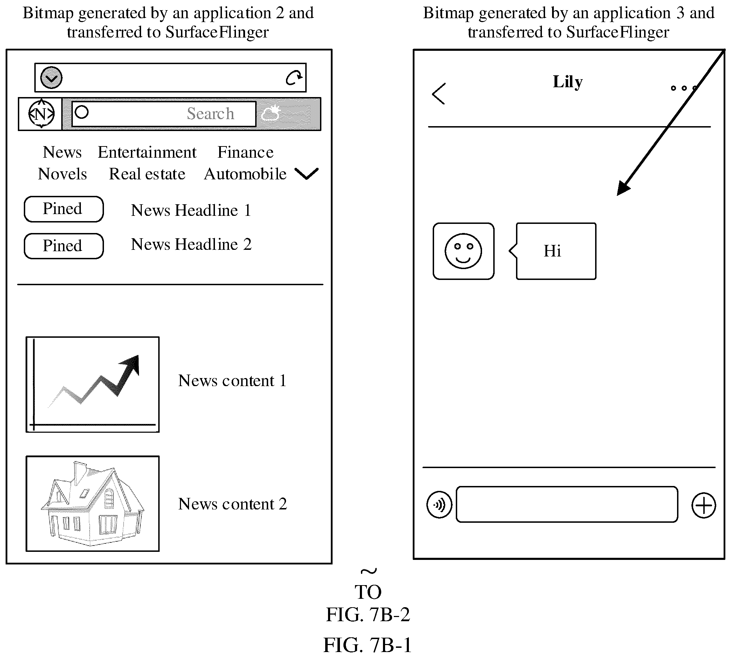

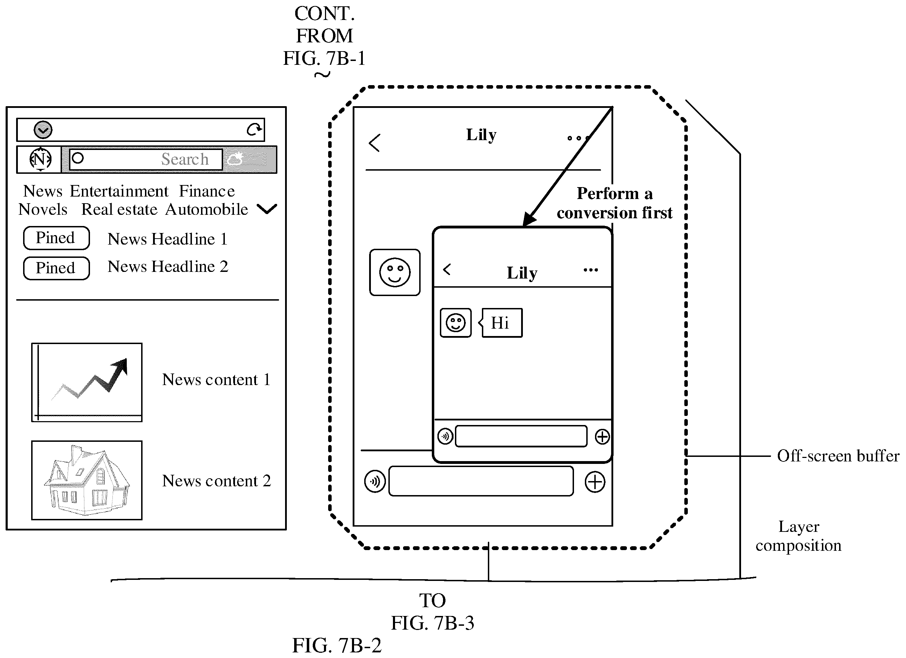

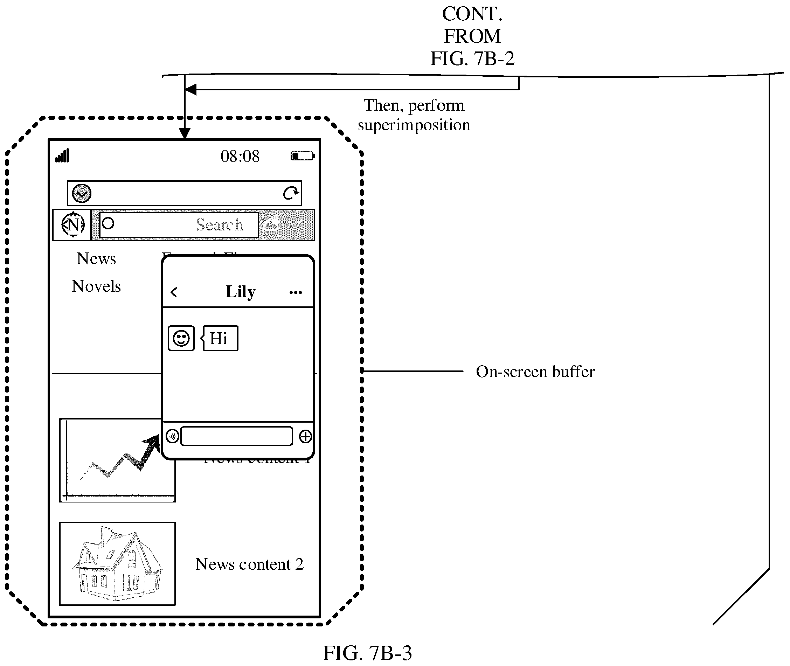

FIG. 7A and FIG. 7B-1 to FIG. 7B-3 each are a schematic diagram of another example of layer composition according to an embodiment of this application.

As shown in FIG. 7A, UI threads of different applications independently generate respective render trees, and transfer the render trees to respective render threads for rendering to generate bitmaps.

The render threads first performs, based on properties and displaylists of render nodes of the render trees, rendering to generate bitmaps. The bitmaps are used as layers for composition. When a layer composition manner is GPU composition, SurfaceFlinger composites the plurality of layers into one layer through off-screen rendering.

For example, an application 1 generates a render tree 1, and then generates a bitmap 1 based on the render tree 1, and an application 2 generates a render tree 2, and then generates a bitmap 2 based on the render tree 2. After receiving the bitmap 1 and the bitmap 2, SurfaceFlinger performs off-screen rendering on the bitmap 1 and the bitmap 2 to generate a bitmap 5. In the off-screen rendering procedure, the bitmap 1 is first copied to an off-screenbuffer, and the bitmap 1 is converted into a bitmap 3 in the off-screenbuffer based on window animation information. Similarly, the bitmap 2 is converted into a bitmap 4. Finally, the bitmap 3 and the bitmap 4 are superimposed based on a layer composition mode to generate the bitmap 5.

As shown in FIG. 7B-1 to FIG. 7B-3, to implement an interface shown in FIG. 1B, after receiving bitmaps of applications, SurfaceFlinger first performs off-screen rendering on a bitmap of an application related to a window animation bitmap, to complete a conversion, and then copies a layer obtained through the conversion to an on-screenbuffer for display.

For example, if a bitmap of an application 3 needs to be scaled out, the bitmap of the application 3 fails to be directly copied to an on-screenbuffer for a conversion because a bitmap of another application may be affected. Instead, the bitmap of the application 3 needs to be copied to the off-screenbuffer for a separate conversion. A result obtained through the conversion is copied to the on-screenbuffer.

It is obvious that a correct interface may only be generated if bitmaps generated by all applications are converted and then superimposed based on a layer composition mode.

From the time when main threads of the applications generate render trees to the time when SurfaceFlinger composites layers, processes that call the GPU keep changing (from the application 1 to the application 2, ..., application N, and SurfaceFlinger). The GPU needs to be started for at least N+1 times, and N indicates the number of the applications.

It may be understood that different applications independently construct and render respective bitmaps. However, during layer composition, a layer with a lower Z-order may be completely covered by a layer with a higher Z-order. This inevitably results in overdraw (Overdraw) of bitmaps of different applications. For example, as shown in FIG. 6, overdraw occurs in a part where three graphics overlap. In other words, overdraw occurs on the layer 1 and the layer 2, and an interface obtained through composition is not affected by the layer 1 and the layer 2. Moreover, off-screen rendering requires a newly allocated off-screenbuffer and context switching. This increases memory overheads and computing overheads of the electronic device.

**(2) Second, the following describes an interface generation method provided in embodiments of this application.**

According to the interface generation method provided in embodiments of this application, a UniRender process first obtains render trees of one or more applications, and recombines one or more render trees to generate a target render tree. Second, the UniRender process performs rendering based on the target render tree to directly obtain a bitmap carrying image information of one or more application interfaces, without compositing layers.

First, in the interface generation method provided in embodiments of this application, target render trees of the one or more applications are merged into the target render tree. In a procedure of generating the target render tree, the UniRender process determines off-screen rendering logic at each layer, and adds a property to a corresponding render node in the target render tree, or modifies a property of the corresponding render node based on the off-screen rendering logic. In this way, the UniRender process directly generates a bitmap without performing off-screen rendering.

In addition, in the interface generation method provided in embodiments of this application, the target render trees of the one or more applications are merged into the target render tree, without generating a plurality of bitmaps first as layers for composition In a procedure of generating a bitmap by performing rendering based on the target render tree, the UniRender process uses Z-order of a layer as Z-order of the render tree, and may delete a render node corresponding to a view that is not displayed or does not affect display, to avoid overdraw.

Finally, according to the interface generation method provided in embodiments of this application, the applications do not need to generate the render threads, and the UniRender process performs unified rendering instead. This helps improve an interface rendering speed.

**(2.1) System architecture of the interface generation method provided in embodiments of this application**

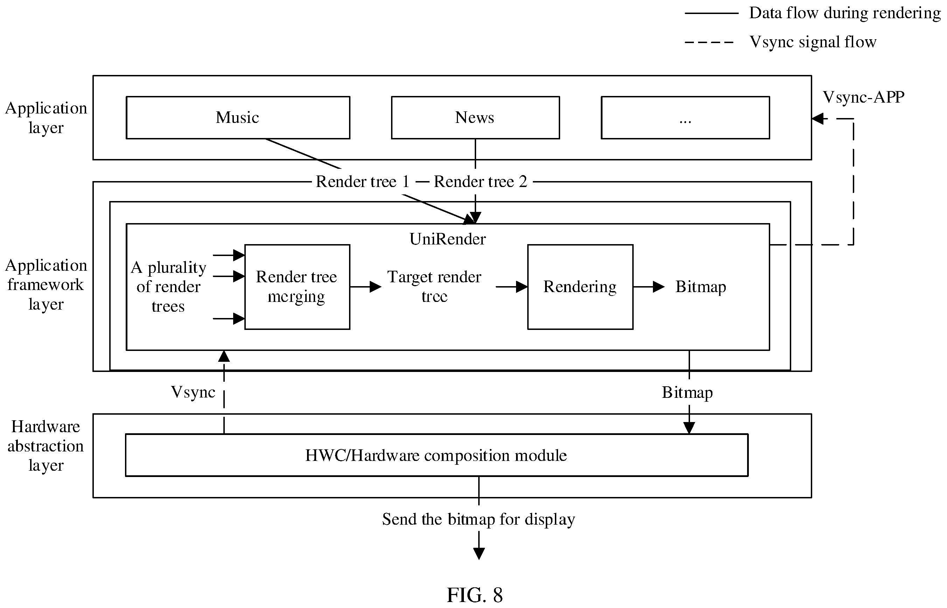

FIG. 8 is a schematic diagram of an example of a system architecture of an interface generation method according to an embodiment of this application.

When an interface of an application is updated, the application may request for a vertical synchronization signal (Vsync-APP) from a UniRender process (SurfaceFlinger is not shown in FIG. 8). When SurfaceFlinger exists, the application may request for the vertical synchronization signal (Vsync-APP) from SurfaceFlinger.

The vertical synchronization signal (Vsync-APP) from the UniRender process may be from SurfaceFlinger, or directly generated by underlying hardware (for example, a screen) corresponding to an HWC. Alternatively, the UniRender process starts a thread that is periodically woken up, to generate the vertical synchronization signal (Vsync-APP). When SurfaceFlinger exists, the Vsync-APP may be from SurfaceFlinger.

After the application obtains the vertical synchronization signal (Vsync-APP), the application generates a render tree and transfers the render tree to the UniRender process.

After receiving a vertical synchronization signal (Vsync-UR), the UniRender process merges one or more render trees to generate a target render tree. Then, the UniRender process traverses and executes a draw operation in a displaylist in each render node of the render tree by using a rendering engine, to generate a bitmap carrying image information of the one or more render trees. The bitmap may be located in an on-screenbuffer.

A difference between the Vsync-UR and the Vsync-APP is Vsync-Offset, and the Vsync-Offset may be determined by the UniRender process. When SurfaceFlinger exists, the Vsync-Offset may be determined by Surface-Flinger.

After generating the bitmap, the UniRender process transfers the bitmap to a display subsystem through the HWC for display.

After the system architecture of the interface generation method of this application is described, the following uses an example to describe a method procedure of the interface generation method provided in embodiments of this application.

**(2.2) Method procedure of the interface generation method provided in embodiments of this application**

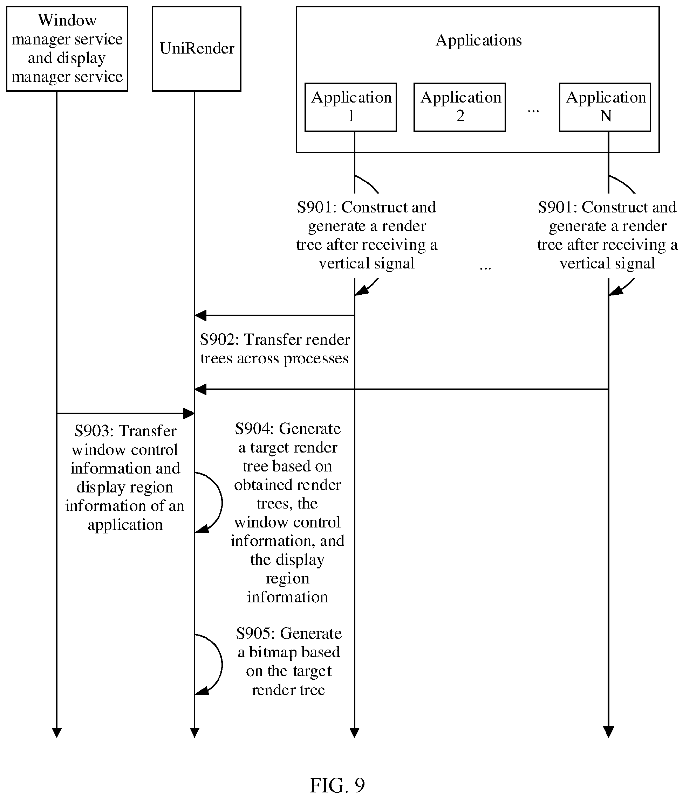

With reference to FIG. 9, the following uses an example to describe an interface generation method according to an embodiment of this application.

FIG. 9 is a schematic diagram of an example of an interface generation method according to an embodiment of this application.

As shown in FIG. 9, the interface generation method according to an embodiment of this application includes the following steps.

S901: Construct and generate a render tree after receiving a vertical synchronization signal.

When an interface needs to be updated, an application may request for a vertical synchronization signal (Vsync-APP) from a UniRender process. After receiving the vertical synchronization signal, the application executes a measure() method, a layout() method, and a draw() method in a UI thread. When executing the draw() method, the UI thread traverses views of the application, determines a draw call required for rendering of each view, and continuously records/stores the draw call into a displaylist of a render node corresponding to the view.

An interface that is of the application and that needs to be displayed includes a plurality of nested views. A displaylist corresponding to a DecorView (DecorView) include entries for displaylists of child views of the DecorView. In other words, a nesting relationship between the displaylists is the same as a nesting relationship between the views. Therefore, a nesting relationship between render nodes is the same as the nesting relationship between the views. For definitions of related concepts of the render tree and the render node, refer to the foregoing text descriptions corresponding to FIG. 3.

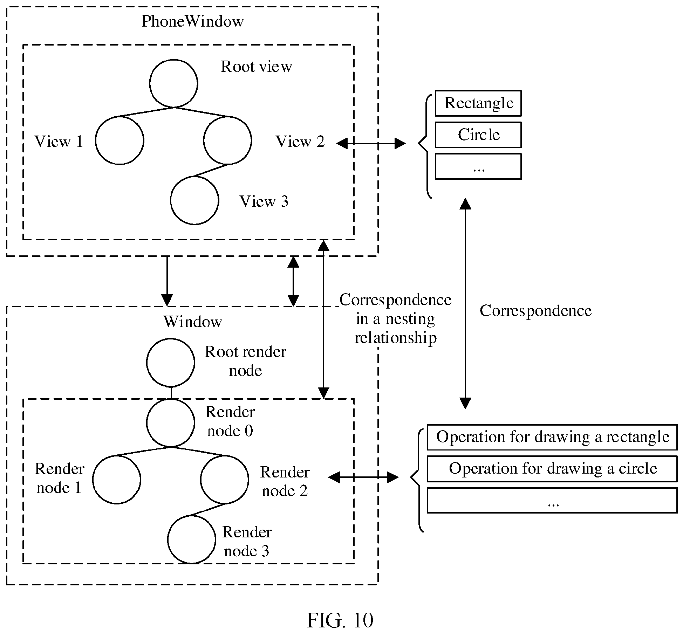

FIG. 10 is a schematic diagram of an example of constructing a render tree according to an embodiment of this application.

After performing measure, layout, and draw, the UI thread of the application may obtain a parent-child structure of a plurality of views of an interface to be updated. In a procedure of traversing the views, the UI thread determines content to be displayed on each view and an interface call required for generating the content, such as drawCircle, drawLine, etc.

The application encapsulates a drawing interface call, for example, drawCircle or drawLine, into a corresponding DrawOp, for example, DrawCircleOp or DrawLineOp, and stores the DrawOp in a displaylist. DrawLineOp is an interface call for drawing graphics by an underlying graphics library (such as OpenGL), and is further converted into a call for calling a GPU to draw graphics.

As shown in FIG. 10, a view structure of the interface of the application is as follows: a DecorView, where child views of the DecorView are a view 1 and a view 2, and a child view of the view 2 is a view 3. If the view 2 includes a rectangle and a circle, draw operations in a displaylist in a render node 2 corresponding to the view 2 includes: an operation for drawing a rectangle, and an operation for drawing a circle.

When executing the draw() method, the UI thread of the application may traverse all views based on the parent-child relationship between the views, determine a draw operation in each view, and encapsulate the draw operation as DrawOp. After generating the displaylist, the UI thread of the application will further encapsulate the displaylist into a render tree.

The render node of the render tree includes the displaylist and a render property. The render property is used to determine a location about where a view that is to be rendered by the render node is located on the surface, and a size, transparency of the view. The displaylist is used to determine content, for example, a line, a rectangle, and a circle, of the view to be rendered by the render node.

The surface is requested by the application. The application determines the size of the surface. When SurfaceFlinger exists, the application may request for the surface from SurfaceFlinger. When SurfaceFlinger does not exist, the application may request for the surface from the UniRender process. SurfaceFlinger may not allocate a surface to the application.

Optionally, in some embodiments of this application, the UniRender process may adjust a frequency of a vertical synchronization signal (Vsync-APP) in each display region after determining a screen refresh frequency of each display region. In this way, an application displayed on a display region 1 generates render trees at a frequency that is equal to a screen refresh frequency of the display region 1.

It should be noted that a UI thread of one application may generate a plurality of render trees, for example, in a multiple display region (display) scenario like a multi-screen scenario, a virtual-screen scenario, or a multi-window scenario. For the multiple display region scenario, refer to text descriptions in (2.2) the interface generation method in the multiple display region scenario.

S902: Transfer render trees across processes.

After generating the render tree, the UI thread of the application transfers the render tree to the UniRender process through IPC communication. The render tree is located on a stack corresponding to the application. Correspondingly, the UniRender process needs to receive render trees transferred by different applications, and determine a correspondence between the applications and the render trees

A plurality of foreground applications transfer render trees to UniRender. An application is a foreground application if the application meets any one of the following three conditions: The application has a visible activity (Activity), the application has a foreground service, and another foreground application is associated with the application.

Because different processes do not share memory, processes needs to exchange data through inter-process communication (inter-process communication, IPC). The application may transfer the render tree to the UniRender process to implement IPC communication through Binder, AIDL, shared memory, or a Socket. This is not limited herein.

The following uses an example in which the shared memory is used for IPC communication to describe a manner of transferring a render tree across processes.

(a) An application writes a render tree to the shared memory.

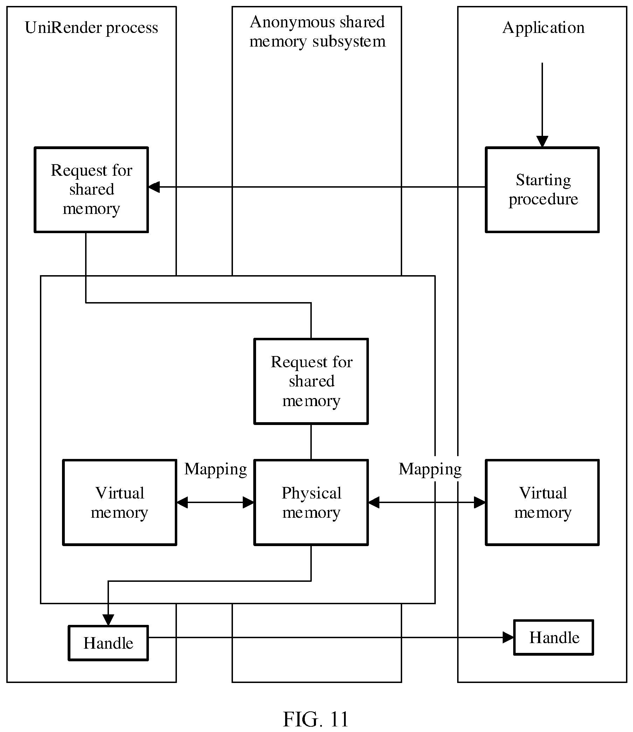

FIG. 11 is a schematic diagram of an example in which a render tree is transferred in shared memory according to an embodiment of this application.

As shown in FIG. 11, first, each time an application is started, the application requests for shared memory from a UniRender process. After receiving the request initiated by the application for the shared memory, the UniRender process requests for shared memory and a handle corresponding to the shared memory through an anonymous shared memory (Anonymous Shared Memory, Ashmem) subsystem.

After successfully requesting for the shared memory from the Ashmem subsystem, the UniRender process receives a handle returned by the Ashmem subsystem for reading and writing a physical memory. The UniRender process returns the handle to the application, so that the application may use the handle to write the render tree to the physical memory. The UniRender process may directly read the physical memory from process space of the UniRender process, and then directly read the render tree of the application.

The shared memory may be a virtual file created in a memory (RAM) by using a temporary file system (tmpfs), and is separately mapped to user space of different processes.

Binder communication may implement inter-process communication. For example, the application requests for the shared memory from the UniRender process, the UniRender process requests for the shared memory from the Ashmem subsystem, and the UniRender process returns, to the application, the handle corresponding to the shared memory obtained after the UniRender process requests for the shared memory.

It may be understood that the render tree stored in the stack of the application process may be transferred to the UniRender process in another IPC manner, for example, by using the shared memory. This is not limited herein.

Optionally, in some embodiments of this application, a whitelist is configured in a local configuration file of the electronic device or in a cloud server. The whitelist stores another identifier that may uniquely determine an application process, for example, a package name of an application. When the application is on the whitelist, the render tree is transferred to the UniRender process. When the application is not on the whitelist, UI thread software draws to obtain a bitmap or a render thread performs rendering to obtain a bitmap. Then, the bitmap is transferred to UniRender for composition by the process, or the bitmap is transferred to SurfaceFlinger. SurfaceFlinger composites the bitmap of the application that is not on the whitelist with the bitmap generated by the UniRender process.

Optionally, in some embodiments of this application, when the application has a plurality of layers, in other words, when the application generates a plurality of render trees, the application may request for two blocks of shared memory from the UniRender process. The pieces of shared memory are separately used to store different layers, in other words, storing data of different render trees.

Optionally, in some embodiments of this application, the application may request for the two blocks of shared memory from UniRender, to write the render trees into the two blocks of shared memory in an alternating manner. For example, if a render tree corresponding to an interface frame is written into a first block of shared memory, a render tree corresponding to a next interface frame is written into a second block of shared memory, and then a render tree corresponding to an interface frame following the next interface frame is written into the first block of shared memory. Therefore, a read-write conflict occurs. Consequently, data of the render tree fails to be written into the shared memory in time when there is only one block of shared memory.

(b) Storage data structure of a render tree in shared memory

To further improve IPC communication efficiency, in this embodiment of this application, a render tree is stored in shared memory in a form of a memory tree. The following describes an example of a data structure form in which the render tree is stored in the shared memory.

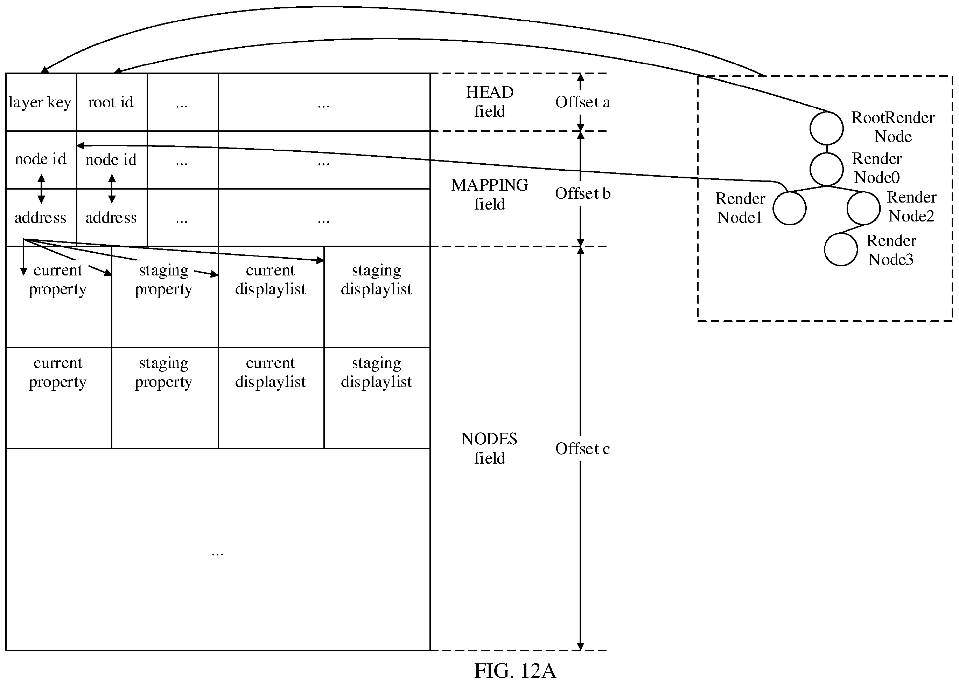

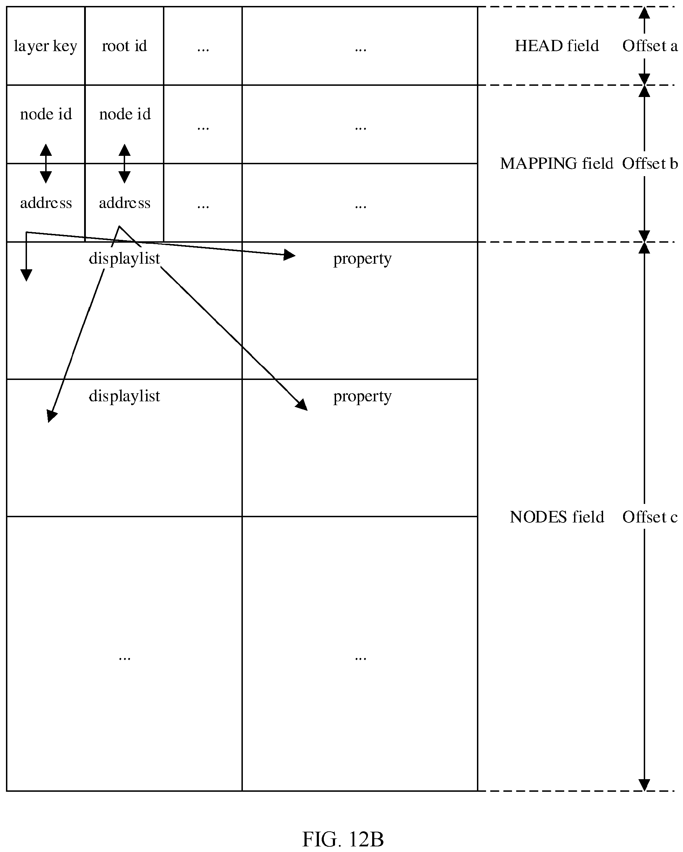

The memory tree may include a plurality of segments of data, and data of different segments separately stores layer information, rendering data, and the like. The following uses content shown in FIG. 12A and FIG. 12B as examples to describe a structure of the memory tree. Offsets of different segments of data in the shared memory may be fixed, or may not be fixed and adaptive.

FIG. 12A and FIG. 12B each are a schematic diagram of an example of a storage structure of a render tree in shared memory according to an embodiment of this application.

As shown in FIG. 12A, a storage structure of a render tree includes three segments of data: a HEAD field, a MAPPING field, and a NODES field.

The HEAD field includes a layerkey and a root id. The MAPPING field includes a nodeid and an address corresponding to the nodeid. The NODES field includes current properties, staging properties, a staging displaylist and a current displaylist.

The layerkey is an ID of a layer when a render tree as a whole is used as the layer. The root id is an ID of a root node of the render tree. The nodeid is an ID of a render node other than the root node of the render tree. One nodeid corresponds to one address. The address is a start address of renderproperties (renderproperties/properties) of the render node of the render tree and a displaylist (displaylist). The stagingproperties are renderproperties written by an application. The stagingdisplaylist is the displaylist written by the application. The currentproperties are render properties read by the UniRender process. The currentdisplaylist is the displaylist read by the UniRender process.

It should be noted that "staging properties and the staging displaylist" are considered as a first group of data, and "current properties and the current displaylist" are considered as a second group of data. In this case, data written in the application is the first group of data, and data written in the application next time is the second group of data. This implements a double buffering mechanism. Similarly, data read by the UniRender process is the first group of data, and data read next time is the second group of data.

Optionally, in some embodiments of this application, the storage structure of the render tree in the shared memory may be shown in FIG. 12B. The NODES field may include only one group of data, in other words, including only the render properties and the draw instruction list.

The layerkey is used to obtain, before the UniRender process reads the graphics layer data in the shared memory by using the handle, from a WMS, an application to be displayed and an ID of a layer that is of the application and that is used for layer composition. The UniRender process verifies the layer ID and a layer ID contained in the layerkey in the shared memory.

The root id is used as an entry of the render tree, and stores entries of other render nodes. After obtaining the root id, the UniRender process may read data of the render tree, and restore a nesting structure of the render tree.

The current properties, the staging properties, the staging displaylist, and the current displaylist are used to exchange, after the application writes the displaylist and the render properties, values of the current properties and the staging properties, and exchange values of the current displaylist and the staging displaylist. The UniRender process reads the render properties and the displaylist from the current properties and the current displaylist.

For example, the application 1 is an application displayed on the foreground. The application 1 may have a plurality of layers. In other words, after receiving a vertical synchronization signal (Vsync-APP), the application 1 generates a plurality of render trees, for example, the render tree 1 and the render tree 2. The UniRender process determines, by using the WMS, that a render tree corresponding to the layer for layer composition is the render tree 1.

Because the offsets of layerkey and the root id are fixed, the UniRender process may determine the address of the root node. The UniRender process finds the location of the root node on the NODES end in the MAPPING segment and reads a render instruction of the node. If there is a child node, a corresponding Draw Render Node instruction exists. An id of the child node is stored in the instruction. The location of the child node in the MAPPING segment is found based on a hash value. For example, a parent-child relationship between the render nodes of the render tree is stored in the DrawOP operation. For example, the displaylist of the render node 2 includes a plurality of DrawOP operations and an operation of "Draw RenderNode3" (draw rendernode 3), so that the UniRender process may determine that the render node 3 is a child node of the render node 2.

It may be understood that the render tree in the shared memory still stores a nesting relationship that is the same as the views of the application. Therefore, the UniRender process may read data from the root node, to read all data of the render tree.

The current properties, the staging properties, the staging displaylist and the current displaylist are divided, to ensure security of display data read by the UniRender process and data written by the application. In this way, the UniRender process does not read data halfway through a procedure in which the application writes data, and does not use the data as latest data for generating an interface of the application through rendering. To ensure security of simultaneous reading and writing of the render tree, refer to the following text descriptions in (2.3) about reading and writing of the render tree in the shared memory. Details are not described herein again.

Optionally, in some embodiments of this application, sizes of the three segments of data may be fixed. In other words, after the UniRender process requests for the shared memory from an Ashmem subsystem, a size of the obtained shared memory is (a+b+c). The HEAD field is filled at a location from a start address (a physical address) to a start address +a. The MAPPING field is filled at a location from a start address +a+1 to a start address +a+b. The NODES field is filled at a location from a start address +a+b+1 to a start address +a+b+c.

It may be understood that when sizes of the three segments of data are fixed, the UniRender process may determine a start of each segment of data based on the fixed offset, to find the Mapping segment. The Mapping segment stores an offset of the render node of the render tree in the NODES field, to find data of each render node.

Optionally, in some embodiments of this application, when the sizes of the three segments of data are fixed, and a size of a render node written by the application exceeds the size of b, the application requests for the second block of shared memory from the UniRender process. A format of the second block of shared memory may be the same as that of the first block of shared memory. A NODES field of the second block of shared memory continues to store the displaylist of the render node and the render properties of the render node. AHEAD field and/or a MAPPING field of the second block of shared memory may be null or may not exist. In other words, in some embodiments of this application, the second block of shared memory includes only the NODES field.

(c) UniRender reads the render tree in the shared memory

(c. 1) An architecture of UniRender

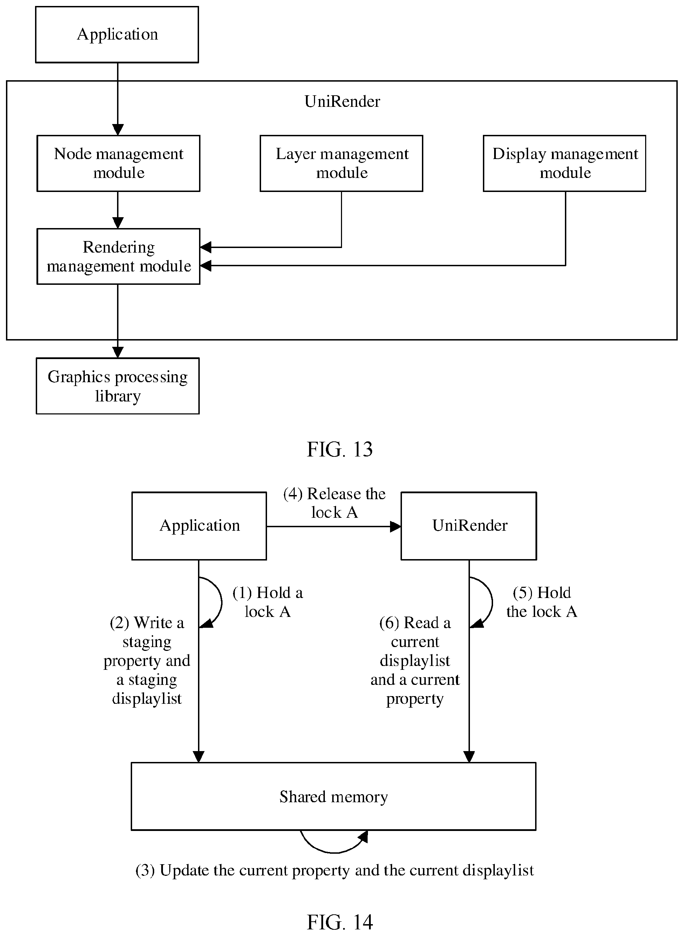

FIG. 13 is a schematic diagram of an example of an architecture of UniRender according to an embodiment of this application.

As shown in FIG. 13, UniRender provided in this application may include four parts: a NodeManager, a LayerManager, a DisplayManager and a UniRenderCore.

The NodeManager is a node management module in the UniRender process, and is responsible for receiving a render tree sent by an application, and the like. For composition of a target render tree, refer to the text descriptions in step S903.

The LayerManager is a layer management module in the UniRender process, and is responsible for synchronizing layer information by using the window manager service (Window Manager Service, WMS), for example, creating a layer, destroying a layer, and changing properties of a layer. One bitmap is equivalent to one layer.

The DisplayerManager is a display device management module in the UniRender process, and is responsible for synchronizing information of a display device by using a display manager service (Display Manager Service, DMS), for example, a screen size.

The UniRenderCore is a rendering management module in the UniRender process, and is responsible for establishing a corresponding render node for each layer, receiving render trees corresponding to different applications maintained in the NodeManager, making layer information of the application in the LayerManager into an instruction and inserting the instruction into the render node, merging render trees corresponding to all layers visible to the display device that is in an activated state and that is maintained in the DisplayManager, traversing a render tree obtained through merging for each display region, and generating a bitmap in a buffer allocated by UniRender.

(c.2) UniRender reads the render tree

The UniRender process first determines, by using the DMS and the WMS, applications displayed on all display regions. These applications are applications that participate in layer composition. The UniRender process may further determine, with reference to the whitelist, an application that participates in layer composition in the UniRender process. The UniRender process may determine a layer ID of each application by using the WMS.

The DisplayerManager in the UniRender process is responsible for communicating with the DMS, and the LayerManager in the UniRender process is responsible for communicating with the WMS.

Because the UniRender process stores the handle of the shared memory corresponding to the application, after determining the application that participates in layer composition, UniRender may determine, by using the handle, the shared memory corresponding to the application. UniRender reads the render tree from the shared memory by using the handle.

The NodeManager in the UniRender process is responsible for managing the handle of the shared memory, and reading the render tree from the shared memory.

A procedure in which the UniRender process reads the render tree from the shared memory includes:

First, the UniRender process reads the layerkey from the start address of the shared memory and verifies the layer ID. The UniRender process compares the layer ID determined by using the WMS with the layer ID determined by using the layerkey. After verifying that the layer IDs are consistent, the UniRender process reads the render tree based on the root id of the root node.

Second, after finding the address of the root node, the UniRender process determines a start address of the root node in the NODES field based on an address field in the MAPPING field, and starts to read a displaylist and render properties of the render node. If the root node has a child node, the displaylist of the root node stores an entry of the child node, for example, a DrawRenderNode instruction. Because the DrawRenderNode instruction includes an ID of a child node, the UniRender process finds a corresponding nodeid in the MAPPING segment through a hash operation, to determine locations of the displaylist and the render properties of the child node in the NODES segment, and read the displaylist and the render properties of the child node.

(d) Read and write the render tree in the shared memory

The render tree located in the shared memory may be read and written by two or more processes. To reduce and avoid errors in data of the render tree caused by a read-write conflict, a synchronized lock between processes may be configured to ensure read and write security of the render tree.

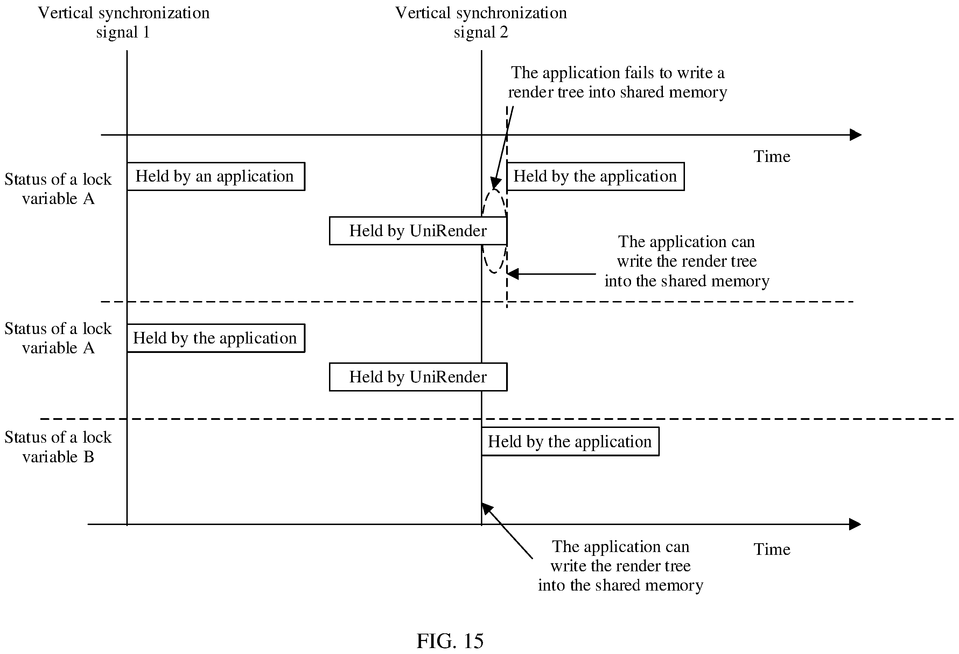

The following uses content shown in FIG. 14 and FIG. 15 as examples to describe procedures of reading and writing a render tree.

FIG. 14 is a schematic diagram of an example in which an application writes a render tree into shared memory according to an embodiment of this application.

Each application stores at least one lock variable A to prevent the application and UniRender from concurrently reading and writing the shared memory. UniRender obtains a lock variable state (being held or being released) on a different application through IPC communication.

As shown in FIG. 14, (1) first, when an application needs to update an interface, the application requests for a vertical synchronization signal (Vsync-APP) and receives the vertical synchronization signal. Then, the application obtains the lock variable A of shared memory corresponding to the application, and calculates and updates a property and displaylist of the render node.

(2) Second, the application writes an updated property and displaylist of the render node into the staging properties and staging displaylist data segments of a NODES segment in the shared memory, and adds an id of a changed render node to a properties_dirty queue and a displaylist_dirty queue. The queues are stored in the shared memory in a singleton pattern on the application side.

It may be understood that the changed render node is marked in the properties_dirty queue and the displaylist_dirty queue, so that a differential update may be performed on the render tree.

Optionally, in some embodiments of this application, the properties_dirty queue and the displaylist_dirty queue may not be stored, to perform a full update on the render tree.

(3) Then, the application copies a stagingproperties segment of a corresponding render node in the properties_dirty queue to the currentproperties segment. The application exchanges draw_pointer and record_pointer of the corresponding render node in the displaylist_dirty queue, in other words, copying the staging displaylist segment of the corresponding render node in the displaylist_dirty queue to the current displaylist. Alternatively, the application copies the staging displaylist segment to the current displaylist.

It may be understood that, compared with a previous vertical synchronization signal (Vsync-APP), in response to the current vertical synchronization signal (Vsync-APP), the application changes only data of the render node corresponding to the displaylist_dirty, and the application exchanges draw_pointer and record_pointer of the corresponding render node in the displaylist_dirty queue, to implement a differential update on the current displaylist.

It may be understood that the application copies the staging displaylist segment to the current displaylist, to implement the full update. In other words, all data that is of the render tree and that is generated by the application in response to the vertical synchronization signal (Vsync-APP) is directly written into the shared memory. This is simple to implement.

Optionally, in some embodiments of this application, when the properties_dirty queue and the displaylist_dirty queue are not stored, the application copies staging properties segments of all render nodes to the current properties segment, and copies the staging displaylist segments to the current displaylist segment. The copying may be implemented by changing a position of a pointer.

(4) Then, the application transfers, to the UniRender process through IPC communication, information that the lock variable A is released.

(5) Then, the UniRender process holds the lock variable A.

(6) Finally, corresponding to (3), the UniRender process reads the current displaylist and current properties from the shared memory, or reads the staging displaylist segment of the corresponding render node in the displaylist_dirty queue and copies the staging displaylist segment to the current displaylist.

After reading the data, the UniRender process may release the lock variable A and notify the application that the lock variable A is released. When the next vertical sync signal (Vsync-APP) arrives, the lock variable A is held and the render tree is written into the shared memory. In this case, the functions of the staging data segment and current data segment are exchanged. The UniRender process finally reads the staging displaylist and staging properties segments to implement the "double buffering" mechanism and ensure the robustness of interface generation.

Optionally, in some embodiments of this application, when there is one lock variable between the application and the UniRender process, the NODES field may include only the stagingdisplaylist and the stagingproperties, or include only the currentdisplaylist and the currentproperties. The application and the UniRender process implements read/write security by using the lock variable, so that the UniRender process reads a correct render tree.

Optionally, in some embodiments of this application, each application may hold more lock variables. For example, each application holds the lock variable A and a lock variable B. In this way, after the application releases the lock A, the application does not need to wait for UniRender to release the lock A. After holding the lock variable B, the application directly writes data of the render tree into the shared memory after receiving a next vertical synchronization signal (Vsync-APP).

Holding/releasing and inter-process synchronization of the lock variable B are the same as holding/releasing and inter-process synchronization of the lock variable A. For details, refer to the text descriptions in FIG. 14. Details are not described herein again.

FIG. 15 is a schematic diagram of another example in which an application writes a render tree into shared memory according to an embodiment of this application.

As shown in FIG. 15, when an application stores the lock variable A, after receiving a vertical synchronization signal 1 (Vsync-APP), the application holds the lock variable A, and writes a generated render tree into shared memory in a holding phase. After the application writes the render tree to the shared memory, the lock variable A is released. After determining that the lock variable A is released by the application, UniRender holds the lock variable A, and starts to read, from the shared memory, the render tree generated by the application in response to the vertical synchronization signal 1.

In a period in which the UniRender process holds the lock variable A, the application receives a vertical synchronization signal 2 (Vsync-APP) after the vertical synchronization signal 1. Because the lock variable A is held by the UniRender process, the application fails to write the render tree into the shared memory in time, and needs to wait for the application to determine that the UniRender process releases the lock A.

However, it is obvious in the content in FIG. 13 that the UniRender process reads the current displaylist field and the current properties field, while the application writes the staging displaylist field and the staging properties field. Different fields in the shared memory may be read and written concurrent by increasing the quantity of lock variables.

As shown in FIG. 15, when the application stores two lock variables B, after receiving the vertical synchronization signal 1 (Vsync-APP), the application holds the lock variables A, and writes the generated render tree into the shared memory in a holding phase. After the application writes the render tree to the shared memory, the lock variables A are released. After determining that the lock variables A are released by the application, the UniRender process holds the lock variables, and starts to read, from the shared memory, the render tree generated by the application in response to the vertical synchronization signal 1.

In a period in which the UniRender process holds the lock variables A, the application receives the vertical synchronization signal 2 (Vsync-APP) after the vertical synchronization signal 1. In this case, the application holds the lock variable B, and the application may write the render tree into the shared memory in time, and does not need to wait for the application to determine that the UniRender process releases the lock A.

Correspondingly, after determining that the lock variable B is released by the application, the UniRender process holds the lock variable B, and starts to read, from the shared memory, the render tree generated by the application in response to the vertical synchronization signal 2.

It should be noted that the quantity of lock variables held by the application may be related to content included in the NODES field in the shared memory, or may be related to a value of Vsync-offset.

For example, if the current displaylist and the current properties are considered as the first group and the staging displaylist and the staging properties are considered as the second group, two synchronization lock variables may be configured in both the application and the UniRender processes, to respectively correspond to the two groups of data. Similarly, for another example, if the NODES field includes three groups of data, three synchronization lock variables may be configured in both the application and UniRender.

One lock variable corresponds to one group of data. For example, if the lock variable A corresponds to the current displaylist and the current properties, a change of the lock variable A from the held state to the released state indicates that the application successfully updates the data of the current displaylist and the current properties in the shared memory, and that the data of the current displaylist and the current properties may be read by the UniRender process. Alternatively, the change of the lock variable A from the held state to the released state indicates that the UniRender process reads the data of the current displaylist and the current properties from the shared memory, and that the data of the current displaylist and the current properties may be updated by the application.

The quantity of lock variables may be related to the value of Vsync-offset.

In other words, the quantity of lock variables may be related to a difference Vsync-offset between the vertical synchronization signal (Vsync-APP) and the vertical synchronization signal (Vsync-UR). If the Vsync-offset is large, the lock variable may not be provided. If the lock variable is not provided, the UniRender process reads the render tree from the shared memory after receiving the vertical synchronization signal (Vsync-UR). Because the Vsync-offset is large, when the UniRender process reads the render tree, the application has completely written the render tree into the shared memory.

S903: Transfer window control information and display region information of the application.

The LayerManager in the UniRender process obtains the window control information of one or more applications from the window manager service, and further determines, with reference to the layer that is of the one or more applications and that is obtained in step S802, whether drawing logic for triggering off-screen rendering exists on the layer of any application.

The UniRender process may also obtain Z-order of layers of different applications. The Z-order is a Z-axis sequence between different layers.

The DisplayerManager in the UniRender process obtains the display region information from the display manager service. The display region information includes the size of the display device. The UniRender process determines a size of an allocated surface based on the display region information. The surface is used to carry the bitmap generated by UniRender based on the target render tree. For generation of the bitmap by the UniRender process based on the target render tree, refer to the text descriptions in step S905. Details are not described herein again.

An instruction related to off-screen rendering includes instructions such as rectangle rounding, scaling, transform, and colortransform. For a definition of off-screen rendering, refer to the foregoing text descriptions in (1.3) off-screen rendering. Details are not described herein again.

The following uses examples to describe drawing logic such as rectangle rounding, scaling, transform, and colortransform, for triggering off-screen rendering.

FIG. 16A-1 and FIG. 16A-2 to FIG. 16C each are a schematic diagram of an example of a scenario of drawing logic for triggering off-screen rendering according to an embodiment of this application.

In response to an interaction with a user, for example, a gesture for a bezel-less screen (for example, swiping upward from the bottom to the center of the screen) or tapping a multi-task control on a bottom navigation bar, an electronic device displays a multi-task interface, as shown in FIG. 16A-1 and FIG. 16A-2.

A size of a bitmap generated by a gallery application is the same as that of a screen. However, an interface of the gallery application in the multi-task interface shown in FIG. 16A-1 and FIG. 16A-2 is an interface obtained through scaling and rectangle rounding.

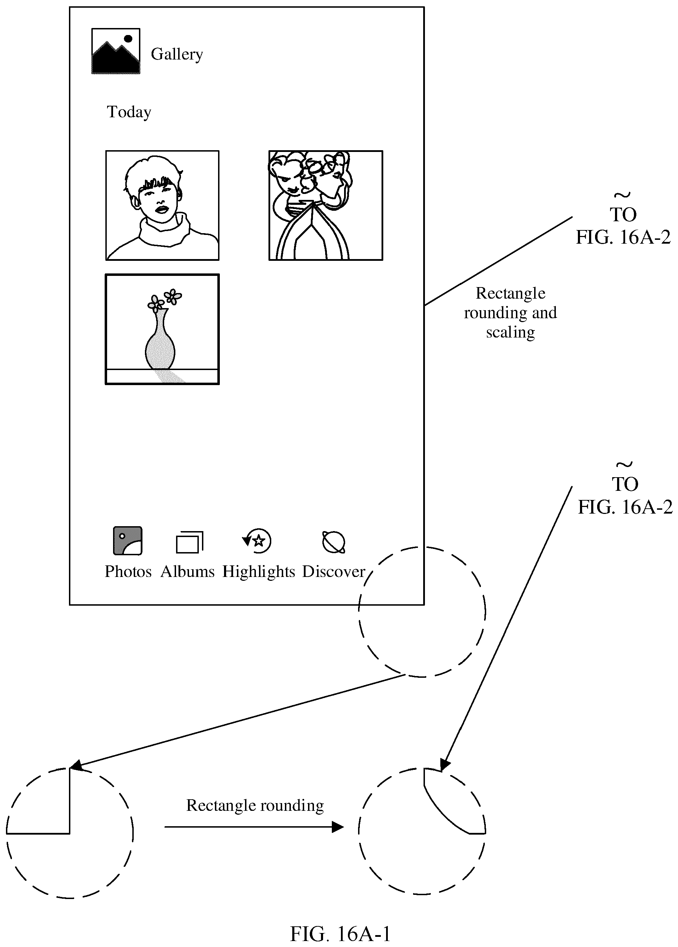

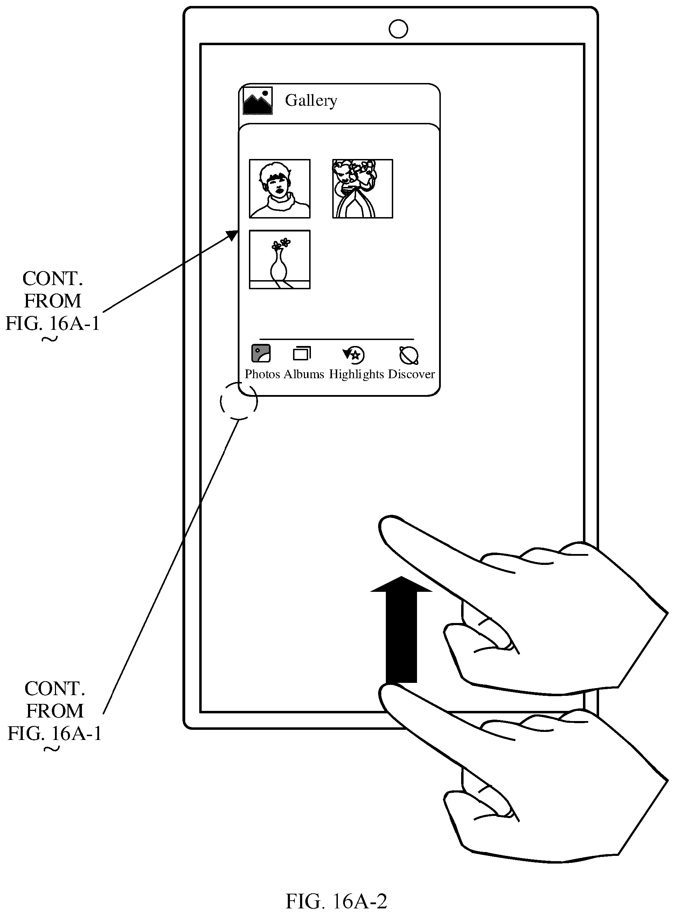

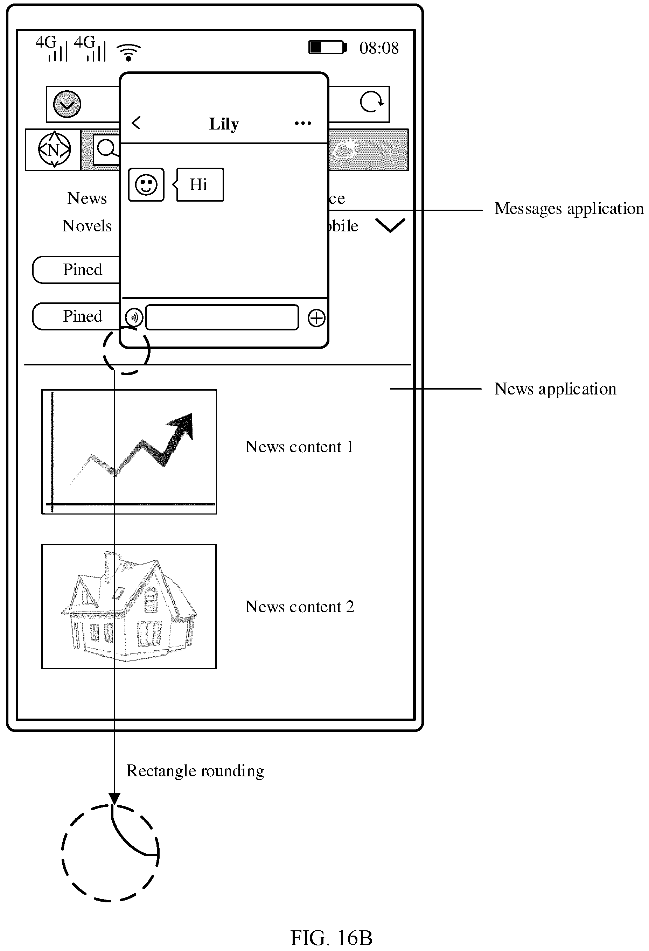

As shown in FIG. 16B, in a small window mode, an interface of the electronic device displays views of a plurality of applications. Interfaces of some applications are located in a floating window.

For example, an interface of a news application and an interface of a messages application are displayed on the interface of the electronic device. The interface of the messages application is located in a rendering floating window.

A size of a bitmap generated by the messages application is the same as that of the screen. However, in the small window mode shown in FIG. 16B, an interface of the messages application is an interface obtained through scaling and rectangle rounding.

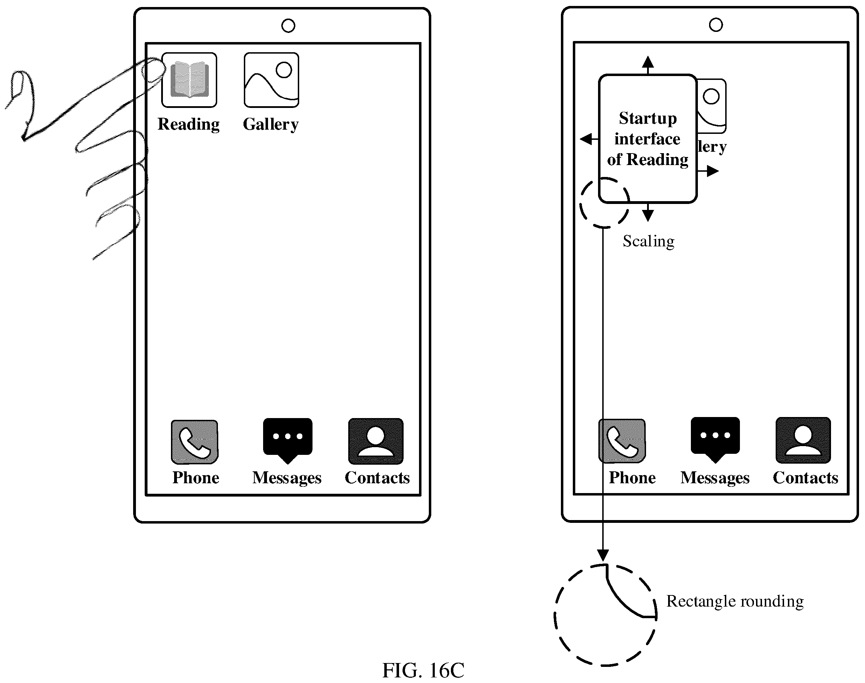

As shown in FIG. 16C, in response to tapping, by the user, an icon of a Reading application on a Launcher application, the electronic device starts the Reading application. In a procedure of starting the Reading application, a main interface (an interface corresponding to a Main Activity) or a startingwindow (startingwindow) of the Reading application is continuously scaled up.

A bitmap corresponding to the main interface of the Reading application or the starting window is of the same size as the screen, and is continuously scaled up by adjusting a scale ratio. Then, the main interface of the Reading application or the bitmap corresponding to the stating window is a bitmap obtained through rectangle rounding, and the bitmap obtained through rectangle rounding is displayed on the interface of the electronic device.

It may be understood that in the scenarios shown in FIG. 16A-1 and FIG. 16A-2 to FIG. 16C and other scenarios, an interface that better conforms to a visual habit of the user needs to be generated through rectangle rounding, scaling, transform, and colortransform. This improves user experience.

It should be noted that in the scenarios shown in FIG. 16A-1 and FIG. 16A-2 to FIG. 16C and other scenarios, the UniRender process receives window control information at a layer of each application from the window manager service, to determine whether rectangle rounding, scaling, transform, and colortransform need to be performed on the layer of each application.

Optionally, in some embodiments of this application, the UniRender process may first obtain window control information of one or more applications from the window manager service, and then obtain render trees of the one or more applications. In other words, step S902 may be performed before or after step S903.

S904: Generate the target render tree based on obtained render trees, the window control information, and the display region information.

First, after receiving the render trees generated by the one or more applications, the UniRender process responds to the received vertical synchronization signal and the window control information, and then determines, based on the window control information, whether logic for triggering off-screen rendering exists at the layer of each application.

When the application is displayed on a display region of a local electronic device, the window control information may come from the local window manager service. When the application is displayed on a display region of another electronic device, the window control information may come from a window manager service of a peer electronic device.

If the UniRender process determines that logic for triggering off-screen rendering exists at a layer of any application, the UniRender process converts logic for triggering off-screen rendering into an off-screen rendering instruction, and converts the off-screen rendering instruction into a property of a render node of a corresponding render tree. For ease of description, a procedure in which the UniRender process converts logic for triggering off-screen rendering into the off-screen rendering instruction, and converts the off-screen rendering instruction into the property of the render node of the corresponding render tree may be referred to as moving forward the off-screen rendering instruction.

Then, after moving forward an instruction for triggering off-screen rendering for the one or more render trees, the UniRender process merges, for each display region (display), render trees corresponding to visible layers of each display region, to generate a target render tree. In other words, the quantity of target render trees may be related to a quantity of display regions.

After receiving the vertical synchronization signal (Vsync-UR), the UniRender process may start to read the render trees from the shared memory. After obtaining the plurality of render trees, the UniRender process moves forward the off-screen rendering instruction and merges the render trees. Alternatively, the UniRender process may start to read the render trees from the shared memory when holding the lock variable, and start to move forward the off-screen rendering instruction and merge the render trees when receiving the vertical synchronization signal (Vsync-UR).

The following separately describes a procedure of moving forward an instruction for triggering off-screen rendering and a procedure of generating the target render tree.

(a) Procedure of moving forward an instruction for triggering off-screen rendering

First, the UniRender process obtains the window control information at the layer of each application, and determines whether the window control information at the layer includes drawing logic for triggering off-screen rendering. When the UniRender process determines that the window control information at layers of all applications in one display region does not include the drawing logic for triggering off-screen rendering, the UniRender process may directly merge one or more render trees into the target render tree. When the UniRender process determines that the window control information at the layer of any application in the display region includes the drawing logic for triggering off-screen rendering, the UniRender process first moves forward an instruction for triggering off-screen rendering, and then merges the plurality of renders trees into the target render tree.

The procedure of moving forward an instruction for triggering off-screen rendering is as follows.

The UniRender process first determines, based on the window control information, drawing logic for triggering off-screen rendering, and converts the drawing logic for triggering off-screen rendering into an instruction that may be configured in a render property of a render node (or referred to as making drawing logic an instruction). After determining a binding relationship between the layer and the render tree, the UniRender process updates the off-screen rendering instruction, and stores an updated off-screen rendering instruction in the render property of the corresponding render node.

When the render property of the render node includes a corresponding scaling property (scale), a roundrect property (roundrect), a colortransform property (colortransform), and a transform property (transform), parameters of a scaling instruction, a roundrect instruction, a colortransform instruction, and a transform instruction that trigger off-screen rendering are assigned to the scaling property, the roundrect property, the colortransform property, and the transform property in the properties of the render node. When the render property of the render node does not include a corresponding scaling property, a roundrect property, a colortransform property, or a transform property, the scaling property, the roundrect property, the colortransform property, and the transform property are added to the render node, and parameters of a scaling instruction, a roundrect instruction, a colortransform instruction, and a transform instruction that trigger off-screen rendering are assigned to the scaling property, the roundrect property, the colortransform property, and the transform property in the properties of the render node

FIG. 17A and FIG. 17B each are a schematic diagram of an example in which UniRender moves forward an instruction for triggering off-screen rendering according to an embodiment of this application.

As shown in FIG. 17A, after the UI threads of the application 1 and the application 2 independently generate render trees and independently transfer the render trees to the UniRender process through IPC communication, the UniRender process determines, by using the window manager service, an instruction for triggering off-screen rendering for the layer of each application. A render tree generated by the application 1 is the render tree 1, and a render tree generated by the application 2 is the render tree 2.

UniRender independently updates properties of render nodes in different render trees. In other words, the UniRender process updates properties of render nodes of the render tree 1, and UniRender updates properties of render nodes of the render tree 2.

If the instruction for triggering off-screen rendering is applied to the entire layer, the UniRender process assigns parameters of an off-screen rendering instruction to a root node of a render tree corresponding to the layer, or directly assigns the parameters to all render nodes of the render tree.

When the UniRender process assigns the parameters of the off-screen rendering instruction to the root node of the render tree corresponding to the layer, when the UniRender process generates a bitmap based on the render tree, UniRender automatically configures the properties of the render node to the render properties of a child node of the root node.

For example, the child node of the render node 1 is the render node 2. After the transform property (transform) is provided for the render property of the render node 1, when the UniRender process generates the render tree, the same transform property (transform) is provided for the render property of the RenderNode2.

As shown in FIG. 17B, before the off-screen rendering instruction is moved forward, SurfaceFlinger needs to process the bitmaps of different applications in different manners based on the window control information after receiving the bitmaps corresponding to the render trees generated by the applications, to complete layer composition

After moving forward the off-screen rendering instruction for the render trees of the applications, the UniRender process assigns the parameters of the off-screen rendering instruction to the render properties of the render trees. In this way, in a procedure of generating the bitmaps based on the render trees, drawing is performed directly on the canvas to obtain converted bitmaps. Because the bitmaps of different applications do not need to be processed in different manners, the bitmaps of different applications may be drawn on one on-screenbuffer.

The UniRender process assigns the parameters of the off-screen rendering instruction to the render properties of the render tree, as shown in FIG. 18.

FIG. 18 is a schematic diagram of an example in which UniRender modifies a property of a render node of a render tree according to an embodiment of this application.

As shown in FIG. 18, the UniRender process modifies the properties of the root node of the render tree, and adds an instruction, to increase the properties of the render nodes. An instruction corresponding to the scaling property is setScale(), an instruction corresponding to the roundrect property outline().setRoundRect(), an instruction corresponding to the colortransform property is setColorFilter(), an instruction corresponding to the transform property is setLeftTopRightBottom().

In the following step S905, when generating the bitmap based on the render tree, the UniRender process modifies, based on the render properties, the draw operation in the displaylist based on the render properties, and further generates the bitmap obtained through scaling, rectangle rounding, colortransform, and transform. For details, refer to the text descriptions in step S905. Details are not described herein again.

Optionally, in some embodiments of this application, the instruction with the properties of the root node of the render tree may further include an instruction setStaticMatrix() or the like. Because the UI thread of the application generates the render tree based on the surface requested from SurfaceFlinger, to change a frame of reference when UniRender generates the bitmap based on the render tree in step S905, in a procedure of moving forward an instruction for triggering off-screen rendering, an instruction setStaticMatrix() is provided for the root node of the render tree. For specific content of the instruction setStaticMatrix(), refer to the text descriptions in step S905 in the following. Details are not described herein again.

(b) The procedure of generating the target render tree

The UniRender process obtains one or more processed render trees after moving forward the off-screen rendering instruction for all render trees.

When there is one processed render tree, the processed render tree is the target render tree. When there is more than one processed render tree, the plurality of processed render trees are merged into one target render tree.

FIG. 19 is a schematic diagram of an example in which a plurality of render trees obtained after a plurality of off-screen rendering instructions are moved forward are merged into one target render tree according to an embodiment of this application.

As shown in FIG. 19, the UniRender process may create a new root render node, for example, the new root render node in FIG. 19, and use processed render trees of the plurality of applications as child nodes of the root render node. In other words, the root render node may store a parent-child relationship between processed render trees of different applications, so that the UniRender process may traverse the target render tree from the root render node to find processed render trees of different applications.

FIG. 20 is a schematic diagram of an example in which a plurality of render trees obtained after a plurality of off-screen rendering instructions are moved forward are merged into one target render tree according to an embodiment of this application.

The UniRender process may first determine, based on the window manager service, Z-order of layers corresponding to different applications, in other words, determining a top-down covering relationship between layers of the applications. Further, in the procedure of generating the target render tree, a render node corresponding to a completely covered view is deleted, to reduce a calculation volume in the procedure of generating the bitmap in step S905, and improve a bitmap generation speed.

For example, as shown in FIG. 20, a layer corresponding to the render tree generated by the application 1 is the layer 1, and a layer corresponding to the render tree generated by the application 2 is the layer 2. The Z-order of the layer 1 is higher than the Z-order of the layer 2. A render tree corresponding to the layer 1 includes a root render node 1, the render node 1, the render node 2, and the render node 3. The render node 1 and the render node 2 are child render nodes of the root render node 1, and the render node 3 is a child render node of the render node 2. A render tree corresponding to the layer 2 is a root render node 2, a render node 4, a render node 5, and a render node 6. The render node 4 and the render node 5 are child render nodes of the new root render node, and the render node 6 is a child render node of the render node 5.

The UniRender process may traverse render child nodes of the render tree corresponding to the layer 1 and render child nodes of the render tree corresponding to the layer 2, to determine a location about where a view corresponding to each render node is located on a surface (a surface allocated by the UniRender process), and may determine, with reference to the Z order of the layer 1 and the Z order of the layer 2, a completely covered view and a render node of the completely covered view.

For example, UniRender may determine that a view corresponding to the render node 6 of the render tree corresponding to the layer 2 is completely covered, and further delete the render node 6.

After deleting the render node corresponding to the completely covered view, the UniRender process may merge, based on content shown in FIG. 18, render trees obtained after moving forward all instructions for triggering off-screen rendering into the target render tree.

Optionally, in some embodiments of this application, UniRender may further traverse the render nodes, and optimize the parameters of the target render tree based on granularity of a draw operation DrawOP. For example, the draw operation DrawOP that does not affect the interface is deleted. That the draw operation DrawOP that does not affect the interface means that a graph drawn by the draw operation DrawOP is not displayed on the interface. For another example, for different applications, a location about where the DrawOP operation is located on a drawing node is modified, so that draw operation DrawOPs of a same type may be executed together. For example, a draw operation DrawOP of the render node 2 of the application 1 is modified, so that the draw operation is stored in a displaylist of the render node 1 of the application 2. This is not limited herein.

Optionally, in some embodiments of this application, render trees obtained after moving forward the plurality of instructions for triggering off-screen rendering may alternatively be merged into one target render tree based on content shown in FIG. 18. Then, a completely covered view is determined, and a render node corresponding to the completely covered view is deleted. The target render tree is generated.

Optionally, in some embodiments of this application, for a partially covered view, a render node corresponding to the view may also be clipped based on a clip instruction. The clipping may be performed before obtaining the target render tree through merging, or may be performed after obtaining the target render tree through merging.

Optionally, in some embodiments of this application, after step S904 and before step S905, after generating the target render tree, the UniRender process decapsulates the displaylist of the Render Node to obtain a series of DrawOPs. Then, batching (Batch) and merging (Merge) are performed on the DrawOP operations for the target render tree as a whole. In step S805, a target render tree which may generate a bitmap with a less calculation volume is obtained.

It may be understood that in the scenarios shown in FIG. 16A-1 and FIG. 16A-2 and FIG. 16B and other scenarios, the plurality of render trees are merged and a render tree obtained through merging is optimized, to avoid or reduce overdraw. This improves a bitmap generation speed in S905, reduces power consumption of the electronic device, and improves user experience.

It should be noted that the UniRender process may further optimize another parameter of the target render tree in a procedure of generating the target render tree. This is not limited herein.

S905: Generate a bitmap based on the target render tree.

After obtaining the target render tree, the UniRender process allocates one surface to the target render tree, and the UniRender process generates a bitmap on the surface based on the target render tree. The bitmap corresponds to an interface that is obtained through composition and that is of one or more applications.

When the electronic device has a plurality of display regions, the surface may be bound to one of the display regions, and a size of the surface may be the same as that of the display region to which the surface is bound.

That the UniRender process generates a bitmap on the surface based on the target render tree includes: First, the UniRender process traverses the target render tree from the root node, and the UniRender process may traverse a child node of the root node in a plurality of manners.

The UniRender process may traverse different layers of the root node in the Z order of the layers. The UniRender process may traverse different layers in descending Z-order, or may traverse different layers in ascending Z-order.

For example, in the target render tree shown in FIG. 20, the Z-order of the layer 1 is higher than the Z-order of the layer 2. In this case, the UniRender process may first traverse the render tree corresponding to the layer 1. In other words, the UniRender process first traverses the render tree including the root render node 1, the render node 1, the render node 2, and the render node 3, and then traverses the render tree including the root render node 2, the render node 4, and the render node 5. Similarly, the UniRender process may first traverse the render tree corresponding to the layer 2, and then traverse the render tree corresponding to the layer 1.

It should be noted that when the UniRender process traverses the layers in the descending Z-order, when the UniRender process executes the draw operation in the displaylist, when the layers are composited based on a front-to-back covering relationship, drawing may be performed only on a part on which no drawing is performed. This reduces overdraw.

It should be noted that, when the UniRender process traverses the layers in the ascending Z-order, the UniRender process sequentially executes draw operation in the displaylists in the render trees corresponding to different layers, to generate the bitmaps.

Second, the UniRender process modifies the draw operation in the displaylist based on the render properties, and executes the draw operation, to further generate the bitmaps.

When the UniRender process traverses each render node, the UniRender process first reads the render properties of the render node. When the render properties include the scaling property, the roundrect property, the colortransform property, and the transform property, the UniRender process modifies the parameters of the draw operation in the displaylist based on the properties, and then performs the draw operation in the modified displaylist. If the render properties do not include the scaling property, the roundrect property, the colortransform property, and the transform property, UniRender directly executes the draw operation in the displaylist.

The following uses an example to describe a method for the UniRender process to modify the parameters of the draw operation in the displaylist based on the render properties.

For example, the render properties of the render node include setscale (0.5). setscale (0.5) indicates scaling down to 0.5 of the original size and the displaylist includes drawCircle (x0, y0, 5). When the UniRender process executes the operation drawCircle (x0, y0, 5), the draw operation is changed to drawCircle (x0, y0, 2.5). In drawCircle(), the first parameter is the coordinate of a circle center on an X axis, the second parameter is the coordinate of the circle center on a Y axis, and the third parameter is a radius of the circle.

Because the displaylist generated by the UI thread of the application may be related to the size of the surface requested by the application, in this embodiment of this application, when traversing the nodes of the render tree, the UniRender process configures setStaticMatrix () in the properties of the render mode and transforms the reference coordinate system for drawing and rendering.

The UniRender process may determine, by using the WMS, the reference coordinate system or a size of a reference surface when each application generates a displaylist, and further determine a parameter of setStaticMatrix().

FIG. 21 is a schematic diagram of an example of setStaticMatrix() according to an embodiment of this application.

After determining the surface coordinate system referenced by the displaylist generated by the application, the UniRender process determines a coordinate transformation matrix Transformation based on the coordinate system of the surface held by the UniRender process.

$$\text{Transformation} = \begin{bmatrix} scale_x & skew_x & translate_x \\ skew_y & scale_y & translate_y \\ 0 & 0 & 1 \end{bmatrix}$$

$scale_x$ is scaling in an x-axis direction, $skew_x$ is twist/tilt in the x-axis direction, and $translate_x$ is a translation movement in the x-axis direction. $scale_y$ is scaling in a y-axis direction, $skew_y$ is twist/tilt in the y-axis direction, and $translate_y$ is a translation movement in the y-axis direction.

After executing the setStaticMatrix() instruction, the UniRender process calculates a coordinate transformation matrix Transformation and applies the transformation matrix to each draw operation in the displaylist. As shown in FIG. 21, a coordinate system referenced when the tree is generated by the application UI thread is not a coordinate system on the surface held by the UniRender process, and the UniRender process determines the coordinate transformation matrix Transformation by using the setStaticMatrix () instruction, and changes a reference coordinate system when an interface is drawn on the surface based on the displaylist, to draw the interface correctly.

The foregoing mainly describes a specific procedure in which the electronic device implements the interface generation method provided in embodiments of this application in a scenario of a single display region. The following mainly describes a specific procedure in which an electronic device implements the interface generation method provided in embodiments of this application in a scenario of multiple display regions.

(2.3) Interface generation method in the scenario of multiple display regions

First, an example is used to describe the scenario of multiple display regions.

(a) Scenario of multiple display regions

In embodiments of this application, the display region (display) may be a screen, or may be a virtual display (VirtualDisplay), or the like. The virtual display may be a region that is of the electronic device and that carries content displayed on the screen during screen recording.

FIG. 22A to FIG. 22C each are a schematic diagram of an example of a scenario of multiple display regions according to an embodiment of this application.

When a plurality of screens are provided for an electronic device, each screen is a display region. As shown in FIG. 22A, a home screen of the electronic device is used as a display region 1 to display a Launcher application, and a secondary screen of the electronic device is used as a display region 2 to display a music application.

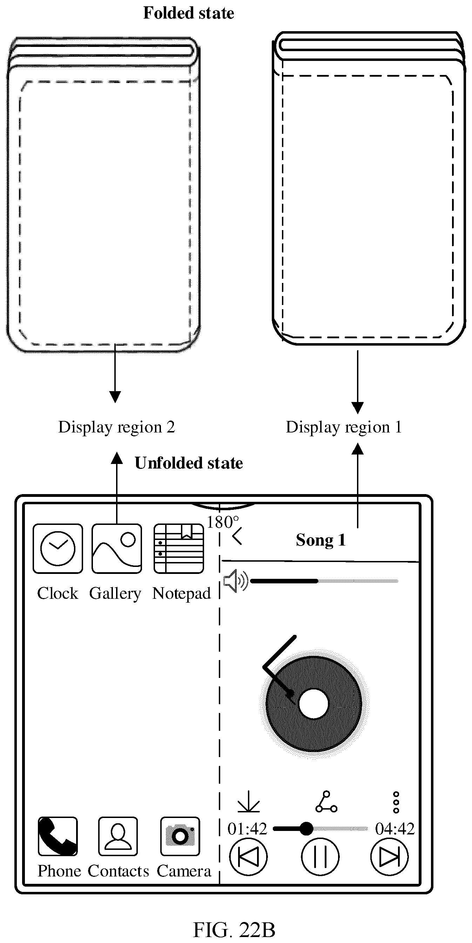

A screen of an electronic device may have a plurality of states, and the screen in each state may be one or more display regions. As shown in FIG. 22B, when the screen of the electronic device is in a folded state, each part of the screen may be a display region. When the screen of the electronic device is in an unfolded state, each of the left half of the screen and the right half of the screen is a display region.

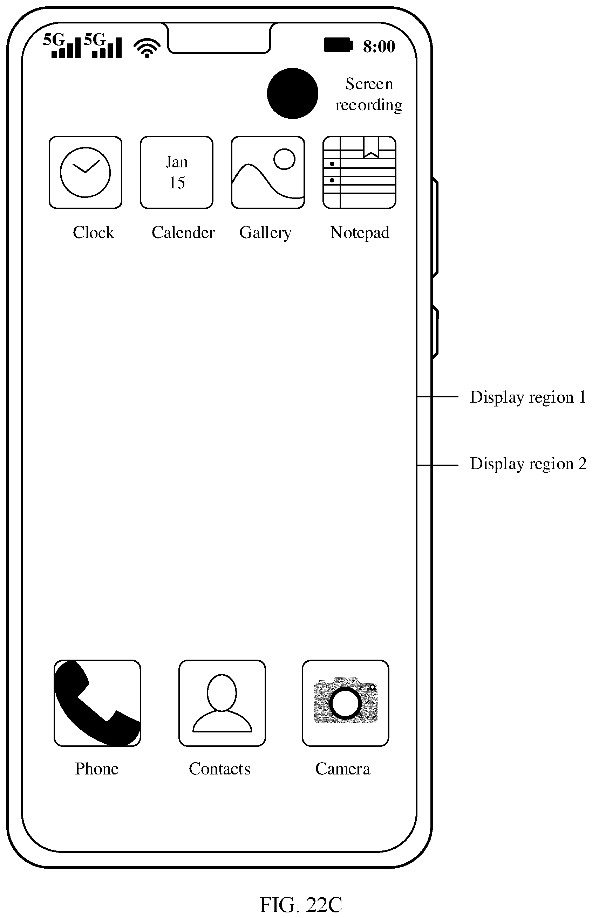

As shown in FIG. 22C, when a screen recording function is enabled, a screen of an electronic device is a display region, and a virtual screen carrying content of screen recording is a display region. Content displayed on the two display regions may be the same.

FIG. 23A-1 and FIG. 23A-2 to FIG. 23C each are a schematic diagram of another example of a scenario of multiple display regions according to an embodiment of this application.

As shown in FIG. 23A-1 and FIG. 23A-2, the electronic device 1 shares content displayed on the screen to a screen of an electronic device 2. In this case, for the electronic device 1, the screen of the electronic device 1 is a display region 1, and the screen of the electronic device 2 is a display region 2. Content displayed on the screen of the electronic device 2 includes the content on the screen of the electronic device 1.

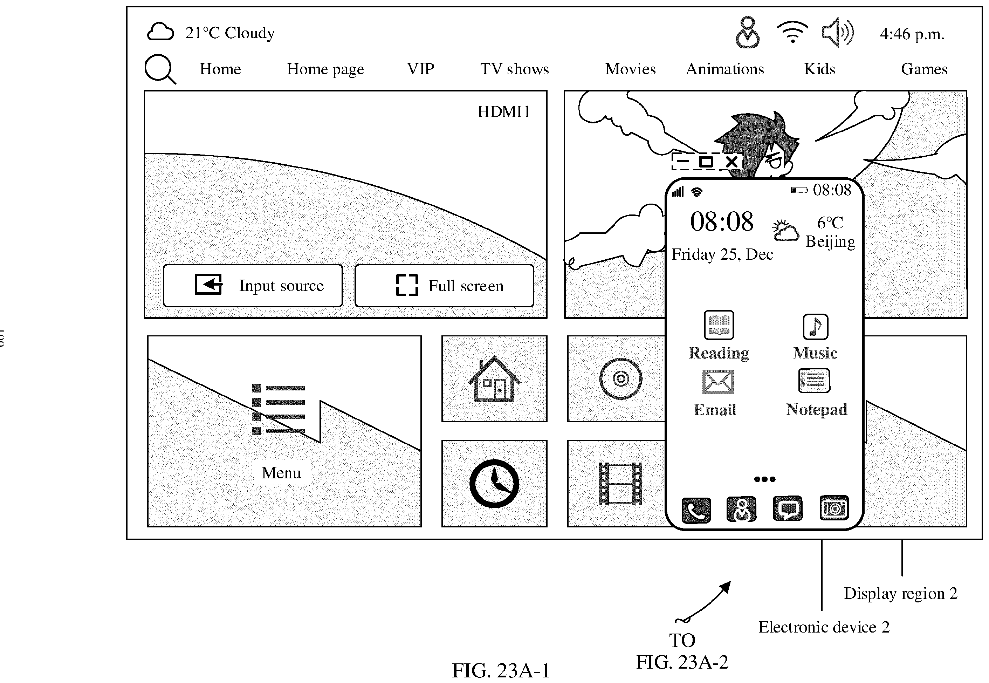

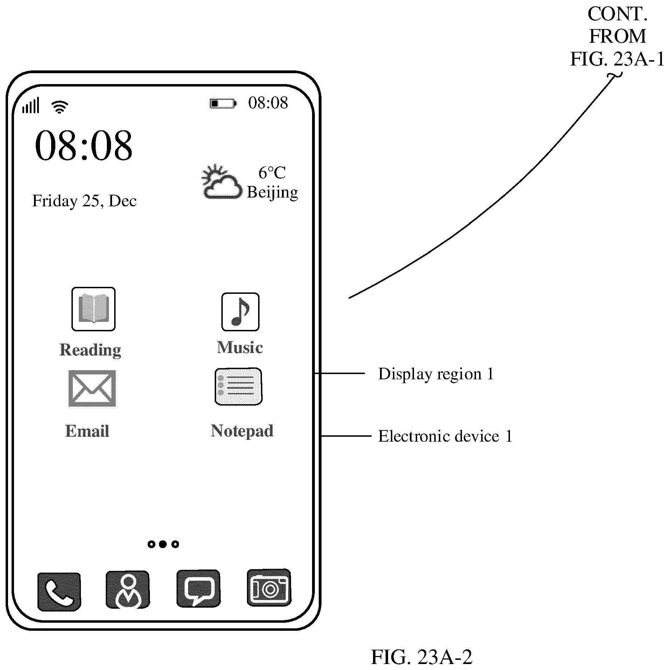

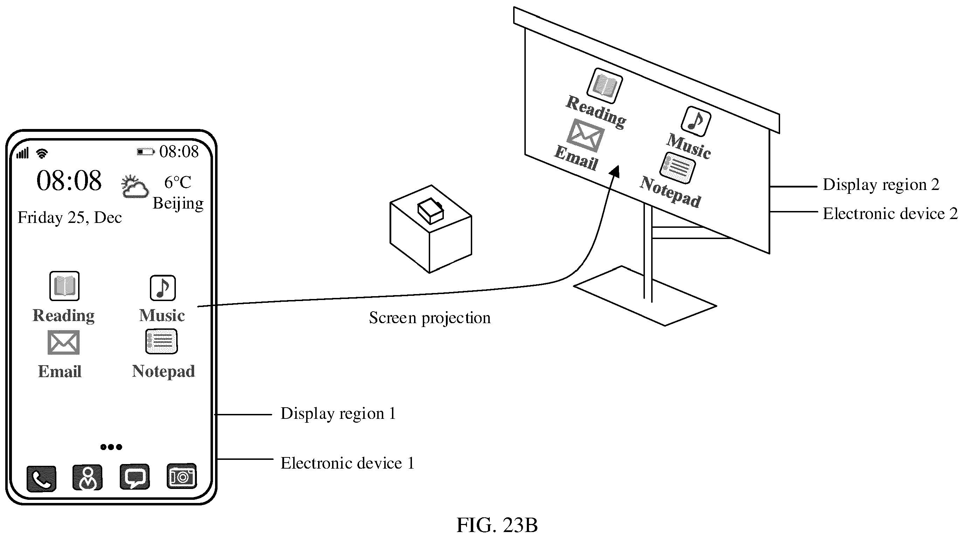

As shown in FIG. 23B, the electronic device 1 projects the content displayed on the screen onto the screen of the electronic device 2. In this case, for the electronic device 1, the screen of the electronic device 1 is the display region 1, and the screen of the electronic device 2 is the display region 2. Different from the content shown in FIG. 23A-1 and FIG. 23A-2, content displayed on the screen of the electronic device 2 is only the content on the screen of the electronic device 1.

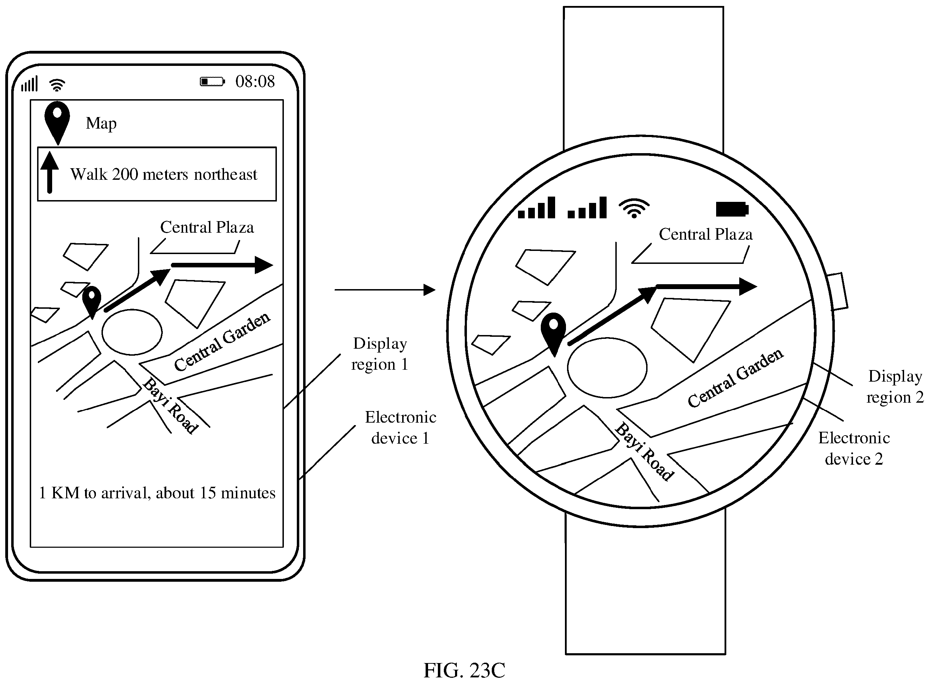

As shown in FIG. 23C, the electronic device 1 projects the content displayed on the screen onto the screen of the electronic device 2. In this case, for the electronic device 1, the screen of the electronic device 1 is the display region 1, and the screen of the electronic device 2 is the display region 2. Different from the content shown in FIG. 23A-1 and FIG. 23A-2 and the content shown in FIG. 23B, content displayed on the screen of the electronic device 2 is a part of the content on the screen of the electronic device 1.

It should be noted that in the scenario of multiple display regions and in a case of a plurality of electronic devices, for example, the electronic device 1 has the display region 1 and the electronic device 2 has the display region 2. The display region 2 may display only the content displayed on the screen of the electronic device 1, or the display region 2 may display content obtained after a part of or all of the content displayed on the screen of the electronic device 1 is superimposed on the content originally displayed on the screen of the electronic device 2.

(b) Interface generation method in the scenario of a single device with multiple display regions

FIG. 24 is a schematic diagram of another example of an interface generation method according to an embodiment of this application.

As shown in FIG. 24, an interface generation method in a scenario of a single device with multiple display regions includes the following steps.

S2401: Construct and generate a render tree after receiving a vertical signal.

For specific content, refer to the corresponding text descriptions in step S901 in FIG. 9. Details are not described herein again.

S2402: Transfer render trees across processes.

For specific content, refer to the corresponding text descriptions in step S902 in FIG. 9. Details are not described herein again.

Optionally, in some embodiments of this application, a child process DisplayRender may directly obtain the render tree through IPC communication from a corresponding application. The UniRender process determines a correspondence between the child process DisplayRender and the application.

Optionally, in some embodiments of this application, a shared memory set including a plurality of pieces of shared memory may exist for all child processes DisplayRenders and all applications. Each child process DisplayRender holds handles of the plurality of pieces of shared memory.

For a concept of the child process DisplayRender, refer to the corresponding text descriptions in step S2404. Details are not described herein.

S2403: Transfer window control information and display region information of the application.

For specific content, refer to the corresponding text descriptions in step S903 in FIG. 9. Details are not described herein again.

S2404: Allocate the render trees.

The UniRender process may create child processes DisplayRender (DisplayRender1 to DisplayRenderN in FIG. 24) of the same quantity as display regions, and transfer a render tree of an application displayed on a display region to the DisplayRender.

For example, the application 1 and the application 2 are displayed on the display region 1, and the display region 1 corresponds to the child process DisplayRenderl. The application 3 and the application 4 are displayed on the display region 2, and the display region 2 corresponds to the child process DisplayRender2. Then, the UniRender process transfers a render tree of the application 1 and a render tree of the application 2 to the child process DisplayRender1, and transfers a render tree of the application 3 and a render tree of the application 4 to the child process DisplayRender2.

The DisplayRender1 and the DisplayRender2 may obtain the handles of the shared memory of the corresponding applications from the UniRender process, to further obtain the render trees of the corresponding applications. Alternatively, the render trees of the applications are obtained from the UniRender process in another IPC communication manner such as Binder. This is not limited herein.

Optionally, in some embodiments of this application, the UniRender process may first merge render trees of a plurality of applications into a target render tree, and then transfer the target render tree to a corresponding child process DisplayRender. The target render tree may be transferred in a plurality of IPC communication manners such as shared memory or Binder. This is not limited herein.

Optionally, in some embodiments of this application, the UniRender process may move forward an off-screen rendering instruction for the render trees, and then transfer the off-screen rendering instruction to a corresponding child process DisplayRender. Alternatively, window control information and render trees of applications on a corresponding display region may be transferred to a corresponding child process DisplayRender, and the child process DisplayRender moves forward the off-screen rendering instruction for the render trees, and merges a plurality of render trees into the target render tree.

Optionally, in some embodiments of this application, two threads, for example, an I/O thread and a render thread, may be provided for the child process DisplayRender. The I/O thread is responsible for receiving a render tree, and the render thread is responsible for generating a target render tree, and generating a bitmap based on the target render tree.

It may be understood that the UniRender process performs frequency division or frequency multiplication on a vertical synchronization signal (Vsync-UR) by creating a plurality of child processes DisplayRenders. The vertical synchronization signal (Vsync-UR) obtained through frequency division or frequency multiplication is transferred to different child processes DisplayRenders, so that different child processes DisplayRenders generate bitmaps at different frequencies to match refresh frequencies of different display regions.

FIG. 25 is a schematic diagram of an example in which a UniRender process performs frequency division or frequency multiplication on a vertical synchronization signal according to an embodiment of this application.

As shown in FIG. 25, when refresh frequencies of display regions corresponding to different child processes DisplayRenders are different, UniRender may perform frequency division or frequency multiplication on a vertical synchronization signal (Vsync-UR), to further forward the vertical synchronization signal to different child processes DisplayRenders.

For example, a refresh frequency of the display region 1 is 60 Hz, a refresh frequency of the display region 2 is 30 Hz, a child process DisplayRender corresponding to the display region 1 is DisplayRenderl, and a child process DisplayRender corresponding to the display region 2 is DisplayRender2. After the UniRender process receives the 60 Hz vertical synchronization signal (Vsync), or after the UniRender process generates the 60 Hz vertical synchronization signal (Vsync), frequency division is performed to obtain a 30 Hz vertical synchronization signal (Vsync-UR) and a 60 Hz vertical synchronization signal (Vsync-UR). The 60 Hz vertical synchronization signal (Vsync-UR) is transferred to the child process DisplayRender1, and the 30 Hz vertical synchronization signal (Vsync-UR) is transferred to the child process DisplayRender2.

It may be understood that frequency division or frequency multiplication is performed on the vertical synchronization signal (Vsync-UR), so that a frequency at which the DisplayUniRender process receives the render tree or the target render tree and a frequency at which the bitmap is generated may be consistent with a refresh frequency of the display region.

After receiving the vertical synchronization signal (Vsync-UR), the child process DisplayRender may start to read the render tree, generate the target render tree, and generate the bitmap.

It should be noted that the UniRender process receives display region information sent by a display manager service, determines a connection status of each display region, and may further create or destroy the DisplayRender process corresponding to each display region based on the connection status of the display region.

For the architecture of UniRender and the concept of the shared memory, refer to the text descriptions in step S904. Details are not described herein again.

S2405: Generate the target render tree based on the obtained render trees, the window control information, and the display region information

The child process DisplayRender merges the one or more target render trees into the target render tree, and moves forward the off-screen rendering instruction for the render tree of the application when a layer of the application involves off-screen rendering logic.

It should be noted that the child process DisplayRender may obtain, from the UniRender process, the window control information and the display region information on the display region.

Optionally, in some embodiments of this application, the UniRender process may merge the one or more render trees into the target render tree, and then transfer the target render tree to the child process DisplayRender.

For the procedure of generating the target render tree and the concept of the forward movement of the off-screen rendering instruction, refer to the text descriptions in step S904. Details are not described herein again.

S2406: Generate a bitmap based on the target render tree.

After generating the target render tree, the child process DisplayRender generates the bitmap based on the target render tree. After generating the bitmap, the child process DisplayRender transfers the surface that carries the bitmap to the UniRender process. The UniRender process then sends content on the surface to each display region through the DSS.

For the procedure of generating the bitmap based on the target render tree, refer to the text descriptions in step S905. Details are not described herein again.

Because an underlying graphics library is called based on the context, different child processes DisplayRenders correspond to different contexts, and may concurrently generate bitmaps for different display regions.

It may be understood that the UniRender process may concurrently generate the bitmaps for all display regions by creating child processes DisplayRenders that one-to-one correspond to the display regions. In the scenario of multiple display regions, a generation speed of an interface may be improved, frame freezing may be reduced, and user experience may be improved.

With reference to content shown in FIG. 26A and FIG. 26B, the following uses examples to describe a procedure of data flowing when an electronic device implements an interface generation method.

FIG. 26A and FIG. 26B each are a schematic diagram of an example of data flowing when an electronic device implements an interface generation method according to an embodiment of this application.

As shown in FIG. 26A, an electronic device has two display regions: a display region 1 and a display region 2. Content of the application 1 and content of the application 3 are displayed on the display region 1. Content of the application 2, content of the application 3, and content of the application 4 are displayed on the display region 2.

A UniRender process creates a child process DisplayRenderl corresponding to the display region 1 and a child process DisplayRender2 corresponding to the display region 2. After receiving the render tree 1 of the application 1, the render tree 2 of the application 2, a render tree 3 of the application 3, and a render tree 4 of the application 4, the UniRender process transfers the render tree 1 and the render tree 3 to the child process DisplayRender1, and transfers the render tree 2, the render tree 3, and the render tree 4 to the child process DisplayRender2. The UniRender process transfers related window control information and display region information to the child processes DisplayRenders.

The child process DisplayRenderl and the child process DisplayRender2 independently generate bitmaps based on a target render tree. The child process DisplayRenderl generates a surface1 based on display region information of the display region 1, and the child process DisplayRender1 generates a surface2 based on display region information of the display region 2. The surface 1 is used to carry the bitmap 1 generated by the child process DisplayRender1. The surface 2 is used to carry the bitmap 2 generated by the child process DisplayRender1. A size of the surface 1 may be related to a size of the display region 1, and a size of the surface 2 may be related to a size of the display region 2.

In embodiments of this application, an application may display same or different content on different display regions. When the application displays same content on different display regions, a render tree generated by the application is allocated to a plurality of child processes DisplayRenders. When the application displays different content on different display regions, the application generates a plurality of different render trees, and the different render trees are correspondingly allocated to a plurality of child processes DisplayRenders.

For example, in the content shown in FIG. 26B, sizes (for example, resolution) of the display region 1 and the display region 2 are different, the application 3 displays different interfaces (for example, with a same layout structure but different content) on the display region 1 and the display region 2. Therefore, the application generates render trees corresponding to different display regions, which are respectively a render tree 31 and a render tree 32. The render tree 31 is transferred to the child process DisplayRender1, and the render tree 32 is transferred to the child process DisplayRender2.

Two threads, for example, an I/O thread and a render thread, may be provided for any child process DisplayRender. The I/O thread is responsible for receiving a render tree, and the render thread is responsible for generating a target render tree, and generating a bitmap based on the target render tree.

(c) Interface generation method in the scenario of a multi-device with multiple display regions

As shown in the scenarios in FIG. 23A-1 and FIG. 23A-2 to FIG. 23C, the electronic device may display a part of or all of content on the screen onto a screen of a peer electronic device through screen projection or multi-screen collaboration.

In the scenario of a multi-device with multiple display regions, after the local electronic device is connected to the peer electronic device, the local electronic device may use the screen of the peer electronic device as the display region 2, and transfer a render tree of an application to be displayed on the display region 2 to the peer electronic device. After receiving the render tree from the local electronic device, the peer electronic device merges render trees of all the applications displayed on the display region 2 into target render trees, and then generates bitmaps and sends the bitmaps for display.

Alternatively, the local electronic device may send, to the peer electronic device, an interface of the application displayed on the display region 2.

FIG. 27 is a schematic diagram of another example of an interface generation method according to an embodiment of this application.

As shown in FIG. 27, the interface generation method according to an embodiment of this application includes the following steps.

S2701: Establish a connection.

A communication connection is established between the electronic device 1 and the electronic device 2 in a plurality of manners, such as Bluetooth, Wi-Fi, and HiLink. The electronic device 1 uses a screen of the electronic device 2 as the display region 2, and a screen of the electronic device 1 is used as the display region 1.

After the UniRender process of the electronic device 2 determines that the electronic device 1 is connected to the electronic device 2, or after the UniRender process of the electronic device 2 receives a projection request or a multi-screen collaboration request from the display manager service and the window manager service, the UniRender process of the electronic device 2 may request to set up a heap memory to store data sent by the electronic device 1 for rendering and generating a bitmap, for example, a render tree.

S2702: Determine an application that is to be displayed on the display region 2.

The window manager service and the display manager service on the electronic device 1 determine the application to be displayed on the display region 2, and transfers the result to a UniRender1 process of the electronic device 1. Then, the UniRender1 process of the electronic device 1 obtains, through IPC communication, a render tree of the application displayed on the display region 2.

For the procedure in which the UniRender1 process obtains the render tree of the application through IPC communication, refer to the text descriptions in step S902. Details are not described herein again.

S2703: Send the render tree of the application that is to be displayed on the display region 2.

The UniRender1 process of the electronic device 1 sends the render tree of the application displayed on the display region 2 to the electronic device 2.

The UniRender1 may determine a start address of shared memory and a size of the shared memory, and transfer, through the communication connection in step S2701, the render tree to the heap memory that is set up by a UniRender2 process of the electronic device 2.

A storage structure of the data in the heap memory may be consistent with a storage structure of data in the shared memory in the UniRender1. For a storage structure of data in the heap memory and read/write security of the heap memory, refer to the text descriptions in step S902. Details are not described herein again.

It may be understood that the electronic device 1 sends the render tree to the electronic device 2, so that an amount of data transmitted between the electronic device 1 and the electronic device 2 may be reduced. This reduces a delay and improves an interface generation speed.

S2704: Merge the render tree of the application that is to be displayed on the display region 2 into a target render tree.

After receiving a vertical synchronization signal (Vsync-UR2), the UniRender2 process of the electronic device 2 merges the render tree of the application displayed on the display region 2 into the target render tree, and in this procedure, an off-screen rendering instruction may be moved forward.

The electronic device 2 may merge the render tree sent by the electronic device 1 and a local render tree of the electronic device 2 into the target render tree.

FIG. 28A and FIG. 28B each are a schematic diagram of an example of merging render trees into a target render tree according to an embodiment of this application.

As shown in FIG. 28A, the application 1 and the application 2 are run on the electronic device 1. The render tree generated by the application 1 is the render tree 1, and the render tree generated by the application 2 is the render tree 2. An application 3 is run on the electronic device 2. A render tree generated by the application 3 is the render tree 3.

If the UniRender1 process on the electronic device 1 determines that the interface of the application 2 is to be displayed on the display region 2, the UniRender1 process on the electronic device 1 sends the render tree 2 to the UniRender2 process on the electronic device 2.

The UniRender1 process separately moves forward off-screen rendering instructions for the render tree 1 and the render tree 2, and merge the render tree 1 and the render tree 2 into a target render tree 1, to generate a bitmap 1. The UniRender2 process separately moves forward off-screen rendering instructions for the render tree 2 and the render tree 3, and merges the render tree 2 and the render tree 3 into a target render tree 2, to generate a bitmap 2.

It should be noted that the UniRender1 process sends data of the render tree 2 to the UniRender2 process. The UniRender1 process may send all data of the render tree 2 or send differential data of the render tree 2. All data of the render tree 2 may be current properties, current displaylist, or staging displaylist, and staging properties in the shared memory. The differential data of the render tree 2 may be a displaylist and a render property of a render node of the render tree 2 in the properties_dirty queue and the displaylist_dirty queue.

As shown in FIG. 28B, the application 1, the application 2, and the application 3 are run on the electronic device 1. The render tree generated by the application 1 is the render tree 1, the render tree generated by the application 2 is the render tree 2, and the render tree generated by the application 2 is the render tree 3. An application 4 is run on the electronic device 2. A render tree generated by the application 4 is a render tree 4.

After determining that interfaces of the application 2 and the application 3 are to be displayed on the display region 2, the UniRender1 process of the electronic device 1 sends the render tree 2 and the render tree 3 to the UniRender2 process of the electronic device 2, or merges the render tree 2 and the render tree 3 into the target render tree 2, and sends the target render tree 2 to the UniRender2 process of the electronic device 2.

The UniRender1 process separately moves forward off-screen rendering instructions for the render tree 1, the render tree 2, and the render tree 3, and merges the render tree 1, the render tree 2, and the render tree 3 into a target render tree 1, to generate a bitmap 1. The UniRender1 separately moves forward an off-screen rendering instruction for the render tree 2, and merges the render tree 2 into a target render tree 2.

Optionally, in some embodiments of this application, the UniRender1 process may create a plurality of child processes DisplayRender to separately receive and process render trees from different applications. In other words, in content shown in FIG. 28B, the UniRender1 process may create two child processes DisplayRender: DisplayRender1 and DisplayRender2. The child process DisplayRender1 receives the render tree 1, the render tree 2, and the render tree 3, and merges the render tree 1, the render tree 2, and the render tree 3 into the target render tree 1. The child process DisplayRender2 receives the render tree 2 and the render tree 3, merges the render tree 2 and the render tree 3 into the target render tree 2, and sends the target render tree 2 to the UniRender2 process.

The UniRender2 process separately moves forward off-screen rendering instructions for the render tree 2 and the render tree 3, and merges the render tree 2 and the render tree 3 into a target render tree 2, to generate a bitmap 2.

It should be noted that in response to a vertical synchronization signal (Vsync-UR1) on the electronic device 1, the UniRender1 process obtains render trees of one or more applications from the shared memory, and starts to generate the target render tree. In response to a vertical synchronization signal (Vsync-UR2) on the electronic device 2, the UniRender2 obtains a render tree of one or more applications from the heap memory and/or the shared memory, and starts to generate the target render tree.

Optionally, in some embodiments of this application, when a frequency of a vertical synchronization signal (Vsync-UR1) on the electronic device 1 is inconsistent with a frequency of a vertical synchronization signal (Vsync-UR2) on the electronic device 2, UniRender of the electronic device 1 may adjust, through frequency division and frequency multiplication, the frequency of the vertical synchronization signal (Vsync-UR1) to be the same as that of the Vsync-UR2. Alternatively, the UniRender2 of the electronic device 2 may adjust, through frequency division and frequency multiplication, the frequency of the vertical synchronization signal (Vsync-UR2) to be the same as that of the vertical synchronization signal (Vsync-UR1).

Optionally, in some embodiments of this application, vertical synchronization signals (Vsync-UR1) at a plurality of frequencies may be provided for the electronic device 1. For example, in the scenarios shown in FIG. 28A and FIG. 28B, an original frequency of the vertical synchronization signal (Vsync-UR) on the electronic device 1 is 60 Hz, and an original frequency of the vertical synchronization signal (Vsync-UR2) on the electronic device 2 is 90 Hz. After the electronic device 1 determines that the interface of the application 2 is to be displayed on the electronic device 2, the UniRender process of the electronic device 1 may separately generate vertical synchronization signals (Vsync-UR1) of frequencies of 60 Hz and 90 Hz, so that the application 2 generates a render tree at a frequency of 90 Hz. The UniRender1 process may then transfer the render tree to the UniRender2 process at the frequency of 90 Hz. The application 1 may still generate a render tree at the frequency of 60 Hz.

On any electronic device, a vertical synchronization signal (Vsync-UR) received or generated by UniRender may be the same as a vertical synchronization signal (Vsync-APP) received by an application.

S2705: Generate a bitmap based on the target render tree.

For specific content, refer to the text descriptions in step S905. Details are not described herein again.

Optionally, in some embodiments of this application, the UniRender1 process of the electronic device 1 may first merge one or more render trees on the display region 2 into the target render tree, and then generate a bitmap based on the target render tree. The bitmap is transferred to the UniRender2 process of the electronic device 2.

It should be noted that when the electronic device 2 displays the interface of the application 1 on the electronic device 1, a user taps the interface of the application 1 on the electronic device 2 by using another interaction manner like tapping. The electronic device 2 may send, to the application 1 on the electronic device 1, a location at which the user taps the interface of the application 1, so that the application 1 may correctly respond to the interaction with the user. Alternatively, because the interface of the application 1 displayed on the electronic device 2 is generated by the UniRender2 process on the electronic device 2 based on the render tree, and the render tree includes location information of a view, the electronic device 2 may determine the view tapped by the user. The view tapping event is directly sent to the application 1 on the electronic device 1, so that the application 1 may correctly respond to the interaction with the user.

**(3) Finally, the following describes a hardware architecture and a software architecture of an electronic device according to an embodiment of this application.**

FIG. 29 is a schematic diagram of an example of a hardware structure of an electronic device according to an embodiment of this application.

The following describes embodiments in detail by using an electronic device as an example. It should be understood that the electronic device may have more or fewer components than those shown in the figure, or combine two or more components, or have different component configuration. Various components shown in the figure may be implemented in hardware, software, or in a combination of hardware and software that includes one or more signal processing and/or application-specific integrated circuits.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention constitutes no specific limitation on the electronic device. In some other embodiments of this application, the electronic device may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly call the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. The PCM interface may also be used to perform audio communication, and sample, quantize, and code an analog signal. The UART interface is a universal serial data bus, and is configured to perform asynchronous communication.

The MIPI interface may be configured to connect the processor 110 to a peripheral component, for example, the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device. The processor 110 communicates with the display 194 through the DSI, to implement a display function of the electronic device. The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like. The SIM interface may be configured to communicate with the SIM card interface 195, to implement a function of transmitting data to an SIM card or reading data in an SIM card. The USB interface 130 is an interface that complies with a USB standard specification, and may be specifically a Mini USB interface, a Micro USB interface, a USB Type C interface, or the like.

It may be understood that an interface connection relationship between the modules shown in this embodiment of this invention is merely an example for description, and does not constitute a structural limitation on the electronic device. In some other embodiments of this application, the electronic device may alternatively use an interface connection manner different from that in the foregoing embodiment, or a combination of a plurality of interface connection manners.

The charging management module 140 is configured to receive charging input from a charger. The power management module 141 is configured to connect to the battery 142, the charging management module 140, and the processor 110.

A wireless communication function of the electronic device may be implemented by using the antenna 1, the antenna 2, the mobile communication module 150, the wireless communication module 160, the modem processor, the baseband processor, and the like. The antenna 1 and the antenna 2 are configured to transmit and receive an electromagnetic wave signal. Each antenna of the electronic device may be configured to cover one or more communication frequency bands. Different antennas may also be multiplexed to improve antenna utilization. The mobile communication module 150 may provide a solution to wireless communication such as 2G/3G/4G/5G applicable to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules of the mobile communication module 150 may be disposed in the processor 110. In some embodiments, at least some function modules of the mobile communication module 150 and at least some modules of the processor 110 may be disposed in a same component.

The modem processor may include a modulator and a demodulator. The modulator is configured to modulate a to-be-sent low-frequency baseband signal into a medium-high frequency signal. The demodulator is configured to demodulate the received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and disposed in a same device as the mobile communication module 150 or another function module.

The wireless communication module 160 may provide a solution that is applied to the electronic device and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology. The wireless communication module 160 may be one or more components that integrate at least one communication processing module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into the electromagnetic wave for radiation through the antenna 2.

In some embodiments, in the electronic device, the antenna 1 and the mobile communication module 150 are coupled, and the antenna 2 and the wireless communication module 160 are coupled, so that the electronic device can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, GNSS, WLAN, NFC, FM, an IR technology, and/or the like. The GNSS may include a global positioning system (global positioning system, GPS), a global navigation satellite system (global navigation satellite system, GLONASS), a Beidou navigation satellite system (Beidou navigation satellite system, BDS), a quasi-zenith satellite system (quasi-zenith satellite system, QZSS), and/or a satellite based augmentation system (satellite based augmentation system, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light-emitting diodes, QLED), or the like. In some embodiments, the electronic device may include one or N displays 194, where N is a positive integer greater than 1.

The electronic device may implement a photographing function through the ISP, the camera 193, the video codec, the GPU, the display 194, the application processor, or the like, to obtain real-time video data.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the terminal device selects a frequency, the digital signal processor is configured to perform Fourier transformation on frequency energy.

The video codec is configured to compress or decompress a digital video. The electronic device may support one or more types of video codecs. In this way, the electronic device may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure such as a transmission mode between neurons in a human brain to perform rapid processing on input information, and can perform continuous selflearning. Applications such as intelligent cognition of the electronic device, for example, image recognition, facial recognition, speech recognition, and text understanding, may be implemented through the NPU.

The internal memory 121 may be one or more random access memories (random access memory, RAM), and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

In embodiments of this application, non-real-time video may be located in the non-volatile memory.

According to an operating principle, the flash memory may be classified into NOR FLASH, NAND FLASH, 3D NAND FLASH, and the like; according to potential orders of storage cells, the flash memory may be classified into a single-level storage cell (single-level cell, SLC), a multi-level storage cell (multi-level cell, MLC), a triple-level cell (triple-level cell, TLC), a quad-level cell (quad-level cell, QLC), and the like; and according to storage specifications, the flash memory may be classified into a universal flash storage (English: universal flash storage, UFS), an embedded multi media memory card (embedded multi media Card, eMMC), and the like.

The random access memory may be directly read and written by the processor 110, may be configured to store executable programs (such as machine instructions) of an operating system or another running program, and may also be configured to store data of users and applications.

The non-volatile memory may also store the executable programs, the data of the users and the applications, and the like, and may be loaded into the random access memory in advance, to be directly read and written by the processor 110.

The external memory interface 120 may be configured to connect to an external non-volatile memory, to expand a storage capability of the electronic device. The external non-volatile memory communicates with the processor 110 through the external memory interface 120, to implement a data storage function. For example, files such as music and videos are stored in the external non-volatile memory.

The electronic device may implement audio functions by using the audio module 170, the speaker 170A, the receiver 170B, the microphone 170C, the headset jack 170D, the application processor, and the like. For example, gal playing and recording may be implemented.

The audio module 170 is configured to convert digital audio information into an analog audio signal for output, and is also configured to convert analog audio input into a digital audio signal. The speaker 170A, also referred to as a "loudspeaker", is configured to convert an electrical audio signal into a sound signal. The receiver 170B, also referred to as an "earpiece", is configured to convert an electrical audio signal into a sound signal. The microphone 170C, also referred to as a "mike" or a "mic", is configured to convert a sound signal into an electrical signal.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. The gyro sensor 180B may be configured to determine a motion posture of the electronic device. The barometric pressure sensor 180C is configured to measure barometric pressure. The magnetic sensor 180D includes a Hall sensor. The acceleration sensor 180E may detect magnitudes of accelerations of the electronic device in all directions (usually on three axes). The distance sensor 180F is configured to measure a distance. The optical proximity sensor 180G may include, for example, a light-emitting diode (LED) and an optical detector, for example, a photodiode. The ambient light sensor 180L is configured to sense ambient light brightness. The fingerprint sensor 180H is configured to collect a fingerprint. The electronic device may use a feature of the collected fingerprint to implement fingerprint-based unlocking, application lock access, fingerprint-based photographing, fingerprint-based call answering, and the like. The temperature sensor 180J is configured to measure temperature.

The touch sensor 180K is also referred to as a "touch panel". The touch sensor 180K may be disposed on the display 194, and a touchscreen, also referred to as a "touchscreen", is formed by the touch sensor 180K and the display 194. The touch sensor 180K is configured to detect a touch operation performed on or near the touch sensor 180K. The touch sensor may transfer the detected touch operation to the application processor, to determine a touch event type. A visual output related to the touch operation may be provided through the display 194. In some other embodiments, the touch sensor 180K may alternatively be disposed on a surface of the electronic device, and is located at a location different from that of the display 194.

The button 190 includes a power button, a volume button, and the like. The button 190 may be a mechanical button, or may be a touch button. The electronic device may receive button input, and generate button signal input related to user settings and function control of the electronic device. The motor 191 may generate a vibration prompt. The indicator 192 may be an indicator light, may be configured to indicate a charging status and a battery level change, and may also be configured to indicate a message, a missed call, a notification, and the like. The SIM card interface 195 is configured to connect to a SIM card. The electronic device interacts with a network through the SIM card, to implement functions such as a call and data communication.

FIG. 30 is a schematic diagram of an example of a software structure of an electronic device according to an embodiment of this application.

A layered architecture divides software into several layers, each with a clear role and division of labor. The layers communicate with each other through a software interface. In some embodiments, a system is classified into four layers that are respectively an application layer, an application framework layer, a system library, and a kernel layer from top to bottom.

The application layer may include a series of application packages. As shown in FIG. 20, the application packages may include application programs (or referred to as applications) such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 30, the application framework layer may include a window management service, a display management service, a content provider, a view system, a phone manager, a resource manager, a notification manager, a local profile management assistant (Local Profile Assistant, LPA), and the like.

The window management service is responsible for starting, adding, and deleting a window, and can determine an application displayed on the window, determine creation, destruction, a property change, and the like of an application layer, and determine whether there is a status bar, lock a screen, capture a screen, and the like.

The display management service can obtain a quantity of display regions and a size of the display region, and is responsible for starting, adding, and deleting the display region.

The content provider is configured to store and obtain data, and enable the data to be accessed by an application. The data may include a video, an image, audio, calls that are made and received, a browsing history and bookmarks, an address book, and the like.

The phone manager is configured to provide a communication function for the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application running on the background, or may be a notification that appears on the display in a form of a dialog interface. For example, text information is displayed on the status bar, an announcement is given, the electronic device vibrates, or the indicator light blinks.

The view system includes visual controls such as a control for displaying a text and a control for displaying an image. The view system may be configured to construct an application. A display interface may include one or more views. For example, a display interface including a short message notification icon may include a text display view and an image display view.

The view system also includes UniRender, and UniRender may receive a render tree of one or more applications. UniRender may synchronize layer information, such as layer creation, destruction, and a property change, by using a window manager service. UniRender may synchronize display region information, such as screen size, by using a display manager service.

Optionally, in some embodiments of this application, the view system further includes SurfaceFlinger. On an electronic device for which a whitelist is provided, when an application does not belong to the whitelist, a render thread of the application generates a bitmap after a UI thread of the application generates a render tree, and then the bitmap is submitted to SurfaceFlinger for layer composition.

Optionally, in some embodiments of this application, when the display region displays an application on the whitelist and an application that is not on the whitelist, UniRender is responsible for generating a bitmap of the application on the whitelist. After generating the bitmap, UniRender transfers the bitmap to SurfaceFlinger. SurfaceFlinger performs layer composition on the bitmap and another application that is not on the whitelist, to generate a bitmap for display.

The runtime includes a core library and a virtual machine. The runtime schedules and manages an operating system.

The core library includes two parts: One part is a performance function that a java language needs to call, and the other part is a core library.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), and a graphics processing library, where the graphics processing library includes a three-dimensional graphics processing library (for example, OpenGL ES), a two-dimensional graphics engine (for example, SGL), and the like.

The surface manager is configured to manage a display subsystem, and provide fusion of 2-dimensional (2-Dimensional, 2D) and 3-dimensional (3-Dimensional, 3D) layers to a plurality of applications.

The media library supports playback and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement 3D graphics drawing, image rendering, composition, layer processing, and the like. The 2D graphics engine is a drawing engine for 2D drawing.

The kernel layer is a layer between hardware and software. The kernel layer includes at least a display driver, a camera driver, an audio driver, a sensor driver, and a virtual card driver.

In embodiments of this application, one or more applications at the application layer transfer, to the UniRender process of the view system, a render tree generated by a respective UI thread. The UniRender process obtains window control information and display region information by using the window manager service and the display manager service, to further merge a render tree of an application on a display region into a target render tree. After generating the target render tree, the UniRender process calls the layer processing library and executes a DrawOP operation on a displaylist in the target render tree to generate a bitmap. UniRender transfers the generated bitmap to the display driver for display.

According to the context, the term "when" used in the foregoing embodiments may be interpreted as "if", "after", "in response to determining", or "in response to detecting". Similarly, according to the context, the phrase "if it is determined that" or "if (a stated condition or event) is detected" may be interpreted as a meaning of "when it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive), or the like.

A person of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1. An interface generation method, applied to an electronic device, wherein the electronic device has at least two display regions, the at least two display regions comprise a first display region and a second display region, and the method comprises:

   receiving (S2402), by a third process, a first render tree generated by a first process, wherein the first render tree is configured to draw an interface that is of the first process and that is to be displayed on the first display region;
   generating (S2405, S2406), by the third process, a first interface based on the first render tree, wherein the first interface comprises the interface of the first process, and the first interface is configured to be displayed on the first display region;
   receiving (S2402), by a fourth process, a second render tree generated by a second process, wherein the second render tree is configured to draw an interface that is of the second process and that is to be displayed on the second display region; and
   generating (S2405, S2406), by the fourth process, a second interface based on the second render tree, wherein the second interface comprises the interface of the second process, and the second interface is configured to be displayed on the second display region.

2. The method according to claim 1, wherein before the receiving (S2402), by a third process, a first render tree generated by a first process, and before the receiving, by a fourth process, a second render tree generated by a second process, the method further comprises:

   determining, by a fifth process, that the at least two display regions comprise the first display region and the second display region; and
   generating, by the fifth process, the third process and the fourth process, wherein the third process and the fourth process are child processes of the fifth process.

3. The method according to claim 1 or 2, wherein the receiving (S2402), by a third process, a first render tree generated by a first process specifically comprises:
   receiving, by the third process, the first render tree based on inter-process communication, wherein the inter-process communication comprises at least one of Binder, an interface definition language AIDL, shared memory, and a socket Socket.

4. The method according to claim 2 or 3, wherein the method further comprises:

   sending, by the fifth process, a first vertical synchronization signal to the first process at a first frequency, wherein the first vertical synchronization signal indicates the first process to generate the first render tree by adjusting render tree generation rates to match the first frequency, wherein the first frequency is a refresh frequency of the first display region; and
   receiving, by the third process, the first render tree at the first frequency.

5. The method according to claim 4, wherein the method further comprises:

   sending, by the fifth process, a second vertical synchronization signal to the second process at a second frequency, wherein the second vertical synchronization signal indicates the second process to generate the second render tree by adjusting render tree generation rates to match the second frequency, wherein the second frequency is a refresh frequency of the second display region; and
   receiving, by the fourth process, the second render tree at the second frequency, wherein the second frequency is different from the first frequency.

6. The method according to any one of claims 1 to 5, wherein

   the method further comprises: receiving (S2402), by the third process, a sixth render tree generated by a sixth process; and
   the generating (S2405, S2406), by the third process, a first interface based on the first render tree specifically comprises: generating, by the third process, the first interface based on the first render tree and the sixth render tree, wherein the first interface further comprises an interface corresponding to the sixth process.

7. The method according to claim 6, wherein the generating (S2405, S2406), by the third process, the first interface based on the first render tree and the sixth render tree specifically comprises:

creating, by the third process, a root render node as a root node of a first target render tree, and using the first render tree and the sixth render tree as child nodes of the root render node; and
generating, by the third process, the first interface based on the first target render tree.

8. The method according to claim 6 or 7, wherein the method further comprises:
deleting, by the third process, a render node of the first target render tree based on Z-order of the first render tree and Z-order of the sixth render tree, wherein the deleted render node corresponds to a completely covered view.

9. The method according to any one of claims 6 to 8, wherein the method further comprises:
deleting, by the third process, a draw operation of the first target render tree based on the Z-order of the first render tree and the Z-order of the sixth render tree, wherein the deleted draw operation corresponds to a completely covered graphic.

10. The method according to any one of claims 6 to 9, wherein the method further comprises:
in a procedure of the generating (S2405, S2406), by the third process, the first interface based on the first render tree and the sixth render tree, merging or batching, by the third process, a first draw operation and a second draw operation, wherein the first draw operation belongs to the first render tree, and the second draw operation belongs to the sixth render tree.

11. A chip system, wherein the chip system is applied to an electronic device, the chip system comprises one or more processors, and the processor is configured to call computer instructions, so that the electronic device performs the method according to any one of claims 1 to 10.

12. An electronic device, wherein the electronic device comprises the chip system according to claim 11 and a memory, wherein
the memory is coupled to the one or more processors, the memory is configured to store computer program code, and the computer program code comprises the computer instructions.

13. A computer-readable storage medium, comprising instructions, wherein when the instructions are run on an electronic device, the electronic device is enabled to perform the method according to any one of claims 1 to 10.

14. A computer program product, comprising computer-readable instructions, wherein when the computer-readable instructions are executed by one or more processors, the method according to any one of claims 1 to 10 is implemented.


**Patentansprüche**

1. Schnittstellengenerierungsverfahren, das auf eine elektronische Vorrichtung angewendet wird, wobei die elektronische Vorrichtung mindestens zwei Anzeigebereiche aufweist, die mindestens zwei Anzeigebereiche einen ersten Anzeigebereich und einen zweiten Anzeigebereich umfassen, und das Verfahren Folgendes umfasst:

Empfangen (S2402) eines ersten Renderbaums, der durch einen ersten Prozess generiert wird, durch einen dritten Prozess, wobei der erste Renderbaum dazu konfiguriert ist, eine Schnittstelle zu zeichnen, die von dem ersten Prozess stammt und die auf dem ersten Anzeigebereich anzuzeigen ist;
Generieren (S2405, S2406) einer ersten Schnittstelle durch den dritten Prozess basierend auf dem ersten Renderbaum, wobei die erste Schnittstelle die Schnittstelle des ersten Prozesses umfasst, und die erste Schnittstelle dazu konfiguriert ist, auf dem ersten Anzeigebereich angezeigt zu werden;
Empfangen (S2402) eines zweiten Renderbaums, der durch einen zweiten Prozess generiert wird, durch einen vierten Prozess, wobei der zweite Renderbaum dazu konfiguriert ist, eine Schnittstelle zu zeichnen, die von dem zweiten Prozess stammt und die auf dem zweiten Anzeigebereich anzuzeigen ist; und
Generieren (S2405, S2406) einer zweiten Schnittstelle durch den vierten Prozess basierend auf dem zweiten Renderbaum, wobei die zweite Schnittstelle die Schnittstelle des zweiten Prozesses umfasst, und die zweite Schnittstelle dazu konfiguriert ist, auf dem zweiten Anzeigebereich angezeigt zu werden.

2. Verfahren nach Anspruch 1, wobei das Verfahren vor dem Empfangen (S2402) eines ersten Renderbaums, der durch einen ersten Prozess generiert wird, durch einen dritten Prozess und vor dem Empfangen eines zweiten Renderbaums, der durch einen zweiten Prozess generiert wird, durch einen vierten Prozess ferner Folgendes umfasst:

   Bestimmen durch einen fünften Prozess, dass die mindestens zwei Anzeigebereiche den ersten Anzeigebereich und den zweiten Anzeigebereich umfassen; und
   Generieren des dritten Prozesses und des vierten Prozesses durch den fünften Prozess, wobei der dritte Prozess und der vierte Prozess untergeordnete Prozesse des fünften Prozesses sind.

3. Verfahren nach Anspruch 1 oder 2, wobei das Empfangen (S2402) eines ersten Renderbaums, der durch den ersten Prozess generiert wird, durch einen dritten Prozess insbesondere Folgendes umfasst:
   Empfangen des ersten Renderbaums durch den dritten Prozess basierend auf Interprozesskommunikation, wobei die Interprozesskommunikation mindestens eines von Binder, einer Schnittstellendefinitionssprache AIDL, gemeinsam genutztem Speicher und einer Socket-Buchse umfasst.

4. Verfahren nach Anspruch 2 oder 3, wobei das Verfahren ferner Folgendes umfasst:

   Senden eines ersten vertikalen Synchronisationssignals auf einer ersten Frequenz durch den fünften Prozess an den ersten Prozess, wobei das erste vertikale Synchronisationssignal den ersten Prozess anweist, den ersten Renderbaum durch Einstellen der Renderbaum-Generierungsraten zu generieren, um zu der ersten Frequenz zu passen, wobei die erste Frequenz die Aktualisierungsfrequenz des ersten Anzeigebereichs ist; und
   Empfangen des ersten Renderbaums auf der ersten Frequenz durch den dritten Prozess.

5. Verfahren nach Anspruch 4, wobei das Verfahren ferner Folgendes umfasst:

   Senden eines zweiten vertikalen Synchronisationssignals auf einer zweiten Frequenz durch den fünften Prozess an den zweiten Prozess, wobei das zweite vertikale Synchronisationssignal den zweiten Prozess anweist, den zweiten Renderbaum durch Einstellen der Renderbaum-Generierungsraten zu erzeugen, um zu der zweiten Frequenz zu passen, wobei die zweite Frequenz eine Aktualisierungsfrequenz des zweiten Anzeigebereichs ist; und
   Empfangen des zweiten Renderbaums auf der zweiten Frequenz durch den vierten Prozess, wobei sich die zweite Frequenz von der ersten Frequenz unterscheidet.

6. Verfahren nach einem der Ansprüche 1 bis 5, wobei

   das Verfahren ferner Folgendes umfasst: Empfangen (S2402) eines sechsten Renderbaums, der durch einen sechsten Prozess generiert wird, durch den dritten Prozess; und
   das Generieren (S2405, S2406) einer ersten Schnittstelle basierend auf dem ersten Renderbaum durch den dritten Prozess insbesondere Folgendes umfasst: Generieren der ersten Schnittstelle durch den dritten Prozess basierend auf dem ersten Renderbaum und dem sechsten Renderbaum, wobei die erste Schnittstelle ferner eine Schnittstelle entsprechend dem sechsten Prozess umfasst.

7. Verfahren nach Anspruch 6, wobei das Generieren (S2405, S2406) der ersten Schnittstelle durch den dritten Prozess basierend auf dem ersten Renderbaum und dem sechsten Renderbaum insbesondere Folgendes umfasst:

   Erzeugen eines Wurzel-Renderknotens als Wurzelknoten eines ersten Ziel-Renderbaums durch den dritten Prozess, und Verwenden des ersten Renderbaums und des sechsten Renderbaums als untergeordneten Knoten des Wurzel-Renderknotens; und
   Generieren der ersten Schnittstelle durch den dritten Prozess basierend auf dem ersten Ziel-Renderbaum.

8. Verfahren nach Anspruch 6 oder 7, wobei das Verfahren ferner Folgendes umfasst:
   Löschen eines Renderknotens des ersten Ziel-Renderbaums durch den dritten Prozess basierend auf der Z-Reihenfolge des ersten Renderbaums und der Z-Reihenfolge des sechsten Renderbaums, wobei der gelöschte Renderknoten einer vollständig verdeckten Ansicht entspricht.

**9.** Verfahren nach einem der Ansprüche 6 bis 8, wobei das Verfahren ferner Folgendes umfasst:
Löschen eines Zeichenvorgangs des ersten Ziel-Renderbaums durch den dritten Prozess basierend auf der Z-Reihenfolge des ersten Renderbaums und der Z-Reihenfolge des sechsten Renderbaums, wobei der gelöschte Zeichenvorgang einer vollständig verdeckten Grafik entspricht.

**10.** Verfahren nach einem der Ansprüche 6 bis 9, wobei das Verfahren ferner Folgendes umfasst:
in einer Prozedur des Generierens (S2405, S2406) der ersten Schnittstelle durch den dritten Prozess basierend auf dem ersten Renderbaum und dem sechsten Renderbaum, Zusammenführen oder Stapeln eines ersten Zeichenvorgangs und eines zweiten Zeichenvorgangs durch den dritten Prozess, wobei der erste Zeichenvorgang zu dem ersten Renderbaum gehört und der zweite Zeichenvorgang zu dem sechsten Renderbaum gehört.

**11.** Chipsystem, wobei das Chipsystem auf eine elektronische Vorrichtung angewendet wird, das Chipsystem einen oder mehrere Prozessoren umfasst, und der Prozessor dazu konfiguriert ist, Computeranweisungen aufzurufen, so dass die elektronische Vorrichtung das Verfahren nach einem der Ansprüche 1 bis 10 durchführt.

**12.** Elektronische Vorrichtung, wobei die elektronische Vorrichtung das Chipsystem nach Anspruch 11 und einen Speicher umfasst, wobei
der Speicher mit dem einem oder den mehreren Prozessoren gekoppelt ist, der Speicher dazu konfiguriert ist, einen Computerprogrammcode zu speichern, und der Computerprogrammcode die Computeranweisungen umfasst.

**13.** Computerlesbares Speichermedium, umfassend Anweisungen, wobei, wenn die Anweisungen auf einer elektronischen Vorrichtung ausgeführt werden, die elektronische Vorrichtung in die Lage versetzt wird, das Verfahren nach einem der Ansprüche 1 bis 10 durchzuführen.

**14.** Computerprogrammprodukt, umfassend computerlesbare Anweisungen, wobei, wenn die computerlesbaren Anweisungen durch einen oder mehrere Prozessoren ausgeführt werden, das Verfahren nach einem der Ansprüche 1 bis 10 implementiert wird.

**Revendications**

**1.** Procédé de génération d'interface, appliqué à un dispositif électronique, dans lequel le dispositif électronique présente au moins deux régions d'affichage, les au moins deux régions d'affichage comprennent une première région d'affichage et une seconde région d'affichage, et le procédé comprend :

la réception (S2402), par un troisième processus, d'un premier arbre de rendu généré par un premier processus, dans lequel le premier arbre de rendu est configuré pour dessiner une interface qui est du premier processus et qui doit être affichée sur la première région d'affichage ;
la génération (S2405, S2406), par le troisième processus, d'une première interface sur la base du premier arbre de rendu, dans lequel la première interface comprend l'interface du premier processus, et la première interface est configurée pour être affichée sur la première région d'affichage ;
la réception (S2402), par un quatrième processus, d'un deuxième arbre de rendu généré par un deuxième processus, dans lequel le deuxième arbre de rendu est configuré pour dessiner une interface qui est du deuxième processus et qui doit être affichée sur la seconde région d'affichage ; et
la génération (S2405, S2406), par le quatrième processus, d'une seconde interface sur la base du deuxième arbre de rendu, dans lequel la seconde interface comprend l'interface du deuxième processus, et la seconde interface est configurée pour être affichée sur la seconde région d'affichage.

**2.** Procédé selon la revendication 1, dans lequel, avant la réception (S2402), par un troisième processus, d'un premier arbre de rendu généré par un premier processus, et avant la réception, par un quatrième processus, d'un deuxième arbre de rendu généré par un deuxième processus, le procédé comprend également :

la détermination, par un cinquième processus, que les au moins deux régions d'affichage comprennent la première région d'affichage et la seconde région d'affichage ; et
la génération, par le cinquième processus, du troisième processus et du quatrième processus, dans lequel le troisième processus et le quatrième processus sont des processus enfants du cinquième processus.

**3.** Procédé selon la revendication 1 ou 2, dans lequel la réception (S2402), par un troisième processus, d'un premier arbre de rendu généré par un premier processus comprend spécifiquement :
la réception, par le troisième processus, du premier arbre de rendu sur la base de la communication inter-processus, dans lequel la communication inter-processus comprend au moins l'un d'un Binder, d'un langage de définition d'interface AIDL, d'une mémoire partagée et d'un socket Socket.

4. Procédé selon la revendication 2 ou 3, dans lequel le procédé comprend également :

l'envoi, par le cinquième processus, d'un premier signal de synchronisation verticale au premier processus à une première fréquence, dans lequel le premier signal de synchronisation verticale indique au premier processus de générer le premier arbre de rendu en ajustant les taux de génération de l'arbre de rendu pour correspondre à la première fréquence, dans lequel la première fréquence est une fréquence de rafraîchissement de la première région d'affichage ; et
la réception, par le troisième processus, du premier arbre de rendu à la première fréquence.

5. Procédé selon la revendication 4, dans lequel le procédé comprend également :

l'envoi, par le cinquième processus, d'un second signal de synchronisation verticale au deuxième processus à une seconde fréquence, dans lequel le second signal de synchronisation verticale indique au deuxième processus de générer le deuxième arbre de rendu en ajustant les taux de génération de l'arbre de rendu pour correspondre à la seconde fréquence, dans lequel la seconde fréquence est une fréquence de rafraîchissement de la seconde région d'affichage ; et
la réception, par le quatrième processus, du deuxième arbre de rendu à la seconde fréquence, dans lequel la seconde fréquence est différente de la première fréquence.

6. Procédé selon l'une quelconque des revendications 1 à 5, dans lequel

le procédé comprend également : la réception (S2402), par le troisième processus, d'un sixième arbre de rendu généré par un sixième processus ; et
la génération (S2405, S2406), par le troisième processus, d'une première interface sur la base du premier arbre de rendu comprend spécifiquement : la génération, par le troisième processus, de la première interface sur la base du premier arbre de rendu et du sixième arbre de rendu, dans lequel la première interface comprend également une interface correspondant au sixième processus.

7. Procédé selon la revendication 6, dans lequel la génération (S2405, S2406), par le troisième processus, de la première interface sur la base du premier arbre de rendu et du sixième arbre de rendu comprend spécifiquement :

la création, par le troisième processus, d'un nœud de rendu racine en tant que nœud racine d'un premier arbre de rendu cible, et l'utilisation du premier arbre de rendu et du sixième arbre de rendu comme nœuds enfants du nœud de rendu racine ; et
la génération, par le troisième processus, de la première interface sur la base du premier arbre de rendu cible.

8. Procédé selon la revendication 6 ou 7, dans lequel le procédé comprend également :
la suppression, par le troisième processus, d'un nœud de rendu du premier arbre de rendu cible sur la base de l'ordre Z du premier arbre de rendu et de l'ordre Z du sixième arbre de rendu, dans lequel le nœud de rendu supprimé correspond à une vue entièrement couverte.

9. Procédé selon l'une quelconque des revendications 6 à 8, dans lequel le procédé comprend également :
la suppression, par le troisième processus, d'une opération de dessin du premier arbre de rendu cible sur la base de l'ordre Z du premier arbre de rendu et de l'ordre Z du sixième arbre de rendu, dans lequel l'opération de dessin supprimée correspond à un graphique entièrement couvert.

10. Procédé selon l'une quelconque des revendications 6 à 9, dans lequel le procédé comprend également :
dans une procédure de génération (S2405, S2406), par le troisième processus, de la première interface sur la base du premier arbre de rendu et du sixième arbre de rendu, la fusion ou le regroupement, par le troisième processus, d'une première opération de dessin et d'une seconde opération de dessin, dans lequel la première opération de dessin appartient au premier arbre de rendu et la seconde opération de dessin appartient au sixième arbre de rendu.

11. Système de puce, dans lequel le système de puce est appliqué à un dispositif électronique, le système de puce comprend un ou plusieurs processeurs, et le processeur est configuré pour appeler des instructions informatiques, de sorte que le dispositif électronique réalise le procédé selon l'une quelconque des revendications 1 à 10.

12. Dispositif électronique, dans lequel le dispositif électronique comprend le système de puce selon la revendication 11 et une mémoire, dans lequel

la mémoire est couplée aux un ou plusieurs processeurs, la mémoire est configurée pour stocker un code de programme informatique, et le code de programme informatique comprend des instructions informatiques.

13. Support de stockage lisible par ordinateur, comprenant des instructions, dans lequel, lorsque les instructions sont exécutées sur un dispositif électronique, le dispositif électronique est activé pour réaliser le procédé selon l'une quelconque des revendications 1 à 10.

14. Produit de programme informatique, comprenant des instructions lisibles par ordinateur, dans lequel lorsque les instructions lisibles par ordinateur sont exécutées par un ou plusieurs processeurs, le procédé selon l'une quelconque des revendications 1 à 10 est mis en œuvre.

FIG. 1A

Application 1

Bitmap 1

Application 2

Bitmap 2

Bitmaps are used as layers to participate in layer composition

Bitmap 1

Bitmap 2

SurfaceFlinger (SurfaceFlinger)/ Hardware composition policy module (HWC)

Interface of the application 2

Interface of the application 1

Song 1

08:08

00:42

04:42

FIG. 1B

Application 1 → Bitmap 3

Application 2 → Bitmap 4

Application 3 → Bitmap 5

Bitmaps are used as layers to participate in layer composition

Bitmap 3

Bitmap 4+ bitmap 5

SurfaceFlinger (SurfaceFlinger)/ Hardware composition policy module (HWC)

Interface of the application 1

Interface of the application 3

Interface of the application 2

08:08

Search

News
Novels

< Lily ...

Hi

News content 2

| Main thread | Render thread | SurfaceFlinger |
|---|---|---|

Calculate a displaylist and
a render property, and
generate a render tree

Construction
phase

Synchronize the render tree to
the render thread, where the
render tree is located on a stack
of an application

Perform a draw operation in the
render tree to generate a bitmap

Rendering
phase

Surface carrying the bitmap

Prepare to perform
layer composition

FIG. 2

FIG. 3

FIG. 4

Layer 1

Layer 2

...

Layer N

Layer list

SurfaceFlinger

Underlying hardware corresponding to a hardware composition policy module

Layer 1

Layer 2

GPU composition

...

Layer N

Overlay composition

FIG. 5

Z-order of a layer 1 is a

Z-order of a layer 2 is a+1

In GPU composition:
composition in
Mode.SRC_OVER

Z-order of a layer 3 is a+2

FIG. 6

EP 4 411 533 B1

Working

| | Application 1 | Main thread |
| Render thread | Render tree |

| Application 2 | Main thread |
| Render thread | Render tree |

Layer composition

SurfaceFlinger

GPU

Obtain a bitmap through rendering

Off-screen rendering

Render tree 1 → Bitmap 1 → Bitmap 3 obtained through off-screen rendering

Render tree 2 → Bitmap 2 → Bitmap 4 obtained through off-screen rendering

Bitmap 5

FIG. 7A

Bitmap generated by an application 2 and transferred to SurfaceFlinger

Bitmap generated by an application 3 and transferred to SurfaceFlinger

Search

News    Entertainment    Finance
Novels    Real estate    Automobile ⌄

Pined    News Headline 1

Pined    News Headline 2

News content 1

News content 2

Lily

∘ ∘ ∘

Hi

~
TO
FIG. 7B-2

FIG. 7B-1

EP 4 411 533 B1

~

News  Entertainment  Finance
Novels   Real estate  Automobile  ∨

Pined    News Headline 1
Pined    News Headline 2

News content 1

News content 2

Lily

Perform a
conversion first

Lily

Hi

Off-screen buffer

Layer
composition

FIG. 7B-2

EP 4 411 533 B1

CONT.
FROM
FIG. 7B-2

Then, perform
superimposition

On-screen buffer

FIG. 7B-3

EP 4 411 533 B1

FIG. 8

Window manager service and display manager service

UniRender

Applications

Application 1

Application 2

...

Application N

S901: Construct and generate a render tree after receiving a vertical signal

...

S901: Construct and generate a render tree after receiving a vertical signal

S902: Transfer render trees across processes

S903: Transfer window control information and display region information of an application

S904: Generate a target render tree based on obtained render trees, the window control information, and the display region information

S905: Generate a bitmap based on the target render tree

FIG. 9

FIG. 10

| UniRender process | Anonymous shared memory subsystem | Application |
|---|---|---|

Request for shared memory

Starting procedure

Request for shared memory

Virtual memory ←Mapping→ Physical memory ←Mapping→ Virtual memory

Handle

Handle

FIG. 11

| layer key | root id | ... | ... | HEAD field | Offset a |
| node id | node id | ... | ... | MAPPING field | Offset b |
| address | address | ... | ... | | |
| current property | staging property | current displaylist | staging displaylist | | |
| current property | staging property | current displaylist | staging displaylist | NODES field | Offset c |
| ... | | | | | |

RootRender Node

Render Node0

Render Node1

Render Node2

Render Node3

FIG. 12A

| layer key | root id | ... | ... | HEAD field | Offset a |
|---|---|---|---|---|---|
| node id | node id | ... | ... | MAPPING field | Offset b |
| address | address | ... | ... | | |
| | displaylist | | property | NODES field | Offset c |
| | displaylist | | property | | |
| ... | | ... | | | |

FIG. 12B

FIG. 13

FIG. 14

FIG. 15

Gallery

Today

Photos  Albums  Highlights  Discover

~
TO
FIG. 16A-2

Rectangle
rounding and
scaling

~
TO
FIG. 16A-2

Rectangle rounding

FIG. 16A-1

CONT.
FROM
FIG. 16A-1

CONT.
FROM
FIG. 16A-1

Gallery

Photos Albums Highlights Discover

FIG. 16A-2

FIG. 16B

Reading    Gallery

Phone    Messages    Contacts

Startup
interface
of Reading    lery

Scaling

Phone    Messages    Contacts

Rectangle rounding

FIG. 16C

EP 4 411 533 B1

Working

Application 1    UI thread

Application 2    UI thread

Transfer a render tree 1          Transfer a render tree 2

UniRender    Update a render property
of a render node of the
render tree 1

Generate a target
render tree

GPU

| Scaling property | Roundrect property | ... |
|---|---|---|

Generate a
bitmap through
rendering

FIG. 17A

**First manner:**

Root render node 1

Render node 1     Render node 2

Render node 3

**Render three generated by an application**

← → Bitmap corresponding to the render tree

Off-screen rendering →

Result obtained through off-screen rendering

**Bitmap corresponding to the render tree**

**Result obtained through off-screen rendering**

**Second manner:**

Root render node 1

Render node 1     Render node 2

Render node 3

**Render tree obtained after adding the off-screen rendering property**

**Add an off-screen rendering property** ←

← → Bitmap corresponding to the render tree obtained after adding the off-screen rendering property

**Bitmap corresponding to the render tree obtained after adding the off-screen rendering property**

FIG. 17B

EP 4 411 533 B1

FIG. 18

FIG. 19

Root render node 1

Render node 1          Render node 2

Render node 3

Root render node 2

Render node 4          Render node 5

Render node 6

Generate a target render tree

New root render node

Root render node 1

Render node 1          Render node 2

Render node 3

Root render node 2

Render node 4          Render node 5

FIG. 20

y

Surface
coordinate
system of an
application

x

setStaticMatrix ()

y

UniRender
allocates a
surface
coordinate
system

x

FIG. 21

FIG. 22A

EP 4 411 533 B1

**Folded state**

Display region 2

Display region 1

**Unfolded state**

180°

Song 1

Clock   Gallery   Notepad

Phone  Contacts  Camera

01:42

04:42

FIG. 22B

70

FIG. 22C

21°C Cloudy

Home    Home page    VIP    TV shows    Animations    Movies    Kids    Games

4:46 p.m.

HDMI1

Input source    Full screen

Menu

08:08
6°C Beijing
08:08
Friday 25, Dec

Reading    Music
Email    Notepad

Display region 2

Electronic device 2

TO
FIG. 23A-2

FIG. 23A-1

100

CONT.
FROM
FIG. 23A-1

Display region 1

Electronic device 1

08:08

08:08

Friday 25, Dec

6°C
Beijing

Music

Notepad

Reading

Email

FIG. 23A-2

FIG. 23B

FIG. 23C

FIG. 24

S2401: Construct and generate a render tree after receiving a vertical signal

S2402: Transfer render trees across processes

S2403: Transfer window control information and display region information of an application

S2404: Allocate the render trees

S2405: Generate a target render tree based on the obtained render trees, the window control information, and the display region information

S2406: Generate a bitmap based on the target render tree

Applications
Application 1
Application 2
...
Application N

UniRender
Displayer Render1
...
Displayer RenderN

Window manager service and display manager service

60 Hz Vsync

Display region 1

60 Hz refresh rate

UniRender

DisplayRender1

60 Hz Vsync-UR

Display region 2

30 Hz refresh rate

DisplayRender2

30 Hz Vsync-UR

Frequency division

FIG. 25

FIG. 26A

UniRender

DisplayRender1

I/O thread

Render thread

Render tree 3

Render
tree 31

Application 3

Render
tree 32

DisplayRender2

I/O thread

Render thread

FIG. 26B

Electronic device 1

Electronic device 2

S2701: Establish a connection

S2702: Determine an application that is
to be displayed on a display region 2

S2703: Send a render tree of the application that
is to be displayed on the display region 2

S2704: Merge the render tree of
the application that is to be
displayed on the display region 2
into a target render tree

S2705: Generate a bitmap based
on the target render tree

FIG. 27

EP 4 411 533 B1

FIG. 28A

FIG. 28B

Electronic device

Antenna 1

Antenna 2

| Mobile communication module 2G/3G/4G/5G [150] | | Wireless communication module BT/WLAN/GNSS/NFC/IR/FM [160] |

| Speaker [170A] | | | |
| Receiver [170B] | Audio module [170] | Processor [110] | Sensor module [180] |
| Microphone [170C] | | | Pressure sensor [180A] |
| Headset jack [170D] | | | Gyroscope sensor [180B] |
| Displays 1 to N [194] | | | Barometric pressure sensor [180C] |
| Cameras 1 to N [193] | | | Magnetic sensor [180D] |
| Indicator [192] | | | Acceleration sensor [180E] |
| Motor [191] | | | Distance sensor [180F] |
| Button [190] | | | Optical proximity sensor [180G] |
| Internal memory [121] | | | Fingerprint sensor [180H] |
| SIM card interfaces 1 to N [195] | | | Temperature sensor [180J] |
| External memory interface [120] | | | Touch sensor [180K] |
| USB interface [130] | Charging management module [140] | Power management module [141] | Ambient light sensor [180L] |
| Charging input | | Battery [142] | Bone conduction sensor [180M] |

FIG. 29

| Application layer | Camera | Calender | Map | WLAN | Music | Home screen |
|---|---|---|---|---|---|---|
| | Gallery | Phone | Navigation | Bluetooth | Video | ... |

Render trees of one or more applications

**View system**

| Application framework layer | UniRender | SurfaceFlinger |
|---|---|---|

Window manager service

Display manager service

Target render tree

**Graphics processing library**

| System library | Two-dimensional graphics engine | Three-dimensional graphics engine | ... |
|---|---|---|---|

Bitmap

**Display driver**

Kernel layer

Send the bitmap for display

FIG. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021286632 A